# EUROPEAN PATENT APPLICATION

(11) **EP 4 310 700 A1**
(43) Date of publication of application: **24.01.2024**
(21) Application number: 21933860.5
(22) Date of filing: 31.03.2021
(51) Int. Cl.: G06F 17/11

(54) **MATRIX MULTIPLIER, MATRIX COMPUTING METHOD, AND RELATED DEVICE**

(71) Applicant: Huawei Technologies Co., Ltd., Longgang Shenzhen, Guangdong 518129 (CN)
(72) Inventor: CHEN, Liang, Shenzhen, Guangdong 518129 (CN); ZHOU, Yongbin, Shenzhen, Guangdong 518129 (CN); WANG, Xiaoyu, Shenzhen, Guangdong 518129 (CN); LI, Shulong, Shenzhen, Guangdong 518129 (CN); LI, Gongming, Shenzhen, Guangdong 518129 (CN)
(74) Representative: Gill Jennings & Every LLP
(86) International application number: PCT/CN2021/084710
(87) International publication number: WO 2022/205197

(57) **Abstract**

A matrix multiplier and a matrix computing method are disclosed. The matrix multiplier includes a computing array including a plurality of computing units. The computing array is configured to: receive a first non-zero element set and a column index set of a left matrix A, and a second non-zero element set and a row index set of a right matrix B (S201); and generate a result matrix C based on the first non-zero element set, the column index set, the second non-zero element set, and the row index set in a matrix outer product operation manner (C202), where one result element in the result matrix C is obtained through computing by one of the plurality of computing units. The matrix computing method can improve hardware utilization of the matrix multiplier and matrix operation efficiency.

## Description

### TECHNICAL FIELD

This application relates to the field of computer technologies, and in particular, to a matrix multiplier, a matrix computing method, and a related device.

### BACKGROUND

With development of technologies such as artificial intelligence (Artificial intelligence, AI), computer vision (Computer Vision, CV), augmented reality (Augmented Reality, AR), virtual reality (Virtual Reality, VR), and a high performance computer (High Performance Computer, HPC), more computing tasks include a variety of matrix operations. Application scenarios related to a sparse matrix operation are wider, for example, popular fields such as big data, deep learning, and image processing are all related to a sparse matrix multiplication operation.

Currently, no computing unit dedicated to a sparse matrix exists in existing processor architectures, such as a central processing unit (Central Processing Unit, CPU), a graphics processing unit (Graphic Processing Unit, GPU), and a dedicated artificial intelligence AI processor. In addition, because a quantity of non-zero elements in the sparse matrix is far less than a total quantity of matrix elements, and the non-zero elements are distributed irregularly, if the sparse matrix is computed in a conventional matrix computing manner, storage space is greatly wasted, a computing speed is greatly reduced, and low hardware utilization is caused. For example, when the existing high-performance computer (High Performance Computing, HPC) computes the sparse matrix by using a CPU, hardware utilization is lower than 3%, and computing efficiency is low.

Therefore, how to provide an efficient sparse matrix acceleration processing architecture and computing method is a problem that needs to be resolved by persons skilled in the art currently.

### SUMMARY

Embodiments of the present invention provide a matrix multiplier, a matrix computing method, and a related device, to improve computing efficiency of a sparse matrix.

According to a first aspect, an embodiment of the present invention provides a matrix multiplier that can include a computing array including a plurality of computing units. The computing array is configured to: receive a first non-zero element set and a column index set of a left matrix A, and a second non-zero element set and a row index set of a right matrix B, where the first non-zero element set includes one or more first non-zero elements in the matrix A, the column index set includes column numbers of the one or more first non-zero elements in the matrix A, the second non-zero element set includes one or more second non-zero elements in the matrix B, and the row index set includes row numbers of the one or more second non-zero elements in the matrix B; and generate a result matrix C based on the first non-zero element set, the column index set, the second non-zero element set, and the row index set in a matrix outer product operation manner, where one result element in the result matrix C is obtained through computing by one of the plurality of computing units.

This embodiment of the present invention provides the matrix multiplier. The matrix multiplier includes the computing array including the plurality of computing units. The computing array receives the non-zero elements that are obtained after zero removal and compression and correspond to the left matrix A and corresponding column numbers, and receives the non-zero elements that are obtained after zero removal and compression and correspond to the right matrix B and corresponding row numbers, and generates the result matrix C of matrix A*matrix B in the matrix outer product manner (that is, a computing manner of multiplying a column vector of the left matrix by a row vector of the right matrix), where one result element in the result matrix C is obtained through computing by one computing unit in the computing array. That is, at least one intermediate result (which may be one or more) of each result element is obtained by a same computing unit through computing in different clock cycles, and a value of the result element is finally obtained through accumulation. For example, specifically, a column vector obtained after zero removal and compression in the multiplied matrix A each time is multiplied by a row vector obtained after compression in the multiplier matrix B, to obtain an intermediate product (namely, an intermediate result) of a different result element in the result matrix each time through computing by a different computing unit in the computing array, obtain one result element in the result matrix through accumulation in one computing unit by using a plurality of serial operations, and finally, obtain the final result matrix by the plurality of computing units. In the conventional technology, a row vector of a multiplied matrix is multiplied by a column vector of a multiplier matrix in a matrix inner product operation manner, so that a plurality of different computing units in the computing array respectively perform operations to obtain different intermediate products (namely, intermediate results) of one result element. As a result, one result element in a result matrix needs to be computed by the plurality of computing units and then results are accumulated uniformly. It is assumed that an M*K matrix and a K*N matrix are multiplexed. Only K multiplications and one addition can be performed once by using one row vector of the matrix A and one column vector of the matrix B each time if the inner product operation manner in the conventional technology is used. However, different from that in the conventional technology, in this application, M*N multiplications and a corresponding plurality of accumulations can be performed once by using one column vector of the matrix A and one row vector of the matrix B. That is, in this embodiment of the present invention, utilization of reading a row vector once and a column vector once is greatly higher than that in the conventional technology. In addition, in the inner product manner in the conventional technology, when whether two received elements can be multiplied is determined, both row numbers and column numbers need to be compared, that is, comparison needs to be performed twice. In this application, two received elements only need to be compared once to determine whether the column number and the row number are equal. That is, computing efficiency in this embodiment of the present invention is higher than that in the conventional technology. Further, especially for a sparse matrix operation, in this embodiment of the present invention, zero elements in two matrices are removed. Therefore, a waste of storage or computing resources caused by the zero elements can be greatly reduced, and computing time and power consumption are greatly reduced.

In a possible implementation, each of the plurality of computing units is configured to: sequentially receive a first non-zero element, a column number, a second non-zero element, and a row number that are associated with a to-be-computed target result element; and sequentially compute, based on the received associated first non-zero element, column number, second non-zero element, and row number, at least one intermediate result corresponding to the target result element, and accumulate the at least one intermediate result to obtain a value of the target result element.

In this embodiment of the present invention, specifically, each of the plurality of computing units sequentially computes, based on the first non-zero element and the second non-zero element that are associated with the target result element to be computed by the computing unit and that are received sequentially, and the corresponding column number and row number, the at least one intermediate result corresponding to the target result element, and obtains the final result of the result element through one or more times of accumulation.

In a possible implementation, each of the plurality of computing units is specifically configured to: compare the column number of the received first non-zero element with the row number of the received second non-zero element; and when the column number is equal to the row number, multiply the received first non-zero element by the received second non-zero element, and use a multiplication result as an intermediate result corresponding to the target result element to perform accumulation, until the value of the target result element is obtained.

In this embodiment of the present invention, because to-be-computed elements in both the matrix A and the matrix B are compressed after an element 0 is removed, the column number and the row number of the first non-zero element and the second non-zero element that are received by the computing unit may be unequal. In this embodiment of the present invention, the computing unit (for example, a comparer in the computing unit) can determine whether the two received elements meet an operation condition (that is, whether the column number is equal to the row number), and if the condition is met, multiplication is performed on the two elements, to obtain one intermediate result of a result element. Others are obtained in a same way, until the computing unit obtains, through computing, the final result of the target result element to be computed by the computing unit.

In a possible implementation, each of the plurality of computing units is specifically configured to: when the column number is greater than the row number, compare the column number with a row number of a next received second non-zero element; or when the column number is less than the row number, compare the row number with a column number of a next received first non-zero element.

In this embodiment of the present invention, because the to-be-computed elements in both the matrix A and the matrix B are compressed after the element 0 is removed, the column number and the row number of the first non-zero element and the second non-zero element that are received by the computing unit may be unequal. In this embodiment of the present invention, the computing unit (for example, the comparer in the computing unit) can determine whether the two received elements meet the operation condition (that is, whether the column number is equal to the row number), and if the condition is met, multiplication is performed on the two elements, to obtain one intermediate result of a result element; or if the column number is unequal to the row number, there are two cases: The column number is greater than the row number; or the row number is greater than the column number. When the column number is greater than the row number, the first non-zero element whose column number is greater is reserved, and the second non-zero element whose row number is smaller is cleared, and the operation is performed on the next second element whose row number is equal to the column number. Likewise, when the row number is greater than the column number, the second non-zero element whose row number is greater is reserved, and the first non-zero element whose column number is smaller is cleared, and the operation is performed on the next first non-zero element whose column number is equal to the row number. A reason is as follows: After zero removal is performed on the matrices, some column numbers are unequal to row numbers, and some elements may be empty (that is, an element multiplied by the part of elements is originally zero, but a result is not affected by multiplying the part of elements by 0, and therefore, empty may be actually generated without computing). Therefore, when the column number is unequal to the row number, an element with a smaller row number or column number is discarded, an element with a larger row number or column number continues to be stored, until an element with a row number or a column number same as the row number or the column number appears, and then multiplication computing is performed.

In a possible implementation, the matrix multiplier further includes a left matrix buffer and a right matrix buffer; and the plurality of computing units are computing units of M rows*N columns, where M is a positive integer, and N is a positive integer; the left matrix buffer is configured to: store the first non-zero element set and the column index set of the matrix A; and broadcast, in different clock cycles, different first non-zero elements in a same row in the matrix A and corresponding column numbers to a same row of computing units in the computing units of M rows*N columns; and the right matrix buffer is configured to: store the second non-zero element set and the row index set of the matrix B; and broadcast, in the different clock cycles, different second non-zero elements in a same column in the matrix B and corresponding row numbers to a same column of computing units in the computing units of M rows*N columns.

In this embodiment of the present invention, different first non-zero elements in a same row in the matrix A are broadcast, in different clock cycles, to a same row of computing units in the computing units of M rows*N columns, and different second non-zero elements in a same column in the matrix B are broadcast, in different clock cycles, to a same column of computing units in the computing units of M rows*N columns. Therefore, a computing unit can obtain, in a plurality of clock cycles, a plurality of intermediate results of a result element in the result matrix through serial computing, and finally obtain the final result (namely, a result obtained by multiplying non-zero elements in a row of the matrix A by non-zero elements in a column of the matrix B and accumulation) of the result element by accumulating the plurality of intermediate results.

In a possible implementation, the left matrix buffer is further configured to broadcast first non-zero elements in different rows in the matrix A and corresponding column numbers to different rows of computing units in the computing units of M rows*N columns; and the right matrix buffer is further configured to broadcast second non-zero elements in different columns in the matrix B and corresponding row numbers to different columns of computing units in the computing units of M rows*N columns.

In this embodiment of the present invention, the matrix outer product computing manner is used. Therefore, for non-zero elements in the matrix A that are obtained after zero removal, different first non-zero elements in different rows are broadcast to different rows of computing units, and for non-zero elements in the matrix B that are obtained after zero removal, different second non-zero elements in different columns are broadcast to different columns of computing units, so as to perform a parallel operation on intermediate results of a plurality of to-be-computed result elements in the result matrix C. This implements a function of obtaining the result matrix through computing in the matrix outer product computing manner. Further, a column of non-zero elements in the matrix A that are compressed by row may be broadcast to different rows of computing units based on different first non-zero elements in different rows, and a row of non-zero elements in the matrix B that are compressed by column may be broadcast to different columns of computing units based on different second non-zero elements in different columns. This implements the function of efficiently obtaining the result matrix through computing in the outer product computing manner.

In a possible implementation, the left matrix buffer is specifically configured to broadcast, when first non-zero elements corresponding to all computing units in an x^{th} row in the computing units of M rows*N columns are computed, in an order of column numbers, a first non-zero element in a next column in a same row in the matrix A and a corresponding column number to all the computing units in the x^{th} row, where x=(1, ..., M); and the right matrix buffer is specifically configured to broadcast, when second non-zero elements corresponding to all computing units in a y^{th} column in the computing units of M rows*N columns are computed, in an order of row numbers, a second non-zero element in a next row in a same column in the matrix B and a corresponding row number to all the computing units in the y^{th} column, where y=(1, ..., N).

In this embodiment of the present invention, for the left matrix buffer, the left matrix buffer is triggered, based on a condition that all computing units in each row of computing units in the computing units of M rows*N columns complete computing, to broadcast next first non-zero elements and corresponding column numbers to the entire row of computing units. Likewise, for the right matrix, the right matrix buffer is triggered, based on a condition that all computing units in each column of the computing units of M rows*N columns complete computing, to broadcast next second non-zero elements and corresponding row numbers to the entire column of computing units.

In a possible implementation, the left matrix buffer is specifically configured to broadcast, when a first non-zero element corresponding to any computing unit in an x^{th} row in the computing units of M rows*N columns is computed, in an order of column numbers, a first non-zero element in a next column in a same row in the matrix A and a corresponding column number to all computing units in the x^{th} row, where x=(1, ..., M); and the right matrix buffer is specifically configured to broadcast, when a second non-zero element corresponding to any computing unit in a y^{th} column in the computing units of M rows*N columns is computed, in an order of row numbers, a second non-zero element in a next row in a same column in the matrix B and a corresponding row number to all the computing units in the y^{th} column, where y=(1, ..., N).

In this embodiment of the present invention, for the left matrix buffer, the left matrix buffer is triggered, based on a condition that any computing unit of each row of computing units in the computing units of M rows*N columns completes computing, to broadcast next first non-zero elements and corresponding column numbers to the entire row of computing units. Likewise, for the right matrix buffer, the right matrix buffer is triggered, based on a condition that any computing unit of each column of computing units in the computing units of M rows*N columns completes computing, to broadcast next second non-zero elements and corresponding row numbers to the entire column of computing units.

In a possible implementation, each of the plurality of computing units is specifically configured to: receive and buffer the first non-zero element and the corresponding column number that are broadcast by the left matrix buffer; receive and buffer the second non-zero element and the corresponding row number that are broadcast by the right matrix buffer; and compute the received first non-zero element and the received second non-zero element in a first in first out manner.

In this embodiment of the present invention, each computing unit is specifically configured to: receive and buffer the first non-zero element and the corresponding column number that are broadcast by the left matrix buffer; receive the second non-zero element and the corresponding row number that are broadcast by the right matrix buffer; and compute the received first non-zero element and the received second non-zero element in the first in first out manner. Optionally, for example, each computing unit may further include a left input buffer and a right input buffer, respectively configured to receive and buffer the first non-zero element and the column number that are broadcast by the left matrix buffer, and receive the second non-zero element and the row number that are broadcast by the right matrix buffer. The left input buffer sends the first non-zero element to the multiplier and sends the corresponding column number to a comparer in a first in first out manner, and the right input buffer sends the second non-zero element to the multiplier and sends the corresponding row number to the comparer in the first in first out manner. It may be understood that the left input buffer or the right input buffer may receive a plurality of elements and indexes that are sent by the left matrix buffer or the right matrix buffer, that is, may buffer a plurality of pairs of elements and indexes, but sequentially send the elements and indexes to the multiplier and the comparer based on an actual computing situation during specific computing. The left input buffer and the right input buffer, as buffers inside the computing unit, can increase a quantity of matrix elements stored inside the computing unit, help reduce a quantity of times that the computing unit obtains an element and an index from an external left matrix buffer or right matrix buffer, improve computing efficiency, and reduce power consumption.

In a possible implementation, each of the plurality of computing units is further configured to: send, in a next clock cycle, the currently buffered first non-zero element and corresponding column number to a next column computing unit in a same row; and send, in the next clock cycle, the currently buffered second non-zero element and corresponding row number to a next row computing unit in a same column.

In this embodiment of the present invention, for a first non-zero element buffered by each of the computing units of M rows*N columns, a first non-zero element buffered in a previous column of computing units in each row of computing units may be transferred, in the next clock cycle, to the next column of computing units in a pulse manner. Likewise, for a second non-zero element buffered in each of the computing units of M rows*N columns, a second non-zero element buffered in a computing unit in a previous row of computing units in each column of computing units is transferred to the next row of computing units in the next clock cycle in the pulse manner. Therefore, in the pulse "relay" manner, the first non-zero element is transferred to each column computing unit in one row of computing units one by one, or the second non-zero element is transferred to each row computing unit in one column of computing units in the computing array one by one.

Optionally, for example, for the first non-zero element buffered in the left input buffer of each of the computing units of M rows*N columns, first non-zero elements buffered in left input buffers of a previous column of computing units in each row of computing units are transferred, in the next clock cycle, to left input buffers of a next column of computing units in the pulse manner. Likewise, for the second non-zero element buffered in the right input buffer of each of the computing units of M rows*N columns, second non-zero elements buffered in right input buffers of a previous row of computing units in each column of computing units are transferred, in the next clock cycle, to right matrix buffers of a next row of computing units in the pulse manner. Therefore, in the pulse "relay" manner, the first non-zero element is transferred to each column computing unit in one row of computing units one by one, or the second non-zero element is transferred to each row computing unit in one column of computing units one by one.

In a possible implementation, the computing array further includes row registers of M rows*(N-1)/a columns and column registers of (M-1)/b rows*N columns, where a is an integer greater than or equal to 1, and b is an integer greater than or equal to 1;
the left matrix buffer is specifically configured to broadcast the first non-zero element and the corresponding column number to a first column computing unit of one row of computing units in the computing units of M rows*N columns, and a first column row register of one row of row registers;
the right matrix buffer is specifically configured to broadcast the second non-zero element and the corresponding row number to a first row computing unit of one column of computing units in the computing units of M rows*N columns, and a first row column register of one column of column registers;
each row register is coupled to a 1-row*a-column computing unit, and is configured to: buffer the first non-zero element and the corresponding column number that are sent by the left matrix buffer or a previous row register, and send, in the next clock cycle, the first non-zero element and the corresponding column number to the 1-row*a-column computing unit and a next row register; and
each column register is coupled to a b-row* 1-column computing unit, and is configured to: buffer the second non-zero element and the corresponding row number that are sent by the right matrix buffer or a previous column register, and send, in the next clock cycle, the second non-zero element and the corresponding row number to the b-row* 1-column computing unit and a next column register.

In this embodiment of the present invention, a plurality of registers are disposed in the computing array, so that the first non-zero element or the second non-zero element is buffered in a broadcast process. Specifically, one row register is set to be coupled to a computing units, and is configured to: buffer a first non-zero element and a corresponding column number that are received by the row register, and broadcast the first non-zero element and the corresponding column number to a next row register and the a computing units that are coupled to the row register. Likewise, one column register is set to be coupled to b computing units, and is configured to: buffer a second non-zero element and a corresponding row number that are received by the column register, and broadcast the second non-zero element and the corresponding row number to a next column register and the b computing units that are coupled to the column register. A reason is as follows: The first non-zero element or the second non-zero element cannot reach each computing unit of one row of computing units or one column of computing units in the computing units of M rows*N columns in one clock cycle (mainly because distances from different computing units to matrix buffers are different, and when a size of the computing array is large, a same data broadcast task cannot be completed in the same clock cycle). Therefore, the register is added between the computing units, to send, one clock cycle by one clock cycle, the first non-zero elements or the second non-zero elements buffered in the register to a columns of computing units or b rows of computing units coupled to the register, so as to gradually transfer, in a register "relay" manner, the first non-zero elements to all computing units in a row in the computing units of M rows*N columns, or the second non-zero elements to all computing units in a column in the computing units of the M rows*N columns.

In a possible implementation, each of the plurality of computing units is further configured to: clear, when the received first non-zero element has participated in computing of the intermediate result corresponding to the target result element, the first non-zero element that has participated in the computing and the corresponding column number; and clear, when the received second non-zero element has participated in computing of the intermediate result corresponding to the target result element, the second non-zero element that has participated in the computing and the corresponding row number.

In this embodiment of the present invention, if a column number corresponding to a first non-zero element received by a computing unit is equal to a row number corresponding to a second non-zero element, multiplication computing is completed on the elements in the computing unit to obtain an intermediate result corresponding to the target result element (for example, a multiplication operation is performed on the elements in the multiplier and a corresponding computing result is sent to an accumulator). In this case, a function of the first non-zero element in the matrix multiplication computing has been completed (because each associated element is computed only once in each result element according to a matrix multiplication rule). For example, when a multiplication operation has been performed on one first non-zero element or one second non-zero element in a multiplier of a corresponding computing unit, and a computing result of the first non-zero element or the second non-zero element has been sent to an accumulator, it indicates that a function of the first non-zero element or the second non-zero element has been completed. Therefore, after the function of the element is completed, the element needs to be cleared in the computing unit, for example, in the left input buffer or the right input buffer. Alternatively, when the column number corresponding to the first non-zero element received by the computing unit is unequal to the row number corresponding to the second non-zero element, in this case, it indicates that after zero removal and compression are performed on the matrices, the first non-zero element in the matrix A and the second non-zero element in the corresponding matrix B are zero, or the second non-zero element in the matrix B and the first non-zero element in the corresponding matrix A are zero. Therefore, computing does not need to be performed until a matchable element is found.

According to a second aspect, an embodiment of the present invention provides a matrix computing method, applied to a matrix multiplier. The matrix multiplier includes a computing array including a plurality of computing units, and the method includes:

The computing array receives a first non-zero element set and a column index set of a left matrix A, and a second non-zero element set and a row index set of a right matrix B, where the first non-zero element set includes one or more first non-zero elements in the matrix A, the column index set includes column numbers of the one or more first non-zero elements in the matrix A, the second non-zero element set includes one or more second non-zero elements in the matrix B, and the row index set includes row numbers of the one or more second non-zero elements in the matrix B.

The computing array generates a result matrix C based on the first non-zero element set, the column index set, the second non-zero element set, and the row index set in a matrix outer product operation manner, where one non-zero result element in the result matrix C is obtained through computing by one of the plurality of computing units.

In a possible implementation, that the computing array generates a result matrix C based on the first non-zero element set, the column index set, the second non-zero element set, and the row index set in a matrix outer product operation manner includes:

Each of the plurality of computing units sequentially receives a first non-zero element, a column number, a second non-zero element, and a row number that are associated with a to-be-computed target result element; and each of the plurality of computing units sequentially computes, based on the received associated first non-zero element, column number, second non-zero element, and row number, at least one intermediate result corresponding to the target result element, and accumulates the at least one intermediate result to obtain a value of the target result element.

In a possible implementation, that each of the plurality of computing units sequentially computes, based on the received associated first non-zero element, column number, second non-zero element, and row number, at least one intermediate result corresponding to the target result element, and accumulates the at least one intermediate result to obtain a value of the target result element includes:

Each of the plurality of computing units compares the column number of the received first non-zero element with the row number of the received second non-zero element.

When the column number is equal to the row number, each of the plurality of computing units multiplies the received first non-zero element by the received second non-zero element, and uses a multiplication result as an intermediate result corresponding to the target result element to perform accumulation, until the value of the target result element is obtained.

In a possible implementation, that each of the plurality of computing units sequentially computes, based on the received associated first non-zero element, column number, second non-zero element, and row number, at least one intermediate result corresponding to the target result element, and accumulates the at least one intermediate result to obtain a value of the target result element includes:

When the column number is greater than the row number, each of the plurality of computing units compares the column number with a row number of a next received second non-zero element; or
when the column number is less than the row number, each of the plurality of computing units compares the row number with a column number of a next received first non-zero element.

In a possible implementation, the matrix multiplier further includes a left matrix buffer and a right matrix buffer; the plurality of computing units are computing units of M rows*N columns, where M is a positive integer, and N is a positive integer; and the method further includes:

The left matrix buffer buffers the first non-zero element set and the column index set of the matrix A; and broadcasts, in different clock cycles, different first non-zero elements in a same row in the matrix A and corresponding column numbers to a same row of computing units in the computing units of M rows*N columns.

The right matrix buffer buffers the second non-zero element set and the row index set of the matrix B; and broadcasts, in the different clock cycles, different second non-zero elements in a same column in the matrix B and corresponding row numbers to a same column of computing units in the computing units of M rows*N columns.

In a possible implementation, the method further includes:

The left matrix buffer broadcasts first non-zero elements in different rows in the matrix A and corresponding column numbers to different rows of computing units in the computing units of M rows*N columns.

The right matrix buffer broadcasts second non-zero elements in different columns in the matrix B and corresponding row numbers to different columns of computing units in the computing units of M rows*N columns.

In a possible implementation, the broadcasting, in different clock cycles, different first non-zero elements in a same row in the matrix A and corresponding column numbers to a same row of computing units in the computing units of M rows*N columns includes:

The left matrix buffer broadcasts, in an order of column numbers when first non-zero elements corresponding to all computing units in an x^{th} row in the computing units of M rows*N columns are computed, a first non-zero element in a next column in a same row in the matrix A and a corresponding column number to all the computing units in the x^{th} row, where x=(1, ..., M); and
the broadcasting, in the different clock cycles, different second non-zero elements in a same column in the matrix B and corresponding row numbers to a same column of computing units in the computing units of M rows*N columns includes:

The right matrix buffer broadcasts, in an order of row numbers when second non-zero elements corresponding to all computing units in a y^{th} column in the computing units of M rows*N columns are computed, a second non-zero element in a next row in a same column in the matrix B and a corresponding row number to all the computing units in the y^{th} column, where y=(1, ..., N).

In a possible implementation, the broadcasting, in different clock cycles, different first non-zero elements in a same row in the matrix A and corresponding column numbers to a same row of computing units in the computing units of M rows*N columns includes:

The left matrix buffer broadcasts, in an order of column numbers when a first non-zero element corresponding to any computing unit in an x^{th} row in the computing units of M rows*N columns is computed, a first non-zero element in a next column in a same row in the matrix A and a corresponding column number to all computing units in the x^{th} row, where x=(1, ..., M); and
the broadcasting, in the different clock cycles, different second non-zero elements in a same column in the matrix B and corresponding row numbers to a same column of computing units in the computing units of M rows*N columns includes:

The right matrix buffer broadcasts, in an order of row numbers when a second non-zero element corresponding to any computing unit in a y^{th} column in the computing units of M rows*N columns is computed, a second non-zero element in a next row in a same column in the matrix B and a corresponding row number to all the computing units in the y^{th} column, where y=(1, ..., N).

In a possible implementation, that each of the plurality of computing units sequentially computes, based on the received associated first non-zero element, column number, second non-zero element, and row number, at least one intermediate result corresponding to the target result element includes:

Each of the plurality of computing units receives and buffers the first non-zero element and the corresponding column number that are broadcast by the left matrix buffer; receives and buffers the second non-zero element and the corresponding row number that are broadcast by the right matrix buffer; and computes the received first non-zero element and the received second non-zero element in a first in first out manner, to obtain the at least one intermediate result corresponding to the target result element.

In a possible implementation, the method further includes:

Each of the plurality of computing units sends, in a next clock cycle, the currently buffered first non-zero element and corresponding column number to a next column computing unit in a same row; and sends, in the next clock cycle, the currently buffered second non-zero element and corresponding row number to a next row computing unit in a same column.

In a possible implementation, the computing array further includes row registers of M rows*(N-1)/a columns and column registers of (M-1)/b rows*N columns, where each row register is coupled to a 1-row*a-column computing unit, each column register is coupled to a b-row*1-column computing unit, a is an integer greater than or equal to 1, and b is an integer greater than or equal to 1;
the broadcasting, in different clock cycles, different first non-zero elements in a same row in the matrix A and corresponding column numbers to a same row of computing units in the computing units of M rows*N columns includes:

The left matrix buffer broadcasts the first non-zero element and the corresponding column number to a first column computing unit of one row of computing units in the computing units of M rows*N columns and a first column row register of one row of row registers; and
each row register buffers a first non-zero element and a corresponding column number that are sent by the left matrix buffer or a previous row register, and sends, in a next clock cycle, the first non-zero element and the corresponding column number to the 1-row*a-column computing unit and a next row register; and
the broadcasting, in the different clock cycles, different second non-zero elements in a same column in the matrix B and corresponding row numbers to a same column of computing units in the computing units of M rows*N columns includes:

The right matrix buffer broadcasts the second non-zero element and a corresponding row number to a first row computing unit of a one column of computing units in the computing units of M rows*N columns, and a first row column register of one column of column registers; and
each column register buffers a second non-zero element and a corresponding row number that are sent by the right matrix buffer or a previous column register, and sends, in the next clock cycle, the second non-zero element and the corresponding row number to the b-row* 1-column computing unit and a next column register.

In a possible implementation, the method further includes:

Each of the plurality of computing units clears, when the received first non-zero element has participated in computing of the intermediate result corresponding to the target result element, the first non-zero element that has participated in the computing and the corresponding column number.

Each of the plurality of computing units clears, when the received second non-zero element has participated in computing of the intermediate result corresponding to the target result element, the second non-zero element that has participated in the computing and the corresponding row number.

According to a third aspect, an embodiment of the present invention provides a matrix multiplier that may include a left matrix buffer, a right matrix buffer, and a computing array. The computing array includes computing units of M rows*N columns, where M and N each are an integer greater than 0.

The left matrix buffer is configured to: store a first element set and a first index set that correspond to a matrix A, where A is an M*K matrix, the first element set includes S first elements, the S first elements each are an i^{th} non-zero element in each of S rows in the matrix A, the first index set includes column numbers of columns of the S first elements in the matrix A, S is a positive integer less than or equal to M, and i is a positive integer less than or equal to K; and broadcast each of the S first elements and a column number of each first element to one row of computing units in the computing array, where when i is different values, first elements in a same row are broadcast to a same row of computing units.

The right matrix buffer is configured to: store a second element set and a second index set that correspond to a matrix B, where B is a K*N matrix, the second element set includes T second elements, the T second elements each are a j^{th} non-zero element in each of T columns in the matrix B, the second index set includes row numbers of rows of the T second elements in the matrix B, T is a positive integer less than or equal to N, and j is a positive integer less than or equal to K; and broadcast each of the T first elements and a row number of each second element to one column of computing units in the computing array, where when j is different values, second elements in a same column are broadcast to a same column of computing units.

Each computing unit in the computing array includes a comparer, a multiplier, and an accumulator.

The comparer is configured to compare a column number of a received first element with a row number of a received second element.

The multiplier is configured to: When the column number of the received first element is equal to the row number of the received second element, multiply the received first element by the received second element, and send a computing result to the accumulator.

The accumulator is configured to accumulate computing results in the multiplier to obtain an operation result of the computing unit.

This embodiment of the present invention provides a multiplier structure and a computing manner for implementing two-dimensional matrix computing, which specifically include designs for a hardware structure and a software computing method. From a perspective of hardware, the multiplier includes the left matrix buffer configured to buffer a to-be-computed element in the multiplier matrix A, the right matrix buffer configured to buffer a to-be-computed element in the multiplier matrix B, and the computing units of M rows*N columns configured to perform matrix computing. Each computing unit includes the comparer, the multiplier, and the accumulator. Specifically, the comparer compares the row number and the column number of the two received elements, the multiplier multiplies two elements that meet a condition, and finally, the accumulator accumulates computing results in the multiplier, to obtain a result element in a result matrix. From a perspective of software, the left matrix buffer broadcasts, in a manner of broadcasting each element and a column number corresponding to each element to a row of computing units in the computing array, a column of to-be-computed elements after zero removal and compression in the matrix A and column numbers corresponding to the elements. The right matrix buffer broadcasts, in a manner of broadcasting each element and a row number corresponding to each element, a row of to-be-computed elements after zero removal and compression in the matrix B and row numbers corresponding to the elements. Each computing unit in the computing array separately receives the to-be-computed elements in the matrix A and the matrix B. Because the to-be-computed elements in the matrix A and the matrix B are compressed after a zero element is removed, the column number of the selected one column element and the row number of the selected one row element may not be equal. In this embodiment of the present invention, the comparer in the computing unit determines whether the two received elements meet an operation condition (that is, whether the column number and the row number are equal), and if the condition is met, multiplication is performed. Further, elements in a same row in the matrix A are broadcast to the same row of computing units in the computing array in different clock cycles, and second elements in a same column in the matrix B are broadcast to the same column of computing units in the computing array in the different clock cycles. Therefore, a computing unit can obtain, in a plurality of clock cycles, a result (namely, a result element in the result matrix) of accumulation on results obtained after multiplying a row of non-zero elements in the matrix A by a column of non-zero elements in the matrix B through serial computing.

In conclusion, in this embodiment of the present invention, a column of compressed vectors in the multiplier matrix A are multiplied by a row of compressed vectors in the multiplier matrix B each time in a matrix outer product manner, so that different computing units in the computing array can obtain, through computing, intermediate products of different result elements in the result matrix each time, and one computing unit can obtain, through accumulation, one result element in the result matrix through a plurality of times of serial operations, and finally the plurality of computing units obtain the final result matrix through computing. In the conventional technology, a row vector of a multiplied matrix is multiplied by a column vector of a multiplier matrix in an inner product manner, so that a plurality of different computing units in a computing array respectively perform operations to obtain different intermediate products of one result element. As a result, one result element in a result matrix needs to be computed by the plurality of computing units and then accumulated uniformly. It is assumed that an M*K matrix and a K*N matrix are multiplexed. Only K multiplications and one addition can be performed once by using one row vector of the matrix A and one column vector of the matrix B each time if the inner product operation manner in the conventional technology is used. However, different from that in the conventional technology, in this application, M*N multiplications and a corresponding plurality of accumulations can be performed once by using one column vector of the matrix A and one row vector of the matrix B. That is, in this embodiment of the present invention, utilization of reading a row vector once and a column vector once is greatly higher than that in the conventional technology. In addition, in the inner product manner in the conventional technology, when whether two received elements can be multiplied is determined, both row numbers and column numbers need to be compared, that is, comparison needs to be performed twice. In this application, two received elements only need to be compared once to determine whether the column number and the row number are equal. That is, computing efficiency in this embodiment of the present invention is higher than that in the conventional technology. Further, especially for a sparse matrix operation, in this embodiment of the present invention, zero elements in two matrices are removed. Therefore, a waste of storage or computing resources caused by the zero elements can be greatly reduced, and computing time and power consumption are greatly reduced.

In a possible implementation, the left matrix buffer is specifically configured to broadcast first elements that are in an x^{th} row in the matrix A and in the S first elements and corresponding column numbers to computing units in an x^{th} row in the computing array, where x=(1, ..., M); and the right matrix buffer is specifically configured to broadcast second elements that are in a y^{th} column in the matrix B and in the T second elements and corresponding row numbers to computing units in a y^{th} column of the computing array, where y=(1, ..., N).

In this embodiment of the present invention, based on location relationships of first elements in the first element set in the matrix A and location relationships of second elements in the second element set in the matrix B, the first elements and the second elements are mapped to corresponding locations of the computing units of M rows*N columns in the computing array. Specifically, after the elements in the matrix A are compressed in a row direction, the elements are broadcast to computing units of a corresponding row in the computing array based on a location of the row of the elements in the matrix; and after the elements in the matrix B are compressed in a column direction, the elements are broadcast to computing units of a corresponding column in the computing array based on a location of the column of the elements in the matrix. For example, a first element in a first row in the matrix A is broadcast to computing units in a first row of the computing array; likewise, a first element in a first column in the matrix B is broadcast to computing units in a first column of the computing array; and the rest elements are broadcast in a similar way. Details are not described herein again. That is, a location of a computing result (namely, a result element) in the result matrix is indicated by using a location of a computing unit in the computing array. This is different from the conventional technology in which a large quantity of processing resources is wasted because a location of each result element needs to be obtained by using a row number in a matrix A and a column number in a matrix B.

In a possible implementation, i is successively 1, 2, ..., and K, and j is successively 1, 2, ..., and K. The comparer is specifically configured to: compare a column number of a received first element with a row number of a received second element; and when the column number is greater than the row number, compare the column number with a row number of a next received second element; or when the column number is less than the row number, compare the column number with a row number of a next received first element.

In this embodiment of the present invention, the S first elements included in the first element set are not a column of original elements in the matrix A, but a column of elements obtained after zero removal and compression. Therefore, column numbers of all first elements in the first element set are not necessarily equal, and likewise, row numbers of all second elements in the second element set are not necessarily equal. Therefore, after receiving the first element from the matrix A and the second element from the matrix B, a computing unit in the computing array needs to first compare whether the two elements meet a computing condition of the matrix elements, that is, compare whether the column number of the first element and the row number of the second element (briefly referred to as a column number and a row number subsequently) are equal. If the column number and the row number are equal, an operation can be performed; or if the column number and the row number are unequal, there are two cases: The column number is greater than the row number, or the row number is greater than the row number. When the column number is greater than the row number, the first element with the larger column number is reserved, the second element with the smaller row number is cleared, and an operation is performed after the next second element with a row number equal to the column number of the first element. Likewise, when the row number is greater than the column number, the second element with the larger row number is reserved, the first element with the smaller column number is cleared, and an operation is performed after the next first element with a column number equal to the row number of the second element. A reason is as follows: After zero removal is performed on the matrices, some column numbers are unequal to row numbers, and some elements may be empty (that is, an element multiplied by the part of elements is originally zero, but a result is not affected by multiplying the part of elements by 0, and therefore, empty may be actually generated without computing). Therefore, when the column number is unequal to the row number, an element with a smaller row number or column number is discarded, an element with a larger row number or column number continues to be stored, until an element with a row number or a column number same as the row number or the column number appears, and then multiplication computing is performed.

In a possible implementation, each computing unit further includes a left input buffer and a right input buffer. The left matrix buffer is specifically configured to broadcast each of the S first elements and the corresponding column number to the left input buffer of each computing unit in one row of computing units in the computing array. The right matrix buffer is specifically configured to broadcast each of the T second elements and the corresponding row number to the right input buffer of each computing unit in one column of computing units in the computing array. The left input buffer is configured to: receive and buffer the first element and the corresponding column number that are broadcast by the left matrix buffer, and send, in a first in first out manner, the buffered first element to the multiplier and the corresponding column number to the comparer. The right input buffer is configured to: receive and buffer the second element and the corresponding row number that are broadcast by the right matrix buffer, and send, in the first in first out manner, the buffered second element to the multiplier and the corresponding row number to the comparer.

In this embodiment of the present invention, each computing unit may further include a left input buffer and a right input buffer. The left input buffer is configured to: receive and buffer the first element and the first index that are broadcast by the left matrix buffer, and send, in the first in first out manner, the first element to the multiplier and the corresponding column index to the comparer. The right input buffer is configured to: receive the second element and the second index that are broadcast by the right matrix buffer; and send, in the first in first out manner, the second element to the multiplier and the corresponding row index to the comparer. It may be understood that the left input buffer or the right input buffer may receive a plurality of elements and indexes that are sent by the left matrix buffer or the right matrix buffer, that is, may buffer a plurality of pairs of elements and indexes, but sequentially send the elements and indexes to the multiplier and the comparer based on an actual computing situation during specific computing. The left input buffer and the right input buffer, as buffers inside the computing unit, can increase a quantity of matrix elements stored inside the computing unit, help reduce a quantity of times that the computing unit obtains an element and an index from an external left matrix buffer or right matrix buffer, improve computing efficiency, and reduce power consumption.

In a possible implementation, the left input buffer is further configured to clear a target first element and a corresponding column number when a computing result corresponding to the target first element that is sent to the multiplier is sent to the accumulator. The left input buffer is further configured to clear a target second element and a corresponding row number when a computing result corresponding to the target second element that is sent to the multiplier is sent to the accumulator.

In this embodiment of the present invention, if the column number corresponding to the first element received by the computing unit is equal to the row number corresponding to the second element, the multiplication operation is performed on the elements in the multiplier and the corresponding computing result is sent to the accumulator. In this case, a function of the first element in the matrix multiplication computing has been completed (because each element is computed only once in each result element according to a matrix multiplication rule). Therefore, when a multiplication operation has been performed on one first element or one second element in a corresponding computing unit, and a computing result corresponding to the first element or the second element has been sent to the accumulator, it indicates that a function of the first element or the second element has been completed. Therefore, after a function of an element is completed, the element needs to be cleared from the left input buffer or the right input buffer. Alternatively, when the column number corresponding to the first element received by the computing unit is unequal to the row number corresponding to the second element, in this case, it indicates that after zero removal and compression are performed on the matrices, the first element in the matrix A and the second element in the corresponding matrix B are zero, or the second element in the matrix B and the first element in the corresponding matrix A are zero. Therefore, computing does not need to be performed until a matchable element is found.

In a possible implementation, the matrix multiplier further includes: a left read/write control unit, configured to: obtain e first element sets corresponding to the matrix A and corresponding e first index sets from a primary memory, and send the e first element sets and the corresponding e first index sets to the left matrix buffer, where the e first element sets are e first element sets when i is 1, 2, ..., K, and e is an integer less than or equal to K; and a right read/write control unit, configured to: obtain, from the primary memory, f second element sets corresponding to the matrix B and corresponding f second index sets, and send the f second element sets and the corresponding f second index sets to the right matrix buffer, where the f second element sets are f second element sets when i is 1, 2, ..., K, and f is an integer less than or equal to K.

In this embodiment of the present invention, the left read/write control unit and the right read/write control unit respectively read a plurality of first element sets corresponding to the matrix A and corresponding first index sets, and a plurality of second element sets corresponding to the matrix B and corresponding second index sets from the primary memory (for example, an on-chip or an off-chip DDR, a flash memory, an on-chip cache, or an on-chip SRAM). The left matrix buffer can sequentially read the first element sets and the corresponding first index sets from the left read/write control unit, for example, read different first element sets in different clock cycles. The right matrix buffer can sequentially read the second element sets and the corresponding second index sets from the right read/write control unit, for example, read different second element sets in the different clock cycles. In other words, the left matrix buffer can store the plurality of first element sets and the right matrix buffer can store the plurality of second element sets. In this way, when multiplication computing in a row of computing units (or a computing unit) in the computing array has been completed, a first element that is in a next first element set and that corresponds to the location can be directly obtained from the left matrix buffer for broadcasting; and when multiplication computing in a column of computing units (or a computing unit) in the computing array has been completed, a second element that is in a next second element set and that corresponds to the location can be directly obtained from the right matrix buffer for broadcasting. This avoids a case in which because computing in different computing units is not synchronized (some computing units have completed computing, but some computing units have not completed computing, and need to wait for a next round of computing) due to zero removal and compression, some computing units are in an idle state, and computing resources are wasted. The foregoing design can greatly reduce an idle degree of computing resources, and improve computing efficiency and computing resource utilization.

In a possible implementation, the matrix multiplier further includes: a left read/write control unit, configured to: obtain elements of M rows*Q columns in the matrix A from a primary memory, generate e first element sets corresponding to the matrix A and corresponding e first index sets, and send the e first element sets and the corresponding e first index sets to the left matrix buffer, where the e first element sets are e first element sets when i is 1, 2, ..., K, Q is an integer less than or equal to K, and e is an integer less than or equal to Q; and a right read/write control unit, configured to: obtain elements of Q rows*N columns in the matrix B from the primary memory, generate f second element sets corresponding to the matrix A and corresponding f second index sets, and send the f second element sets and the corresponding f second index sets to the right matrix buffer, where the f second element sets are f second element sets when i is 1, 2, ..., K, and f is an integer less than or equal to Q.

In this embodiment of the present invention, because the matrix A or the matrix B is originally formed by a sparse matrix, there are a large quantity of zero elements in the matrix A or the matrix B. When the primary memory stores an original matrix (or a part of the original matrix) on which zero removal and compression are not performed, the left read/write control unit or the right read/write control unit reads, from the primary memory, the original matrix on which zero removal and compression are not performed, and then can perform zero removal and compression on the matrix in the unit, that is, obtain a plurality of first element sets and corresponding first index sets, or a plurality of second element sets and corresponding second index sets. That is, in this embodiment of the present invention, zero removal and compression procedures of the matrices are set in the left read/write control unit and right read/write control unit.

In a possible implementation, the matrix multiplier further includes: a left read/write control unit, configured to obtain elements of M rows*Q columns in the matrix A from a primary memory, and send the elements to the left matrix buffer, where Q is an integer less than or equal to K; and a right read/write control unit, configured to obtain elements of Q rows*N columns in the matrix B from the primary memory, and send the elements to the right matrix buffer. The left matrix buffer is further configured to: receive the elements of M rows*Q columns in the matrix A, and generate e first element sets corresponding to the matrix A and corresponding e first index sets, where the e first element sets are e first element sets when i is 1, 2, ..., K, and e is an integer less than or equal to Q. The right matrix buffer is further configured to: receive the elements of Q rows*N columns in the matrix B, and generate f second element sets corresponding to the matrix B and corresponding f second index sets, where the f second element sets are f second element sets when i is 1, 2, ..., K, and f is an integer less than or equal to Q.

In this embodiment of the present invention, the left matrix buffer performs zero removal and compression on original matrix elements in the matrix A, and the right matrix buffer performs zero removal and compression on original matrix elements in the matrix B, to implement matrix compression. In other words, the left read/write control unit reads the original elements in the matrix A from the primary memory, and sends the original elements to the left matrix buffer. Then, the left matrix buffer removes a zero element in the original elements, to finally obtain a plurality of first element sets corresponding to the matrix A. Likewise, the right read/write control unit reads the original elements in the matrix B from the primary memory, and sends the original elements to the right matrix buffer. Then, the right matrix buffer removes a zero element in the original elements, to finally obtain a plurality of second element sets corresponding to the matrix B.

In a possible implementation, the matrix multiplier further includes the primary memory; or the matrix multiplier is coupled to the primary memory.

In this embodiment of the present invention, the matrix multiplier may include the primary memory, that is, the primary memory is a part of the matrix multiplier. For example, the primary memory exists as a storage unit in the matrix multiplier; or the matrix multiplier does not include the primary memory, but is coupled to the primary memory. For example, the primary memory is a memory inside a processor, and the matrix memory is an accelerator coupled to the processor.

In a possible implementation, the left matrix buffer is specifically configured to: receive and buffer the e first element sets and the e first index sets; and broadcast, in one clock cycle, each of S first elements in one first element set and a column number of the first element to one row of computing units in the computing array. The right matrix buffer is specifically configured to: receive and buffer the f second element sets and the f second index sets; and broadcast, in one clock cycle, each of T second elements in one second element set and a row number of the second element to one column of computing units in the computing array.

In this embodiment of the present invention, when the left matrix buffer buffers the plurality of first element sets and the plurality of corresponding first index sets, and the right matrix buffer buffers the plurality of second element sets and the plurality of corresponding second index sets. The left matrix buffer is configured to broadcast, in each clock cycle, the first elements and the corresponding first indexes to a corresponding row of computing units, and the right matrix buffer is configured to broadcast, in each clock cycle, the second elements and the corresponding second indexes to a corresponding column of computing units. In other words, the left matrix buffer or the right matrix buffer buffers the plurality of element sets. During actual computing, one element set and a corresponding index set are broadcast in one clock cycle.

In a possible implementation, the left matrix buffer is specifically configured to: when first elements in all computing units in an x^{th} row in the computing array are computed, broadcast next first elements to all the computing units in the x^{th} row, where x=(1, ..., M). The right matrix buffer is specifically configured to: when second elements in all computing units in a y^{th} column in the computing array are computed, broadcast next second elements to all the computing units in the y^{th} column, where y=(1, ..., N).

In this embodiment of the present invention, for the left matrix buffer, the left matrix buffer is triggered, based on a condition that all computing units in each row of computing units in the computing array complete computing, to broadcast next first elements and corresponding column numbers to the entire row of computing units. Likewise, for the right matrix, the right matrix buffer is triggered, based on a condition that all computing units in each column of the computing array complete computing, to broadcast next second elements and corresponding row numbers to the entire column of computing units.

In a possible implementation, the left matrix buffer is specifically configured to: when a first element in any computing unit in an x^{th} row in the computing array is computed, broadcast next first elements to all computing units in the x^{th} row, where x=(1, ..., M). The right matrix buffer is specifically configured to: when a second element in any computing unit in a y^{th} column in the computing array is computed, broadcast next second elements to all computing units in the y^{th} row, where y=(1, ..., N).

In this embodiment of the present invention, for the left matrix buffer, the left matrix buffer is triggered, based on a condition that any computing unit of each row of computing units in the computing array completes computing, to broadcast next first elements and corresponding column numbers to the entire row of computing units. Likewise, for the right matrix buffer, the right matrix buffer is triggered, based on a condition that any computing unit of each column of computing units in the computing array completes computing, to broadcast next second elements and corresponding row numbers to the entire column of computing units.

In a possible implementation, the computing array further includes row registers of M rows*(N-1)/a columns and column registers of (M-1)/b rows*N columns, where a is an integer greater than or equal to 1, and b is an integer greater than or equal to 1. The left matrix buffer is specifically configured to send each of the S first elements and the column number of each first element to a first column computing unit of one row of computing units in the computing array, and a first column row register of one row of row registers. The right matrix buffer is specifically configured to broadcast each of the T second element and the row number of each second element to a first row computing unit of one column of computing units in the computing array, and a first row column register of one column of column registers. Each row register is coupled to a 1-row*a-column computing unit, and is configured to: buffer the first element and the corresponding column number that are sent by the left matrix buffer or a previous row register, and send, in the next clock cycle, the first element and the corresponding column number to the 1-row*a-column computing unit and a next row register. Each column register is coupled to a b-row* 1-column computing unit, and is configured to: buffer the second element and the corresponding row number that are sent by the right matrix buffer or a previous column register, and send, in the next clock cycle, the second element and the corresponding row number to the b-row* 1-column computing unit and a next column register.

In this embodiment of the present invention, a plurality of registers are disposed in the computing array, so that the first element or the second element is buffered in a broadcast process. Specifically, one row register is set to be coupled to a computing units, and is configured to: buffer a first element and a corresponding column number that are received by the row register, and broadcast the first element and the corresponding column number to a next row register and the a computing units that are coupled to the row register. Likewise, one column register is set to be coupled to b computing units, and is configured to: buffer a second element and a corresponding row number that are received by the column register, and broadcast the second element and the corresponding row number to a next column register and the b computing units that are coupled to the column register. A reason is as follows: The first element or the second element cannot reach each computing unit of one row of computing units or one column of computing units in the computing array in one clock cycle (mainly because distances from different computing units to matrix buffers are different, and when a size of the computing array is large, a same data broadcast task cannot be completed in the same clock cycle). Therefore, the register is added between the computing units, to send, one clock cycle by one clock cycle, the first elements or the second elements buffered in the register to a columns of computing units or b rows of computing units coupled to the register, so as to gradually transfer, in a register "relay" manner, the first elements to all computing units in a row in the computing array, or the second elements to all computing units in a column in the computing array.

In a possible implementation, each computing unit further includes a left input buffer and a right input buffer. The left input buffer is configured to send, in a next clock cycle, currently buffered first elements and corresponding column numbers to left input buffers in a next column of computing units in a same row. The right input buffer is configured to send, in the next clock cycle, currently buffered second elements and corresponding row numbers to right input buffers in a next row of computing units in a same column.

In this embodiment of the present invention, for the first element buffered in the left input buffer in each computing unit in the computing array, the first element buffered in the left input buffer in a previous column computing unit in each row of computing units is transferred, in a next clock cycle, to the left input buffer of a next column computing unit in a pulse manner. Likewise, for the second element buffered in the right input buffer of each computing unit in the computing array, the second element buffered in the right input buffer in a previous row computing unit of each column of computing units are transferred, in the next clock cycle, to the right matrix buffer in a next row computing unit in the pulse manner. Therefore, in the pulse "relay" manner, the left matrix buffer transfers the first element to each column computing unit in one row in the computing array one by one, or the right matrix buffer transfers the second elements to each row computing unit in one column in the computing array one by one.

According to a fourth aspect, an embodiment of the present invention provides a matrix multiplier, applied to a matrix multiplier. The matrix multiplier includes a left matrix buffer, a right matrix buffer, and a computing array, the computing array includes computing units of M rows*N columns, M and N each are an integer greater than 0, and each computing unit in the computing array includes a comparer, a multiplier, and an accumulator; and the method includes:

The left matrix buffer buffers a first element set and a first index set that correspond to a matrix A, where A is an M*K matrix, the first element set includes S first elements, the S first elements each are an i^{th} non-zero element in each of S rows of the matrix A, the first index set includes column numbers of columns of the S first elements in the matrix A, S is a positive integer less than or equal to M, and i is a positive integer less than or equal to K.

The left matrix buffer broadcasts each of the S first elements and a column number of each first element to one row of computing units in the computing array, where when i is different values, first elements in a same row are broadcast to a same row of computing units.

The right matrix buffer buffers a second element set and a second index set that correspond to a matrix B, where B is a K*N matrix, the second element set includes T second elements, the T second elements each are a j^{th} non-zero element in each of T columns in the matrix B, the second index set includes row numbers of rows of the T second elements in the matrix B, T is a positive integer less than or equal to N, and j is a positive integer less than or equal to K.

The right matrix buffer broadcasts each of the T first elements and a row number of each second element to one column of computing units in the computing array, where when j is different values, second elements in a same column are broadcast to a same column of computing units.

The comparer in each computing unit in the computing array compares a column number of a received first element with a row number of a received second element.

When the column number of the received first element is equal to the row number of the received second element, the multiplier in each computing unit in the computing array multiplies the received first element by the received second element, and sends a computing result to the accumulator.

The accumulator in each computing unit in the computing array accumulates computing results in the multiplier to obtain an operation result of the computing unit.

In a possible implementation, that the left matrix buffer broadcasts each of the S first elements and a column number of each first element to one row of computing units in the computing array includes:

The left matrix buffer broadcasts first elements that are in an x^{th} row in the matrix A and in the S first elements and corresponding column numbers to computing units in an x^{th} row in the computing array, where x=(1, ..., M).

That the right matrix buffer broadcasts each of the T first elements and a row number of each second element to one column of computing units in the computing array includes:
The right matrix buffer broadcasts second elements that are in a y^{th} column in the matrix B and in the T second elements and corresponding row numbers to computing units in a y^{th} column of the computing array, where y=(1, ..., N).

In a possible implementation, i is successively 1, 2, ..., and K, and j is successively 1, 2, ..., and K. That the comparer in each computing unit in the computing array compares a column number of a received first element with a row number of a received second element includes:

The comparer in each computing unit in the computing array compares the column number of the received first element with the row number of the received second element; and when the column number is greater than the row number, compares the column number with a row number of a next received second element; or when the column number is less than the row number, compares the column number with a row number of a next received first element.

In a possible implementation, each computing unit further includes a left input buffer and a right input buffer.

That the left matrix buffer broadcasts each of the S first elements and a column number of each first element to one row of computing units in the computing array includes:

The left matrix buffer broadcasts each of the S first elements and the corresponding column number to the left input buffer of each computing unit in one row of computing units in the computing array.

That the right matrix buffer broadcasts each of the T first elements and a row number of each second element to one column of computing units in the computing array includes:

The right matrix buffer broadcasts each of the T second elements and the corresponding row number to the right input buffer of each computing unit in one column of computing units in the computing array.

The method further includes:
The left input buffer receives and buffers the first element and the corresponding column number that are broadcast by the left matrix buffer, and sends, in a first in first out manner, the buffered first element to the multiplier and the corresponding column number to the comparer.

The right input buffer receives and buffers the second element and the corresponding row number that are broadcast by the right matrix buffer, and sends, in the first in first out manner, the buffered second element to the multiplier and the corresponding row number to the comparer.

In a possible implementation, the method further includes:
When a computing result that corresponds to a target first element sent to the multiplier is sent to the accumulator, the left input buffer clears the target first element and a corresponding column number.

When a computing result that corresponds to a target second element sent to the multiplier is sent to the accumulator, the left input buffer clears the target second element and a corresponding row number.

In a possible implementation, the matrix multiplier further includes a left read/write control unit and a right read/write control unit, and the method further includes:
The left read/write control unit obtains e first element sets corresponding to the matrix A and corresponding e first index sets from a primary memory, and sends the e first element sets and the corresponding e first index sets to the left matrix buffer, where the e first element sets are e first element sets when i is 1, 2, ..., K, and e is an integer less than or equal to K.

The right read/write control unit obtains f second element sets corresponding to the matrix B and corresponding f second index sets from the primary memory, and sends the f second element sets and the corresponding f second index sets to the right matrix buffer, where the f second element sets are f second element sets when i is 1, 2, ..., K, and f is an integer less than or equal to K.

In a possible implementation, the matrix multiplier further includes a left read/write control unit and a right read/write control unit, and the method further includes:
The left read/write control unit obtains elements of M rows*Q columns in the matrix A from a primary memory, generates e first element sets corresponding to the matrix A and corresponding e first index sets, and sends the e first element sets and the corresponding e first index sets to the left matrix buffer, where the e first element sets are e first element sets when i is 1, 2, ..., K, Q is an integer less than or equal to K, and e is an integer less than or equal to Q.

The right read/write control unit obtains elements of Q rows*N columns in the matrix B from the primary memory, generates f second element sets corresponding to the matrix A and corresponding f second index sets, and sends the f second element sets and the corresponding f second index sets to the right matrix buffer, where the f second element sets are f second element sets when i is 1, 2, ..., K, and f is an integer less than or equal to Q.

In a possible implementation, the matrix multiplier further includes a left read/write control unit and a right read/write control unit, and the method further includes:
The left read/write control unit obtains elements of M rows*Q columns in the matrix A from a primary memory, and sends the elements to the left matrix buffer, where Q is an integer less than or equal to K.

The right read/write control unit obtains elements of Q rows*N columns in the matrix B from the primary memory, and sends the elements to the right matrix buffer.

The left matrix buffer receives the elements of M rows*Q columns in the matrix A, and generates e first element sets corresponding to the matrix A and corresponding e first index sets, where the e first element sets are e first element sets when i is 1, 2, ..., K, and e is an integer less than or equal to Q.

The right matrix buffer receives the elements of Q rows*N columns in the matrix B, and generates f second element sets corresponding to the matrix B and corresponding f second index sets, where the f second element sets are f second element sets when i is 1, 2, ..., K, and f is an integer less than or equal to Q.

In a possible implementation, the matrix multiplier further includes the primary memory; or the matrix multiplier is coupled to the primary memory.

In a possible implementation, that the left matrix buffer broadcasts each of the S first elements and a column number of each first element to one row of computing units in the computing array includes:
The left matrix buffer receives and buffers the e first element sets and the e first index sets; and broadcasts, in one clock cycle, each of the S first elements in one first element set and a column number of each first element to one row of computing units in the computing array.

That the right matrix buffer broadcasts each of the T first elements and a row number of each second element to one column of computing units in the computing array includes:

The right matrix buffer receives and buffers the f second element sets and the f second index sets; and broadcasts, in one clock cycle, each of T second elements in one second element set and a row number of each second element to one column of computing units in the computing array.

In a possible implementation, that the left matrix buffer broadcasts each of the S first elements and a column number of each first element to one row of computing units in the computing array includes:
When first elements in all computing units in an x^{th} row of the computing array are computed, the left matrix buffer broadcasts a next first element to all computing units in the x^{th} row, where x=(1, ..., M).

That the right matrix buffer broadcasts each of the T first elements and a row number of each second element to one column of computing units in the computing array includes:
When second elements in all computing units in a y^{th} column of the computing array are computed, the right matrix buffer broadcasts a next second element to all computing units in the y^{th} column, where y=(1, ..., N).

In a possible implementation, that the left matrix buffer broadcasts each of the S first elements and a column number of each first element to one row of computing units in the computing array includes:
When a first element in any computing unit in an x^{th} row of the computing array is computed, the left matrix buffer broadcasts a next first element to all computing units in the x^{th} row, where x=(1, ..., M).

That the right matrix buffer broadcasts each of the T first elements and a row number of each second element to one column of computing units in the computing array includes:
When a second element in any computing unit in a y^{th} column of the computing array is computed, the right matrix buffer broadcasts a next second element to all computing units in the y^{th} column, where y=(1, ..., N).

In a possible implementation, that the left matrix buffer broadcasts each of the S first elements and a column number of each first element to one row of computing units in the computing array includes:
The left matrix buffer sends each of the S first elements and the column number of each first element to a first column computing unit of one row of computing units in the computing array.

That the right matrix buffer broadcasts each of the T first elements and a row number of each second element to one column of computing units in the computing array includes:
The right matrix buffer sends each of the T second elements and the row number of each second element to a first row computing unit of a one column of computing units in the computing array.

The computing array further includes (M-1) column registers, each of the (N-1) row registers is disposed between two columns of adjacent computing units, and each of the (M-1) column registers is disposed between two rows of adjacent computing units. The method further includes:
Each row register buffers first elements and corresponding column numbers that are sent by a previous column of computing units, and sends the first elements and the corresponding column numbers to a next column of computing units in the next clock cycle.

Each column register buffers second elements and corresponding row numbers that are sent by a previous row of computing units, and sends the second elements and the corresponding row numbers to a next row of computing units in the next clock cycle.

In a possible implementation, the computing array further includes row registers of M rows*(N-1)/a columns and column registers of (M-1)/b rows*N columns, where each row register is coupled to a 1-row*a-column computing unit, each column register is coupled to a b-row*1-column computing unit, a is an integer greater than or equal to 1, and b is an integer greater than or equal to 1.

That the left matrix buffer broadcasts each of the S first elements and a column number of each first element to one row of computing units in the computing array includes:
The left matrix buffer sends each of the S first elements and the column number of each first element to a first column computing unit of one row of computing units in the computing array and a first column row register of one row of row registers.

That the right matrix buffer broadcasts each of the T first elements and a row number of each second element to one column of computing units in the computing array includes:
The right matrix buffer sends each of the T second elements and the row number of each second element to a first row computing unit of one column of computing units in the computing array and a first row column register of one column of column registers.

The method further includes:
Each row register buffers a first element and a corresponding column number that are sent by the left matrix buffer or a previous row register, and sends, in the next clock cycle, the first element and the corresponding column number to the 1-row*a-column computing unit and a next row register.

Each column register buffers a second element and a corresponding row number that are sent by the right matrix buffer or a previous column register, and sends, in the next clock cycle, the second element and the corresponding row number to the b-row* 1-column computing unit and a next column register.

In a possible implementation, each computing unit further includes a left input buffer and a right input buffer, and the method further includes:
The left input buffer sends, in the next clock cycle, a currently buffered first element and a corresponding column number to the left input buffer in a next column computing unit in a same row.

The right input buffer sends, in the next clock cycle, a currently buffered second element and a corresponding row number to the right input buffer in a next row computing unit in a same column.

According to a fifth aspect, this application provides a semiconductor chip. The semiconductor chip may include the matrix multiplier provided in any implementation of the first aspect or the third aspect.

According to a sixth aspect, this application provides a semiconductor chip. The semiconductor chip may include the matrix multiplier provided in any implementation of the first aspect or the third aspect, and a primary memory coupled to the matrix multiplier.

According to a seventh aspect, this application provides a system-on-a-chip SoC chip. The SoC chip includes the matrix multiplier provided in any implementation of the first aspect or the third aspect, and a primary memory coupled to the matrix multiplier. The SoC chip may include a chip, or may include a chip and another discrete component.

According to an eighth aspect, this application provides a chip system. The chip system includes the matrix multiplier provided in any implementation of the first aspect or the third aspect. In a possible design, the chip system further includes a memory, and the memory is configured to store program instructions and data that are necessary for or related to the matrix multiplier in a running process. The chip system may include a chip, or may include a chip and another discrete component.

According to a ninth aspect, this application provides a processing apparatus. The processing apparatus has a function of implementing any matrix computing method in the second aspect or the fourth aspect. This function may be implemented by using hardware, or may be implemented by executing corresponding software by hardware. The hardware or the software includes one or more modules corresponding to the foregoing functions.

According to a tenth aspect, this application provides a terminal. The terminal includes a matrix multiplier, and the matrix multiplier is the matrix multiplier provided in any implementation of the first aspect or the third aspect. The terminal may further include a memory, and the memory is configured to be coupled to the matrix multiplier, and the memory stores program instructions and data that are necessary for the terminal. The terminal may further include a communication interface, configured to communicate with another device or communication network by the terminal.

According to an eleventh aspect, this application provides a computer-readable storage medium. The computer-readable storage medium stores a computer program, and when the computer program is executed by a matrix multiplier, a procedure of the matrix computing method according to any one of the second aspect or the fourth aspect is implemented.

According to a twelfth aspect, an embodiment of the present invention provides a computer program. The computer program includes instructions, and when the computer program is executed by a matrix multiplier, the matrix multiplier is enabled to perform a procedure of the matrix computing method according to any one of the second aspect or the fourth aspect.

### BRIEF DESCRIPTION OF DRAWINGS

FIG. 1A-1 and FIG. 1A-2 are a schematic diagram of a principle of a matrix computing method according to an embodiment of the present invention;
FIG. 1B is a schematic diagram of a structure of a matrix multiplier 10 according to an embodiment of the present invention;
FIG. 1C is a schematic diagram of a structure of another matrix multiplier 10 according to an embodiment of the present invention;
FIG. 1D is a schematic diagram of compressed sparse column (CSC) according to an embodiment of the present invention;
FIG. 1E is a schematic diagram of compressed sparse row (CSR) according to an embodiment of the present invention;
FIG. 2A is a schematic diagram of a structure of a computing unit according to an embodiment of the present invention;
FIG. 2B is a schematic diagram of a structure of another computing unit 1031 according to an embodiment of the present invention;
FIG. 3A-1 to FIG. 3A-4 are a schematic diagram of reading matrix elements in a first in first out manner according to an embodiment of the present invention;

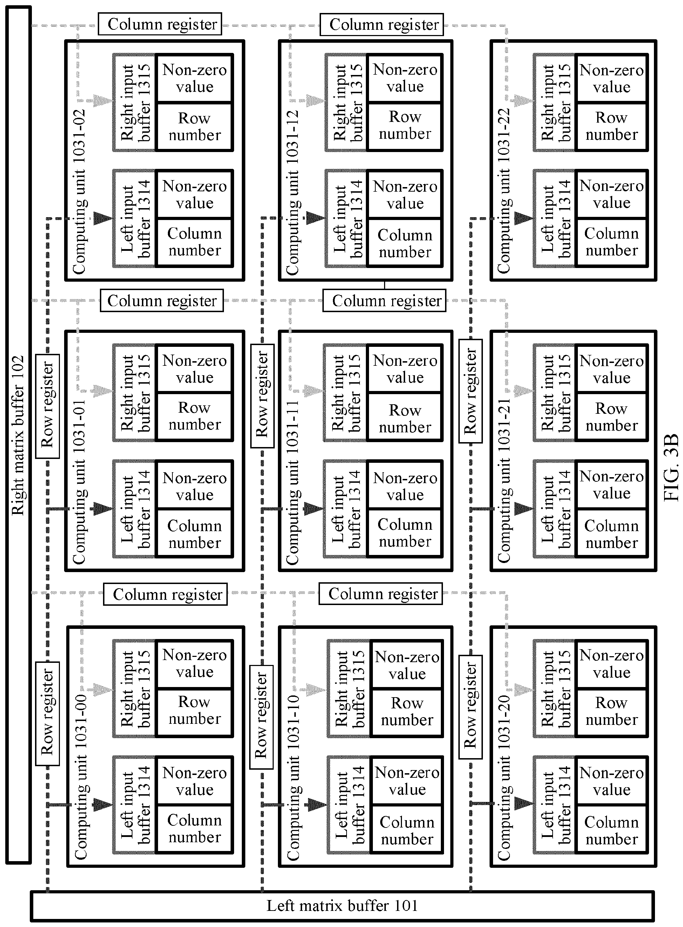

FIG. 3B is a schematic diagram of broadcasting matrix elements by using registers according to an embodiment of the present invention;

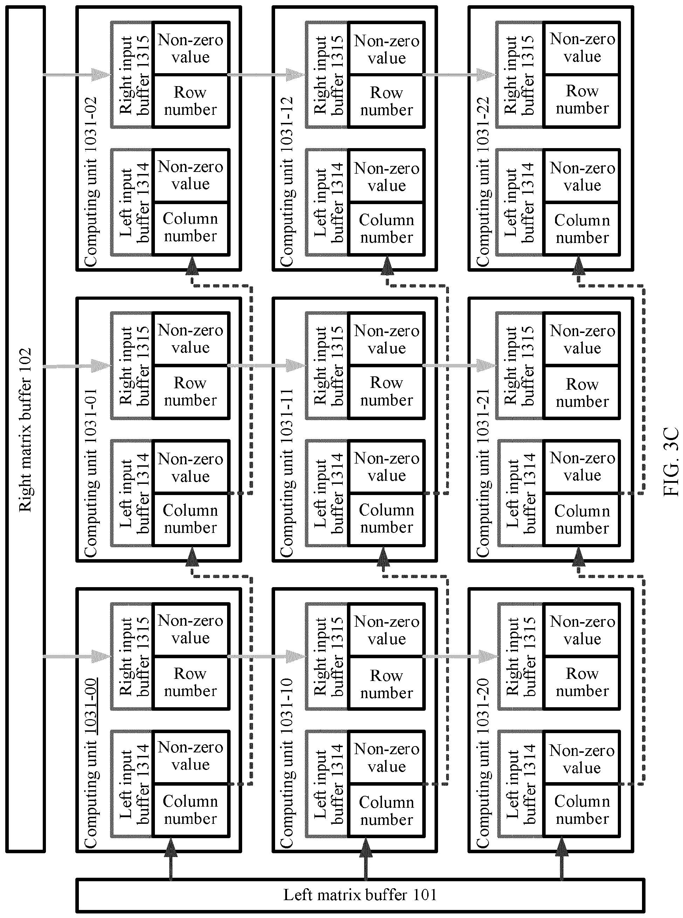

FIG. 3C is a schematic diagram of broadcasting matrix elements in a pulse manner according to an embodiment of the present invention;

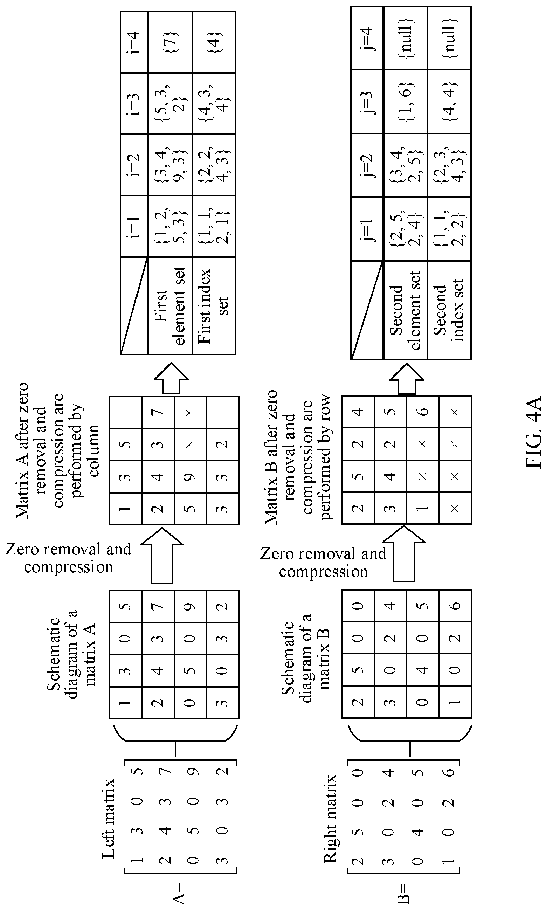

FIG. 4A is a schematic diagram of performing zero removal and compression on a matrix A and a matrix B according to an embodiment of the present invention;

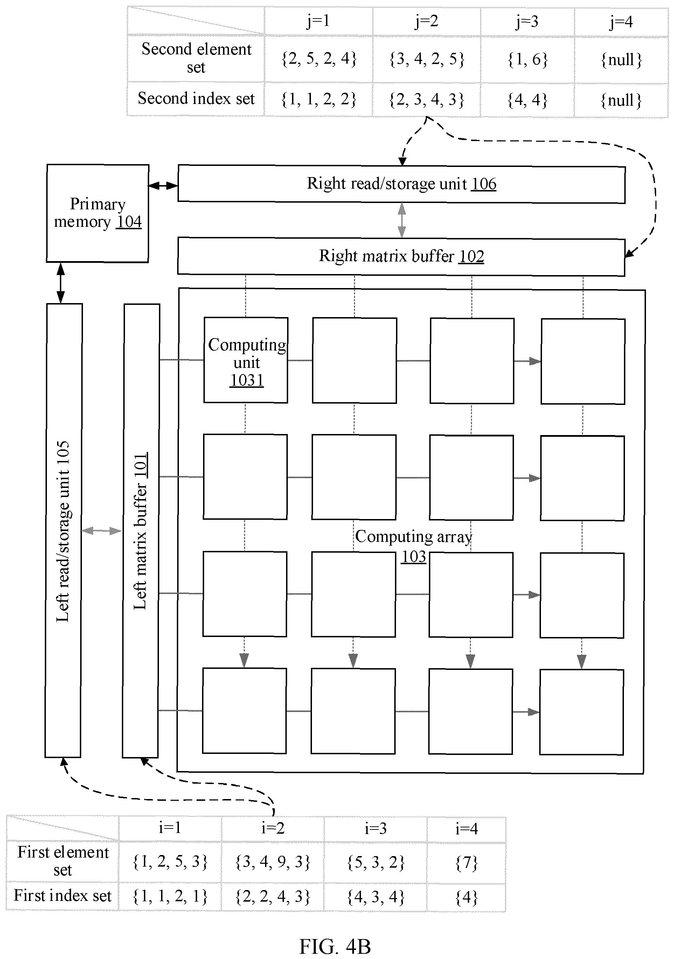

FIG. 4B is a schematic diagram of broadcasting a matrix A and a matrix B to a computing array according to an embodiment of the present invention;

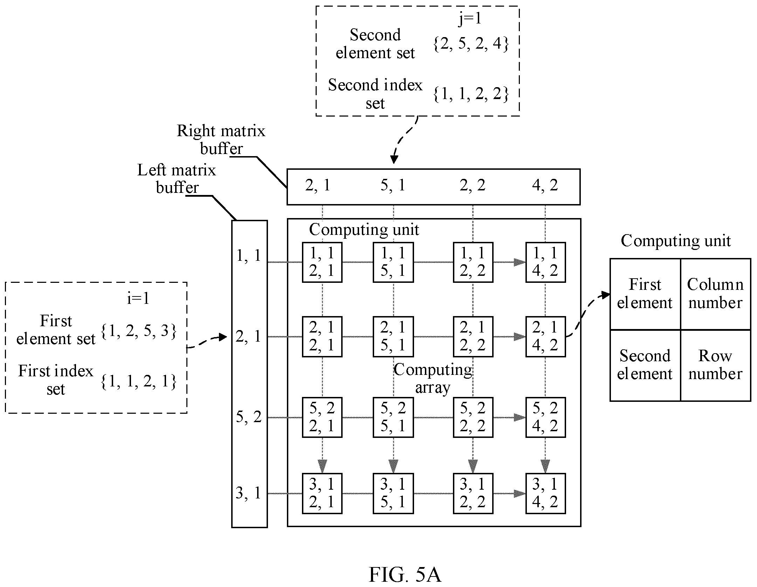

FIG. 5A to FIG. 5D are some schematic diagrams of broadcasting a matrix A and a matrix B in each clock cycle according to an embodiment of the present invention;

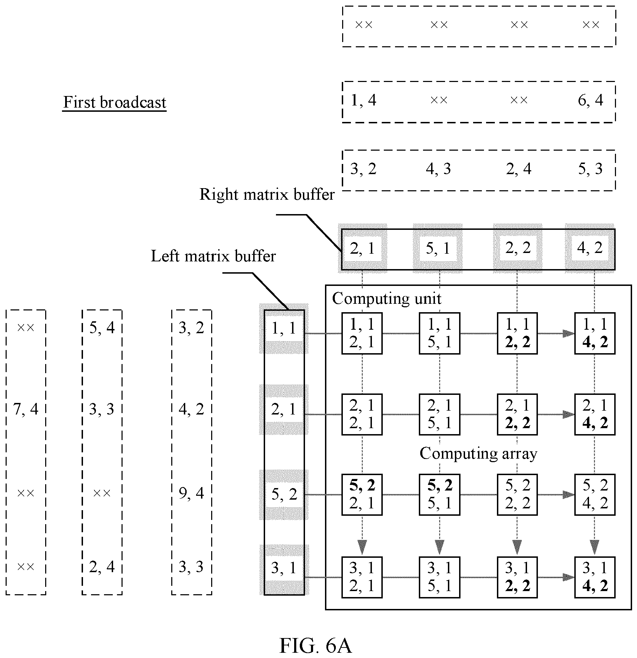

FIG. 6A to FIG. 6D are some schematic diagrams of broadcasting a matrix A and a matrix B in two different manners according to an embodiment of the present invention;

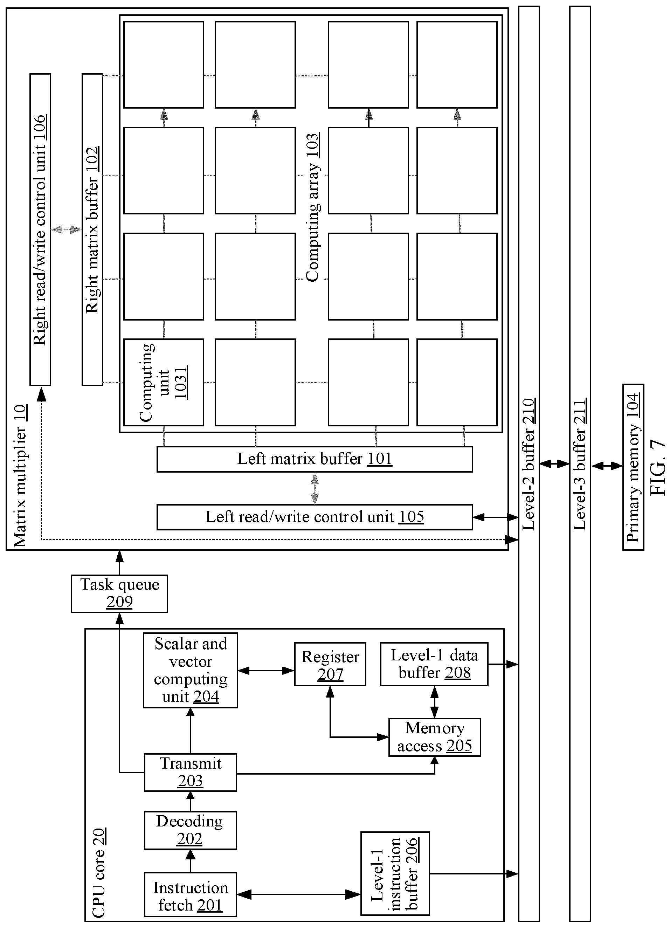

FIG. 7 is a schematic diagram of a structure coupling a matrix multiplier and a CPU core subsystem according to an embodiment of the present invention;

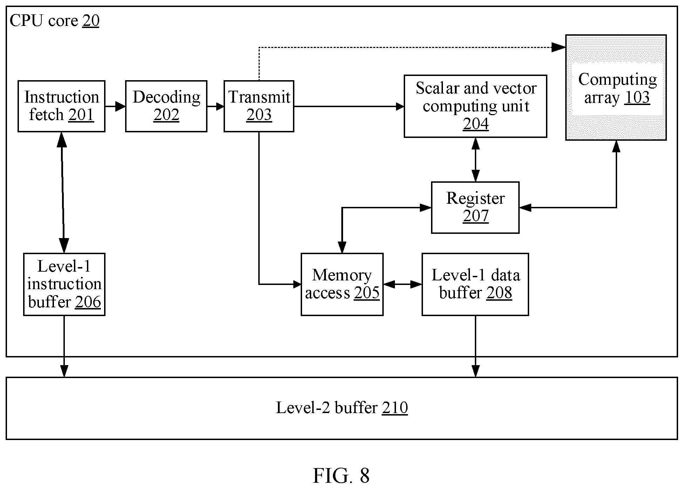

FIG. 8 is a schematic diagram of a structure coupling a matrix multiplier and a CPU according to an embodiment of the present invention;

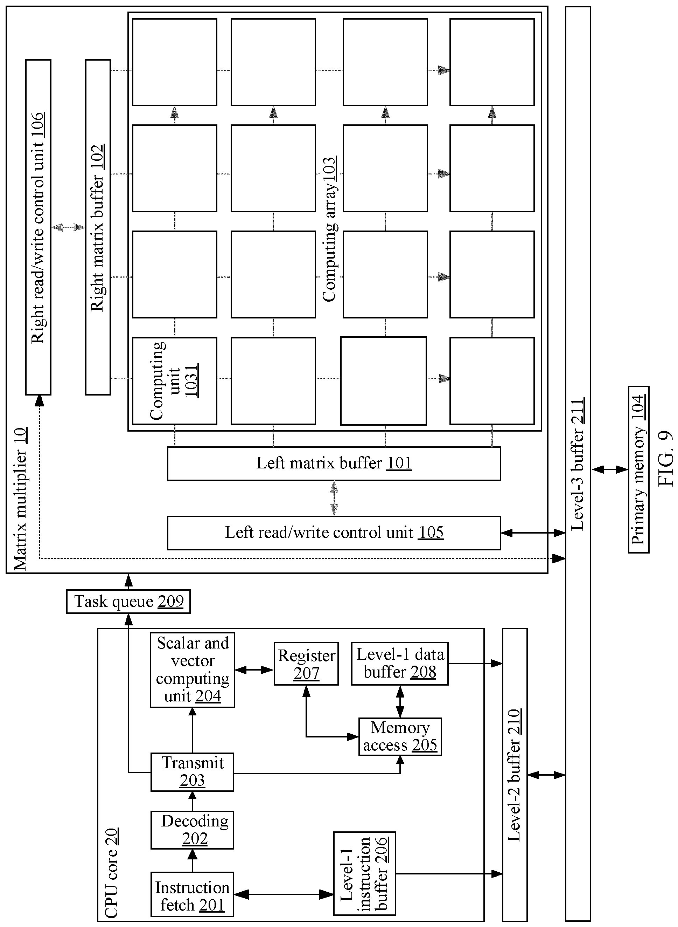

FIG. 9 is a schematic diagram of another structure coupling a CPU and a matrix multiplier according to an embodiment of the present invention;

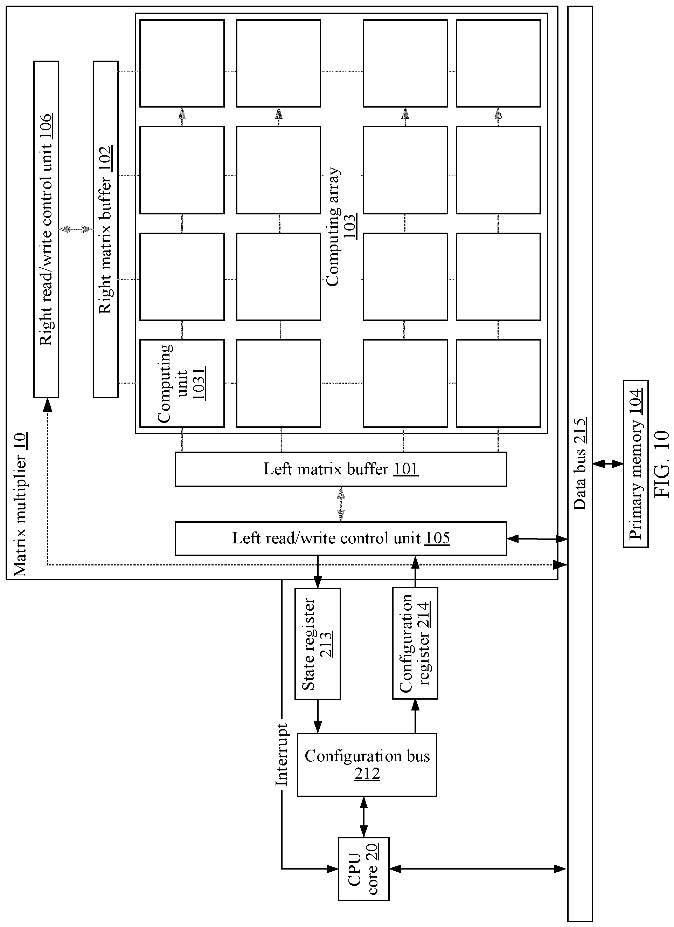

FIG. 10 is a schematic diagram of still another structure coupling a CPU and a matrix multiplier according to an embodiment of the present invention;

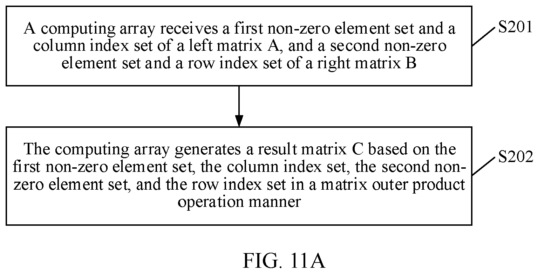

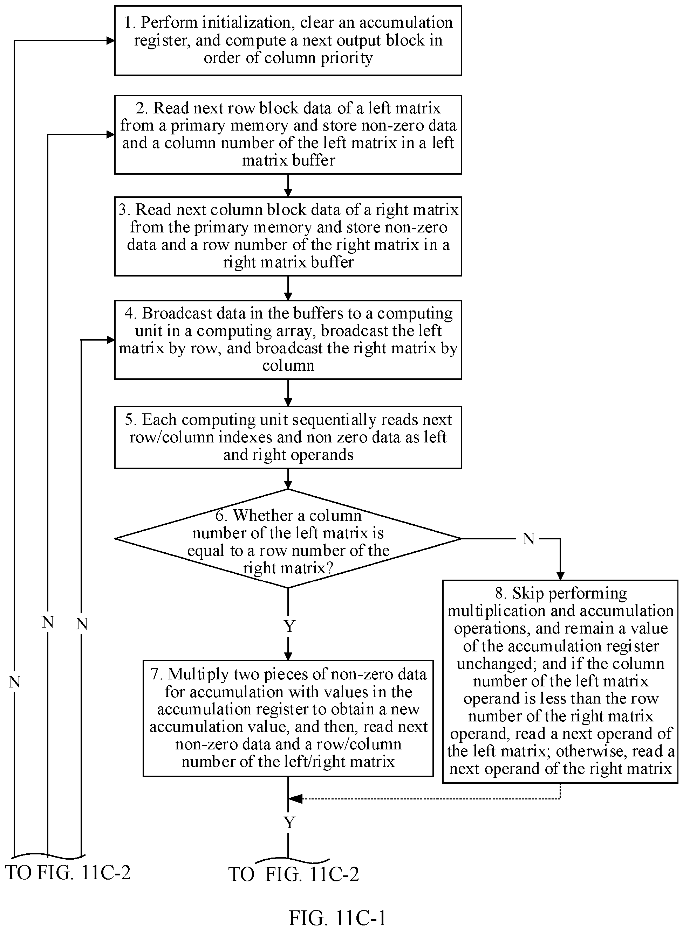

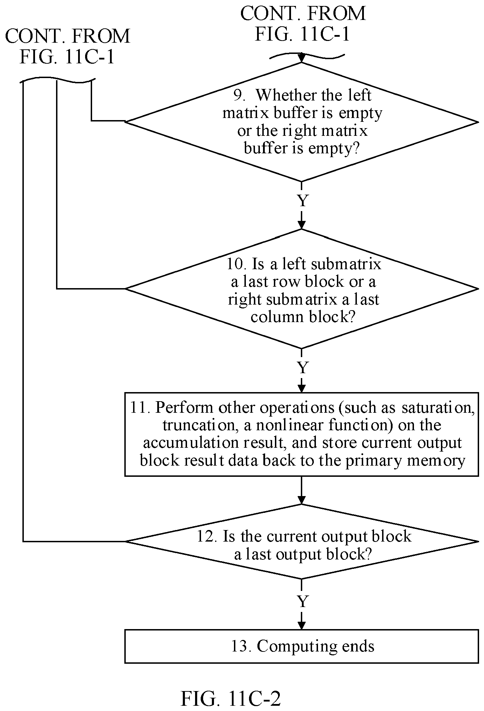

FIG. 11A is a schematic flowchart of a matrix computing method according to an embodiment of the present invention;

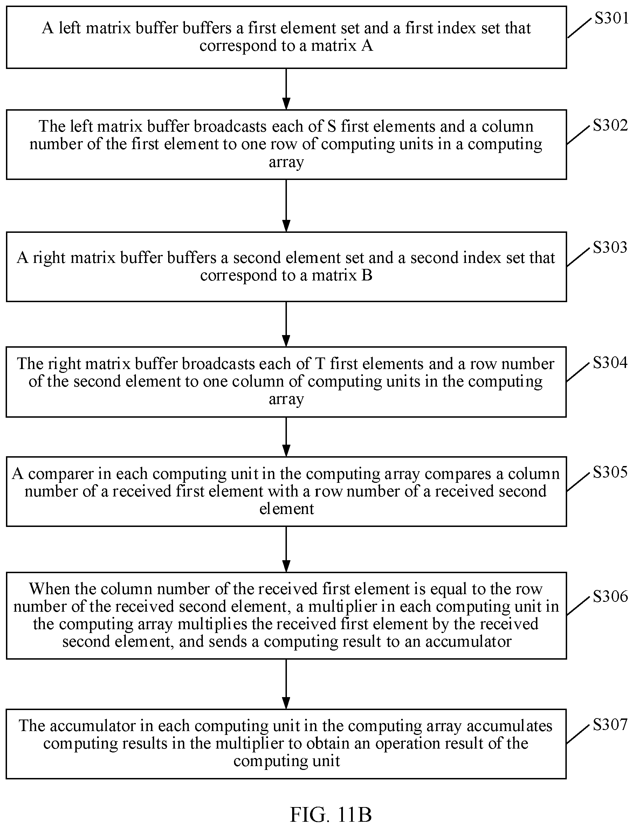

FIG. 11B is a schematic flowchart of another matrix computing method according to an embodiment of the present invention; and
FIG. 11C-1 and FIG. 11C-2 are a schematic flowchart of still another matrix computing method according to an embodiment of the present invention.

### DESCRIPTION OF EMBODIMENTS

The following describes embodiments of the present invention with reference to accompanying drawings in embodiments of the present invention. In the specification, claims, and accompanying drawings of this application, the terms "first", "second", "third", "fourth", and the like are intended to distinguish between different objects but do not indicate a particular order. In addition, terms such as "including" and "having" and any other variants thereof are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. "An embodiment" mentioned in the specification indicates that a particular characteristic, structure or property that is related to this embodiment may be included in at least one embodiment of this application. The phrase appearing at various locations in this specification does not necessarily mean a same embodiment, and is not an independent or alternative embodiment mutually exclusive to another embodiment. Persons skilled in the art explicitly and implicitly understand that embodiments described in this specification may be combined with other embodiments.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may perform communication by using a local and/or remote process and based on, for example, a signal having one or more data packets (for example, data from two components interacting with another component in a local system, a distributed system, and/or across a network such as the internet interacting with other systems through the signal).

First, some terms in this application are explained and described, to facilitate understanding by persons skilled in the art.
(1) Field programmable gate array (Field Programmable Gate Array, FPGA): A field programmable gate array is developed on the basis of programmable components such as programmable array logic (Programmable Array Logic, PAL) and generic array logic (Generic Array Logic, GAL). The field programmable gate array emerges as a semi-customized circuit in the application-specific integrated circuit (Application-Specific Integrated Circuit, ASIC) field, and resolves problems of a shortage of a customized circuit and a limitation of a quantity of gate circuits of an original programmable component.
(2) Compressed sparse row (Compressed Sparse Row, CSR): When a matrix is a sparse matrix, most elements in the matrix are zero elements. Compressed sparse row indicates a method of removing a zero element in each row of the matrix, and re-arranging a non-zero element in the row for storage.
(3) Compressed sparse column (Compressed Sparse Column, CSC): When a matrix is a sparse matrix, most elements in the matrix are zero elements. Compressed sparse column indicates a method of removing a zero element in each column of the matrix, and re-arranging a non-zero element in the column for storage.
(4) First in first out (First In First Out, FIFO) queue: A first in first out queue is a sequential execution method, namely, first in first out. A first entered instruction is completed first and then a second instruction is executed. For example, an instruction 0 is entered the queue first, and then an instruction 1 and an instruction 2 are entered. After completing a current instruction, a CPU extracts the instruction 0 from the queue for execution. In this case, the instruction 1 replaces the instruction 0. Likewise, the instruction 2, an instruction 3, and the like are moved forward.
(5) Sparse matrix: In a matrix, if a quantity of zero elements is far greater than a quantity of non-zero elements, and the non-zero elements are distributed irregularly, the matrix is referred to as a sparse matrix; or if a quantity of non-zero elements accounts for a majority, the matrix is referred to as a dense matrix. That a ratio of a total quantity of non-zero elements to a total quantity of all elements in a matrix is density of the matrix is defined.
(6) Block matrix: A matrix is divided into blocks, so that a higher-order matrix operation can be converted into a lower-order matrix operation, and a structure of the original matrix is simple and clear, thereby greatly simplifying an operation step or facilitating theoretical derivation of the matrix. The block matrix is a matrix, and is divided into some small sub-matrices in a horizontal and vertical manner. Then, each small matrix is considered as an element.
(7) Matrix outer product: A matrix outer product indicates a matrix operation by using an outer product of vectors. That is, one column vector of a left matrix is multiplied by one row vector of a right matrix each time to obtain an intermediate result of each result element in a result matrix. One or more intermediate results of each result element are obtained through one or more times of computing, and the one or more intermediate results of each result element are accumulated to obtain a final value of each result element. Therefore, a matrix operation result of the left matrix and the right matrix, namely, the result matrix, is finally obtained.
(8) Matrix inner product: A matrix inner product indicates a matrix operation by using an inner product of vectors. A row vector of a left matrix is multiplied by a column vector of a right matrix each time to obtain a value of one result element of a result matrix. After a plurality of times of computing, values of all result elements in the result matrix are obtained. Therefore, a matrix operation result of the left matrix and the right matrix, namely, the result matrix, is obtained.
(9) General register: A general register can be configured to: transmit and temporarily store data, participate in an arithmetic logic operation, and store an operation result. In addition, the general registers each have some special functions.
(10) Integrated circuit (Integrated Circuit, IC): An integrated circuit is a microelectronic device or component. Elements such as a transistor, a resistor, a capacitor, and an inductor required in a circuit are interconnected with cables based on a specific process, and are made on a small or several small semiconductor wafers or dielectric substrates for package in a tube shell to form a micro structure with required circuit functions. That is, an IC chip is a chip formed by placing an integrated circuit formed by a large quantity of microelectronic components (a transistor, a resistor, a capacitor, and the like) on a plastic base.
(11) Computer instructions: Computer instructions are instructions and commands that direct a machine to work. A program is a series of instructions arranged in a specific sequence. A process of executing the program is a working process of a computer. An instruction set (Instruction set) is a set of instructions used by a CPU to compute and control a computer system. Each CPU is designed with a series of instruction systems that match its hardware circuits. Instruction strength is also an important indicator of the CPU, and the instruction set is one of the most effective tools to improve efficiency of a microprocessor. Common instruction set architectures (Instruction Set Architectures, ISAs) are complex instruction set computing (Complex Instruction Set Computing, CISC) and reduced instruction set computing (Reduced Instruction Set Computing, RISC). Typical CISC is x86, and typical RISC is advanced reduced instruction set machine (Advanced RISC Machine, ARM) architecture and a microprocessor without interlocked pipelined stages (Microprocessor without interlocked pipelined stages, MIPS) architecture.

First, to facilitate understanding of embodiments of the present invention, technical problems to be specifically resolved in this application are further analyzed and proposed. Currently, the following two solutions are mainly included for multiplication computing of a sparse matrix.

Solution 1: Perform computing in a vector inner product manner.

Solution 1 is to compute a product matrix C=A*B, where A and B are sparse matrices, and C is a product matrix. The following main steps are included.
1. Receive the two sparse matrices A and B from a primary memory, and rotate the matrix B.
2. Perform non-zero detection on the two sparse matrices, and store non-zero data and row numbers and column numbers corresponding to the non-zero data.
3. Separately read a row of non-zero data from the matrix A and the matrix B, where because the matrix B is rotated, the row of data in the matrix B is equivalent to a column of data in original data. Data whose column numbers are equal are multiplied for accumulation, and after all non-zero data in the two rows is computed, accumulated values and row numbers and column numbers corresponding to the accumulated values in the product matrix are finally obtained.
4. The foregoing process is repeated until all the non-zero data in A and B is computed.

For example, $\begin{matrix}A = \left[\begin{matrix}{a}_{11} & {a}_{12} & {a}_{13} \\ {a}_{21} & {a}_{22} & {a}_{23}\end{matrix}\right] , & B = \left[\begin{matrix}{b}_{11} & {b}_{12} \\ {b}_{21} & {b}_{22} \\ {b}_{31} & {b}_{32}\end{matrix}\right]\end{matrix}$, and $C = A ∗ B = \left[\begin{matrix}{c}_{11} & {c}_{12} \\ {c}_{21} & {c}_{22}\end{matrix}\right] = \left[\begin{matrix}{a}_{11} {b}_{11} + {a}_{12} {b}_{21} + {a}_{13} {b}_{31} & {a}_{11} {b}_{12} + {a}_{12} {b}_{22} + {a}_{13} {b}_{32} \\ {a}_{21} {b}_{11} + {a}_{22} {b}_{21} + {a}_{23} {b}_{31} & {a}_{21} {b}_{12} + {a}_{22} {b}_{22} + {a}_{23} {b}_{32}\end{matrix}\right] .$

In the vector inner product computing manner in Solution 1, a result element, for example, c₁₁=a₁₁b₁₁ +a₁₂b₂₁ +a₁₃b₃₁, in the result matrix C is used as an example, where the result element c₁₁ is obtained by accumulating three intermediate results a₁₁b₁₁, a₁₂b₂₁, and aisbsi. Based on the vector inner product computing manner, the three intermediate results are respectively completed in parallel by three computing units, and then, the intermediate results respectively computed by the three computing units are accumulated in a computing unit, or are sent to a dedicated accumulation unit for accumulation. That is, one computing unit obtains elements an and bn, another computing unit obtains elements a₁₂ and b₂₁, and still another computing unit obtains elements a₁₃ and b₃₁. The three computing units perform parallel computing to obtain the three intermediate results a₁₁b₁₁, a₁₂b₂₁, and a₁₃b₃₁ of the result element c₁₁ respectively.

Disadvantages of Solution 1 are as follows.
1. In essence, matrix computing is performed in the vector inner product manner. Because locations of non-zero data of each row/column of the sparse matrices are different, inner product computing can be performed only in a row sequence, without a high parallelism degree. For example, a row number of a row of non-zero data in the matrix A needs to be compared one by one with a column number of a row of non-zero data in the matrix B, and then whether to perform multiplication for accumulation computing is determined. If a CPU is used for processing, only comparison between a row number and a column number, multiplication, and accumulation can be performed in a serial manner. If dedicated hardware such as an FPGAis used for processing, it is equivalent to a full-connection structure, that is, a row number and a column number of each data in a row of matrix A need to be compared with a row number and a column number of each data in a row of matrix B. In addition, the full-connection structure consumes a large quantity of resources, resulting in a problem such as cable congestion, and a parallel processing capability cannot improve with an increase of computing resources (poor scalability).
2. Both the matrix A and the matrix B need to store a row number and a column number corresponding to non-zero data, causing a storage waste.

Solution 2: Perform computing based on sparseness of a matrix.

Solution 2 is to split convolution computing in AI computing into matrix multiplication, and compute a matrix C=A*B. A matrix B is a sparse matrix, and a matrix A is a dense matrix. The matrix B is "compressed", that is, only non-zero element data and location information of the non-zero element data are stored. Then, data at a corresponding location in the matrix A is indexed based on the location information (by using a multiplexer), and multiplication is performed on the data and a non-zero element in the matrix B for accumulation computing, to finally obtain an element value in the result matrix C.

Disadvantages of Solution 2 are as follows.
1. In this solution, only sparseness of one matrix can be used. If both A and B are sparse matrices, the sparseness of A cannot be used, and computing resources are wasted.
2. It is necessary to know in advance which one of the matrix A and the matrix B is the sparse matrix, or first determine, through statistics collected, which matrix has a higher sparseness degree, and use the matrix as the matrix B. Otherwise, the sparseness cannot be used.
3. When the sparseness degree of the sparse matrix is high (that is, a proportion of zero elements in the matrix is large, and a proportion of zero elements in many matrices is 90% or even more than 99%), due to a physical implementation limitation of the multiplexer (a larger quantity of selections indicates a slower speed), a processing speed is reduced, or the zero elements cannot be totally skipped.

In conclusion, technical disadvantages in the conventional technology mainly include the following aspects.
1. A parallelism degree of matrix element computing is low.
2. Sparseness of two sparse matrices in two multiplication matrices cannot be fully used.

Therefore, this application needs to resolve the following technical problems.
1. Improve a parallelism degree of sparse matrices (thereby improving computing performance), and provide good scalability (not limited by a size of a computing array, that is, computing of matrices of different sizes can be flexibly implemented).
2. Do not need to know of or collect statistics on sparseness of a matrix in advance.
3. Fully use sparseness of two matrices, where higher sparseness of the two matrices indicates higher computing performance.

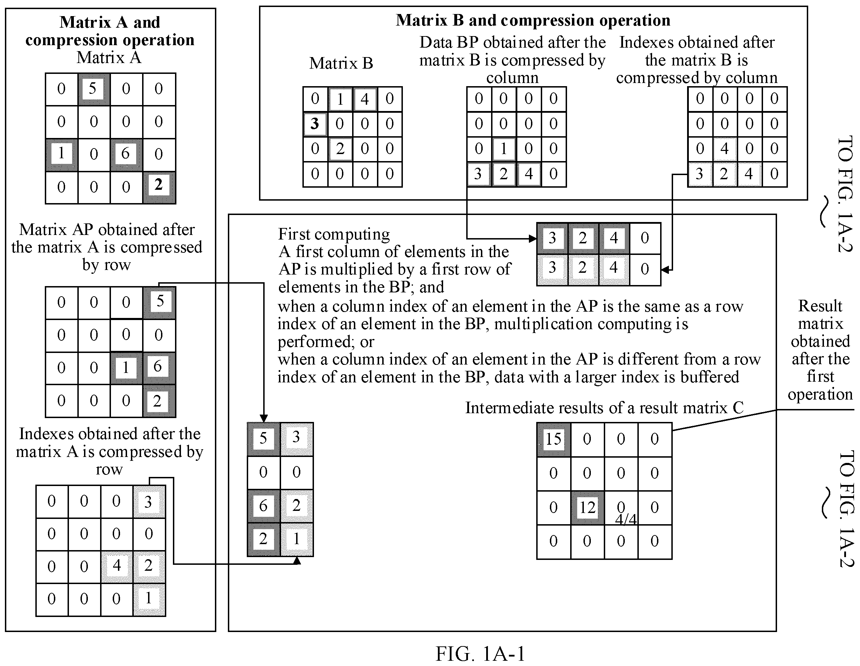

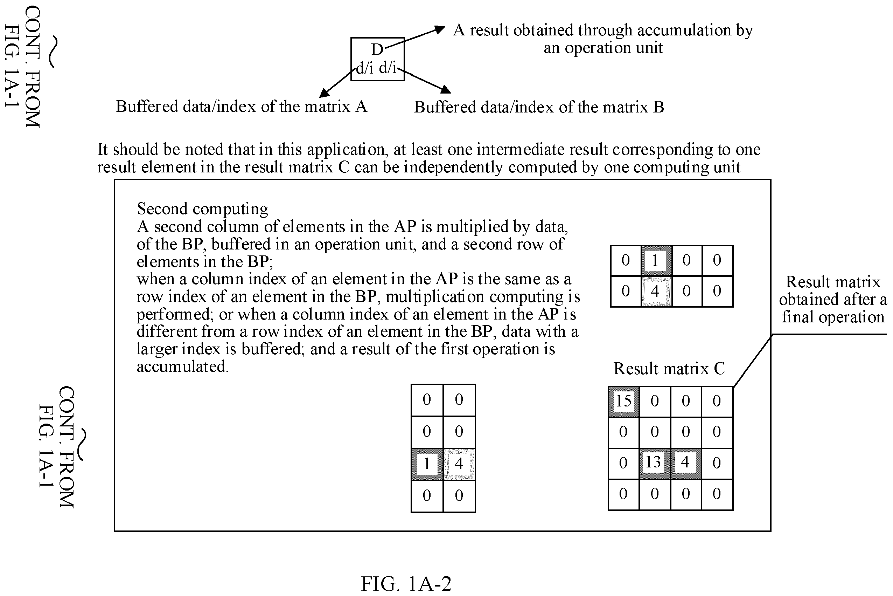

For ease of understanding this solution, FIG. 1A-1 and FIG. 1A-2 are a schematic diagram of a principle of a matrix computing method according to an embodiment of the present invention. The matrix computing method may include the following step 1 to step 5.
1. A left matrix A may be a sparse matrix or may be a dense matrix. In FIG. 1A-1 and FIG. 1A-2, for example, the left matrix A is the sparse matrix, and zero element removal and compression, for example, compression performed by row, are performed on the left matrix A, to obtain a matrix AP and indexes (indexes) after compression performed by row on the left matrix A. It should be noted that, compression performed by row may be compression to leftward or compression to rightward. For example, the matrix AP in FIG. 1A-1 and FIG. 1A-2 is compressed rightward, provided that compression is performed in one direction (left or right).
2. A right matrix B may be a sparse matrix or may be a dense matrix. In FIG. 1A-1 and FIG. 1A-2, for example, the right matrix B is the sparse matrix, and zero element removal and compression, for example, compression performed by column, are performed on the right matrix B, to obtain a matrix BP and indexes (indexes) after compression performed by column on the right matrix A. It should be noted that compression performed by column may be compression upward or compression downward. For example, the matrix BP in FIG. 1A-1 and FIG. 1A-2 is compressed downward, provided that compression is performed in one direction (upward or downward).
3. A column element in the matrix AP (which may be selected rightward if compression is performed rightward, or may be selected leftward if compression is performed leftward), an index, namely, a column number, corresponding to the column element, and a row element of the matrix BP (which may be selected from upward if compression is performed upward, or may be selected downward if compression is performed downward) and an index, namely, a row number, of the row element, are selected each time, to perform, in a matrix outer product computing manner, computing on the selected non-zero elements.
4. When the column number of the extracted element in the AP is equal to the row number of the extracted element in the BP, multiplication may be performed, and a multiplication result is used as an intermediate result of corresponding result elements in a result matrix C for accumulation; or when the column number of the extracted element in the AP is unequal to the row number of the extracted element in the BP, an element corresponding to a column number or a row number with a larger absolute value is retained, and an element corresponding to a row number or a column number with a smaller absolute value is deleted, waiting for a next round of input.

For example, as shown in FIG. 1A-1 and FIG. 1A-2, in first computing, in a location of a result element (namely, Cn) in a first row and a first column in the result matrix C, because an element 5 in the matrix AP and a column number 3 corresponding to the element, and an element 3 in the matrix BP and a row number 3 corresponding to the element are input in this round, it can be learned after comparison that an absolute value of the column number 3 is equal to that of the row number 3. Therefore, multiplication computing can be performed in this case, that is, 5*3=15 is an intermediate result corresponding to the result element C₁₁ in this round. In a location of a result element (namely, C32) in a third row and a second column in the result matrix C, because an element 6 in the matrix AP and a column number 2 corresponding to the element, and an element 2 in the matrix BP and a row number 2 corresponding to the element 2 are input in this round, it can be learned after comparison that an absolute value of the column number 2 is equal to that of the row number 2. Therefore, multiplication computing can be performed in this case, that is, 6*2=12 is an intermediate result corresponding to the result element C₃₂ in this round. However, in a location of a result element (namely, C₃₃) in a third row and a third column in the result matrix C, because the element 6 in the matrix AP and the column number 2 corresponding to the element, and an element 4 in the matrix BP and a row number 4 corresponding to the element are input in this round, it can be learned after comparison that an absolute value of the column number 2 is less than that of the row number 4. Therefore, in this case, the element 4 in the BP and the row number 4 need to be reserved, waiting for input of a next round of element (an element 1 and a column number 4 are input in the next round, and may be exactly multiplied by the element 4 and the row number 4) in the AP.

Similar operations are performed on the rest elements. For example, as shown in FIG. 1A-1 and FIG. 1A-2, in second computing, in a location of a result element (namely, C₃₂) in a third row and a second column in the result matrix C, because an element 1 and a column number 4 corresponding to the element 1 in the matrix AP, and an element 1 and a row number 4 corresponding to the element 1 in the matrix BP are input in this round, it can be learned after comparison that an absolute value of the column number 1 is equal to that of the row number 1. Therefore, multiplication computing can be performed in this case, that is, 1 * 1 = 1 is an intermediate result corresponding to the result element C₃₂ in the current round, and a final value 13 of the result element C₃₂ is obtained after the intermediate result corresponding to the result element C₃₂ in the current round is accumulated with the result 12 of the previous round of computing. However, in the location of the result element (namely, C₃₃) in the third row and the third column in the result matrix C, because the element 1 and the column number 4 corresponding to the element 1 in the matrix AP, and the element 4 and the row number 4 corresponding to the element 4 that are buffered in the matrix BP in the previous round are input in this round (and an element in the BP in this round corresponds to 0, and therefore, there is no input), it can be learned after comparison that the absolute value of the column number 4 is equal to that of the row number 4. Therefore, multiplication computing can be performed, that is, 1*4=4 is an intermediate result corresponding to the result element C₃₃ in the current round, and because an intermediate result of the previous round is 0, a final result of the result element C₃₃ is also 4.

It should be noted that, in FIG. 1A-1 and FIG. 1A-2, for another result element whose final value is 0 in the result matrix C, because column numbers of elements in the AP that are input in a first round and a second round are unequal to a row number of an element in the BP, corresponding intermediate results are all 0, and the final value is 0. A computing process of such an element in FIG. 1A-1 and FIG. 1A-2 is not described again.

5. Based on the foregoing description, when all non-zero elements in both the AP and the BP are computed, the result matrix C is finally obtained.

In addition, in this application, at least one intermediate result corresponding to one result element in the result matrix C may be independently computed by one computing unit in a computing array in a matrix multiplier provided in this application.

In addition, it should be noted that, in this embodiment of the present invention, all the elements obtained after zero removal and compression are performed on the matrix A are referred to as a first non-zero element set, and a corresponding index set is referred to as a column index set. For example, in FIG. 1A-1 and FIG. 1A-2, the first non-zero element set of the matrix A is {5, 6, 2, 1}, and the column index set is {3, 2, 1, 4}. All the elements obtained after zero removal and compression are performed on the matrix B are referred to as a second non-zero element set, and a corresponding index set is referred to as a row index set. For example, in FIG. 1A-1 and FIG. 1A-2, the second non-zero element set of the matrix B is {3, 2, 4, 1}, and the row index set is {3, 2, 4,4}.

In addition, this application subsequently specifically related to some embodiments in which related buffers send or broadcast non-zero elements to a computing unit in different clock cycles according to a specific rule. Therefore, for ease of description, in this application, a column of non-zero elements in the AP is further referred to as a first element set, and an index set corresponding to the column of non-zero elements is referred to as a first index set. In other words, a column of non-zero elements that are compressed by row in the matrix A is used as a first element set, and an index set corresponding to the column of elements is used as a first index set. Likewise, in this application, a row of non-zero elements in the BP is further referred to as a second element set, and an index set corresponding to the row of non-zero elements is referred to as a second index set. In other words, a row of non-zero elements in the matrix B that are compressed by column is used as a second element set, and an index set corresponding to the row of non-zero elements in the matrix B is used as a second index set. It should be noted that one column of non-zero elements in the AP corresponds to one first element set, and a plurality of columns of non-zero elements in the AP correspond to a plurality of first element sets. Likewise, one row of non-zero elements in the BP corresponds to one second element set, and a plurality of rows of non-zero elements in the BP correspond to a plurality of second element sets. In other words, both a first non-zero element in a first non-zero element set and a first element in an element set are essentially non-zero elements in the matrix A, but the first non-zero element indicates all non-zero elements in the matrix A, and the first element indicates a column of non-zero elements obtained after zero removal and compression are performed on the matrix A. To distinguish the first non-zero element from the first element, different names are used in this application. Likewise, a column index set and a first index set, a second non-zero element set and a second element set, and a row index set and a second index set each have the foregoing relationship. In other words, content included in the foregoing pair is essentially the same, and is described only from different perspectives. Therefore, different names are used in this application.

It can be learned from the foregoing that a union set of all first element sets corresponding to the matrix A is the first non-zero element set, and a union set of all first index sets corresponding to the matrix A is the column index set. Likewise, a union set of all second element sets corresponding to the matrix B is the second non-zero element set, and a union set of all second index sets corresponding to the matrix B is the row index set. It should be noted that, for meanings of the first non-zero element set, the column index set, the second non-zero element set, the row index set, the first element set, the first index set, the second element set, and the second index set and relationships of the first non-zero element set and the column index set, the second non-zero element set and the row index set, the first element set and the first index set, and the second element set and the second index set in subsequent related parts, refer to related descriptions herein. Details are not described again subsequently.

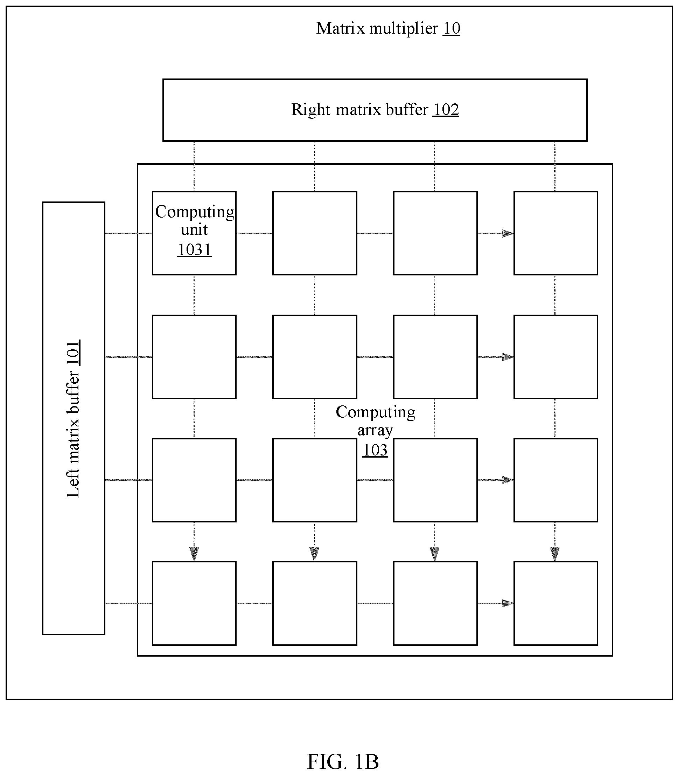

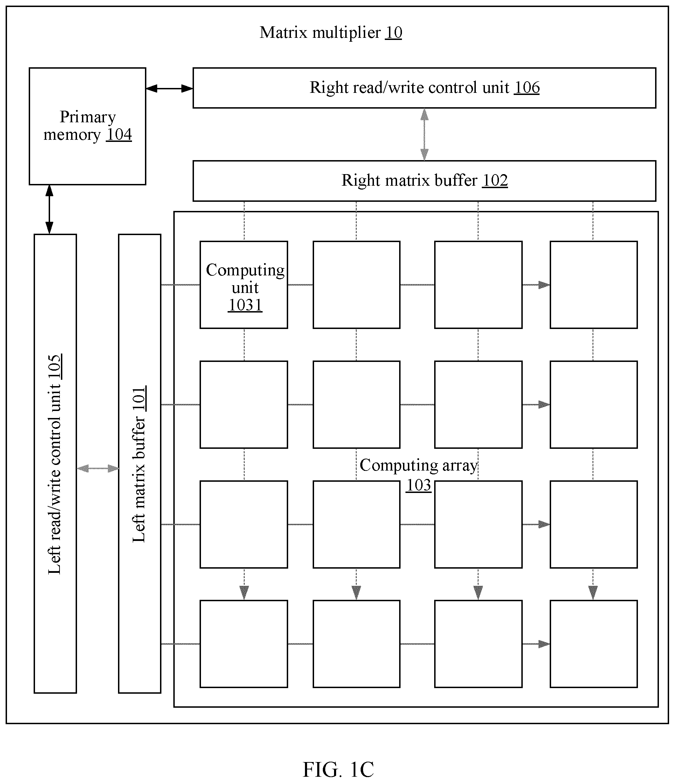

Based on the foregoing description, this application provides a matrix multiplier 10. FIG. 1B is a schematic diagram of a structure of the matrix multiplier 10 according to an embodiment of the present invention. The matrix multiplier 10 may be located inside a processor, or may be located outside the processor. When being located inside the processor, the matrix multiplier 10 may be located inside a processor core of the processor, or may be located outside the processor core, and is used as a matrix accelerator inside the processor to accelerate a matrix operation. When being located outside the processor, the matrix multiplier 10 may be coupled to the processor and process a task with the processor in parallel. The matrix multiplier 10, or the processor including the matrix multiplier 10, or the matrix multiplier 10 coupled to the processor may be located in any electronic device, and various types of devices such as a computer, a mobile phone, and a tablet. Further, the matrix multiplier 10 may be specifically a chip or a chip set or a circuit board carrying the chip or the chip set, and the chip or the chip set or the circuit board carrying the chip or the chip set may work under necessary software driving. Specifically, the matrix multiplier 10 may include a computing array 103, and optionally, may further include a left matrix buffer 101 and a right matrix buffer 102. The computing array 103 specifically includes a plurality of computing units, for example, includes at least computing units 1031 of M rows*N columns, where M and N each are an integer greater than 0. Further, optionally, FIG. 1C is a schematic diagram of a structure of another matrix multiplier 10 according to an embodiment of the present invention. In FIG. 1B, the matrix multiplier 10 may further include a primary memory 104, a left read/write control unit 105, and a right read/write control unit 106.

The primary memory 104 may be an on-chip or off-chip double-rate synchronous dynamic random access memory (DDR), a flash memory, or an on-chip buffer or an on-chip static random access memory (Static Random Access Memory, SRAM), and may be configured to store to-be-computed matrix data and a final computing result of to-be-computed matrices. Specifically, the primary memory 104 may be configured to store an initial computing matrix or a matrix obtained after processing (for example, processing such as block division or compression) in this application. For example, the primary memory 104 may store an initial complete matrix (a size may be very large in an actual application), or a partial matrix obtained after the initial matrix is divided, or a matrix obtained after zero removal and compression is performed on the initial matrix. In a possible implementation, before the to-be-computed matrix data is loaded into the primary memory 104, a zero element is removed from and compression is performed on the to-be-computed matrix data externally. For example, after compression is performed in a processor, the to-be-computed matrix data is stored into the primary memory 104. Therefore, in this implementation, the left matrix buffer 101/right matrix buffer 102 can directly obtain the to-be-computed matrix data including only a non-zero element, and further compression does not need to be performed in the left read/write control unit 105/the right read/write control unit 106 or the left matrix buffer 101/right matrix buffer 102. In another possible implementation, before the to-be-computed matrix data is loaded into the primary memory 104, a zero element is not removed and compression is not performed, that is, the primary memory stores a matrix on which zero removal and compression are not performed. In this case, corresponding zero removal and compression needs to be performed subsequently in the left read/write control unit 105/the right read/write control unit 106 or the left matrix buffer 101/right matrix buffer 102. It should be noted that the primary memory 104 may be located inside the matrix multiplier 10, that is, the matrix multiplier 10 includes the primary memory 104. Optionally, the primary memory 104 may be located outside the matrix multiplier 10, that is, the matrix multiplier 10 is coupled to the primary memory 104. This is not specifically limited in this application.

The left read/write control unit 105 is configured to: read, from the primary memory 104, data of a multiplied matrix (which may also be referred to as a left matrix A or a matrix A in this application) in the to-be-computed matrix data, and send the data to the left matrix buffer 101; and store, back to the primary memory 104, a computing result obtained after the computing unit 1031 in the computing array 103 completes computing.

The right read/write control unit 106 is configured to: read, from the primary memory 104, data of a multiplier matrix (which may also be referred to as a right matrix B or a matrix B in this application) in the to-be-computed matrix data, and send the data to the right matrix buffer 102; and store, back to the primary memory 104, a computing result obtained after the computing unit 1031 in the computing array 103 completes computing. It should be noted that the computing result may be stored back to the primary memory 104 by the left read/write control unit 105, or may be stored back to the primary memory 104 by the right read/write control unit 106, or may be returned back to the primary memory 104 by both the left read/write control unit 105 and the right read/write control unit 106. This is not specifically limited in this application. It should be further noted that, the left read/write control unit 105 and the right read/write control unit 106 may also be combined into a same read/write control unit. That is, in the matrix multiplier 10, one read/write control unit is used to control both the left matrix buffer 101 and the right matrix buffer 102, to implement related functions of the left read/write control unit 105 and the right read/write control unit 106.

The left matrix buffer 101 is configured to receive related data and column index data that are of the left matrix A and that are read by the left read/write control unit 105, that is, configured to buffer related data of the to-be-computed left matrix A. Optionally, when zero removal and compression is not performed on elements in the left matrix A, the left matrix buffer 101 receives the original matrix (or some matrix blocks in the original matrix) of the left matrix A from the left read/write control unit 105. Therefore, zero removal and compression need to be performed in the left matrix buffer 101, to obtain the first non-zero element set and the column index set in this application, or obtain a part of the first element set and a part of the first index set at once. When zero removal and compression are performed on elements in the left matrix A, the left matrix buffer 101 directly receives, from the left read/write control unit 105, the first non-zero element set and the column index set that correspond to the left matrix A, or a part of the first element set and a part of the first index set. It should be noted that, in this application, after the zero element is removed and compression is performed, storage space and a computing resource are not occupied. Then, the left matrix buffer 101 is configured to broadcast, in a manner of broadcasting first non-zero elements in different rows to each computing unit 1031 in different rows of the computing array 103, the received data of the left matrix A or the received data of the processed left matrix A, where the non-zero elements are used as left operands in each computing unit 1031, to perform subsequent computing. Broadcast by row indicates to send data to all the computing units 1031 in a same row in the computing array 103.

The right matrix buffer 102 is configured to receive related data and row index data that are of the right matrix B and that are read by the right read/write control unit 106, that is, configured to buffer related data of the to-be-computed right matrix B. Optionally, when zero removal and compression is not performed on elements in the right matrix, the right matrix buffer 102 receives the original matrix (or some matrix blocks in the original matrix) of the right matrix B from the left read/write control unit 106. Therefore, zero removal and compression needs to be performed in the right matrix buffer 102, to finally obtain the second non-zero element set and the row index set in this application, or obtain a part of the second element set and a part of the second index set once. When zero removal and compression are performed on elements in the right matrix B, the right matrix buffer 102 directly receives, from the right read/write control unit 106, the second non-zero element set and the row index set that correspond to the right matrix B, or a part of the second element set and a part of the second index set. It should be noted that, in this application, after the zero element is removed and compression is performed, storage space and a computing resource are not occupied. Then, the right matrix buffer 102 is configured to broadcast the received data of the right matrix B or the received processed data of the right matrix B, that is, the second element set and the second index set, to each computing unit 1031 of the computing array 103 by column, where the non-zero elements are used as right operands in each computing unit 1031, to perform subsequent computing. Broadcast by column indicates to send data to all the computing units 1031 in a same column in the computing array 103.

The computing array 103 is an array formed by several computing units 1031, and is configured to perform matrix computing. Specifically, the computing array 103 may be configured to receive the non-zero data and the index values that are broadcast by the left matrix buffer 101 and the right matrix buffer 102. A size of the computing array 103 is a computing array including at least computing units 1031 of M rows*N columns, that is, the size of the computing array 103 may be greater than or equal to M*N. In addition, there is no necessary limitation relationship between the size of the computing array 103 and sizes of the original left matrix (the matrix A before compression) and the original right matrix (the matrix B before compression) that are actually to be operated. In other words, a relationship between the size of the computing array 103 and the size of the computing matrix is not limited in this application. It should be noted that the matrix A and the matrix B in this application may be the original complete matrices to be computed, or may be parts of matrices obtained after splitting. For example, in actual application, sizes of matrices participating in an operation are usually large, and in particular, sizes of matrices on which a matrix operation is performed by using the matrix multiplier 10 in this application are usually large (because if the sizes are small, the operation may be completed in a processor). Therefore, when actual operation matrices are large, large matrices may be split into a plurality of block matrices of small sizes for operation in a block matrix operation manner. A specific splitting process depends on a software algorithm, but it is required that a size of a computing result of a block matrix in each operation is less than or exactly equal to the size of the computing array 103. For example, a block matrix obtained by splitting the original left matrix and a block matrix obtained by splitting the original right matrix are respectively the matrix A and the matrix B in this application. It is assumed that the size of the matrix A is M rows*K columns, and the size of the matrix B is K rows*N columns, a size of a result matrix C obtained by multiplying the matrix A and the matrix B is M*N. In this case, the computing array 103 includes at least the computing units 1031 ofM rows*N columns.

In addition, it should be noted that, in this embodiment of this application, that elements are broadcast to one row or one column of computing units in the computing array 103 may include two meanings. One is broadcast to one row of computing units or one column of computing units in the computing array 103, and the other is broadcast to one row of computing units or one column of computing units in the computing units, of M*N columns, included in the computing array 103. Optionally, the size of the computing array 103 may be greater than or equal to M*N. For simplicity or ease of description, in this embodiment of the present invention, that the elements are broadcast to a row or a column of computing units in the computing array 103 is used for description. However, actually, whether the elements are specifically broadcast to a row or a column in the entire computing array, or broadcast to a part of the entire computing array (namely, the array whose size is M*N) may be understood based on a quantity of computing units actually used when the matrix A and the matrix B are computed. For example, if the size of the result matrix is M*N, a maximum of the computing units of M rows*N columns are used in an actual operation process. Therefore, in a process of broadcasting the elements, the elements need to be broadcast to only N columns of computing units in one row or M rows of computing units in one column. Details are not described subsequently.

Based on the foregoing description, in a possible implementation, the matrices A and B may be stored in the primary memory 104 in an uncompressed form, or may be stored in a compressed form. Compressed storage forms of the matrix A and the matrix B are respectively compressed sparse column (CSC) and compressed sparse row (CSR). For example, when matrix data is stored in the primary memory 104 in an uncompressed form, the left read/write control unit 105 may first read the left matrix data from the primary memory 104, then perform compression in a form of row unchanged and column compressed, and buffer the non-zero data and the column number of the left matrix obtained after compression into the left matrix buffer 101. Likewise, the right read/write control unit 106 may first read the right matrix data from the primary memory 104, then perform compression in a form of column unchanged and row compressed, and buffer the non-zero data and the row number of the right matrix obtained after compression into the right matrix buffer 102.

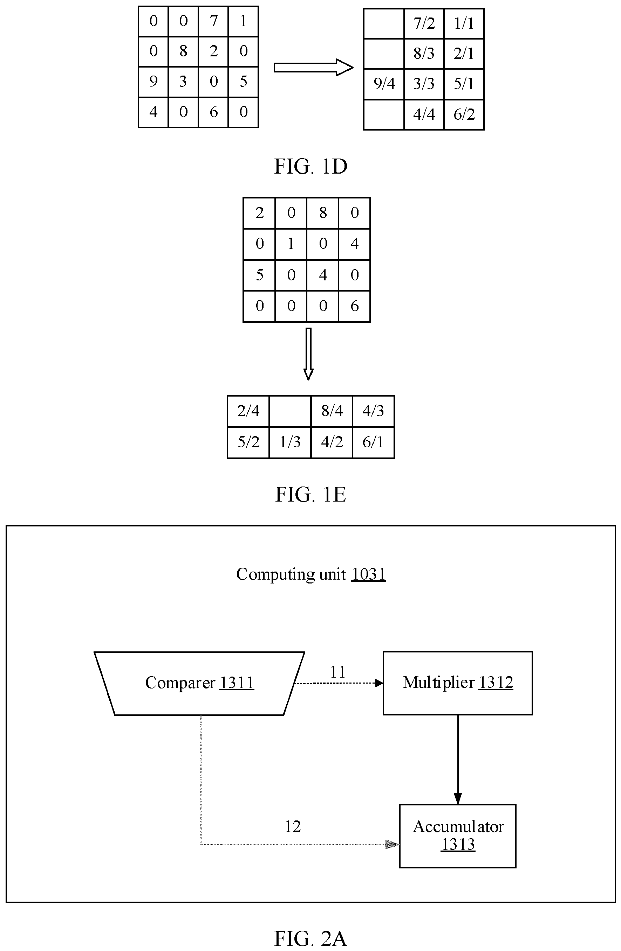

For example, FIG. 1D is a schematic diagram of compressed sparse column (CSC) according to this embodiment of the present invention. After the left matrix A of the uncompressed format is converted by the left read/write control unit 105, a format of the left matrix A in the left matrix buffer 101 is shown as follows: Raw data of the left matrix A is on the left side, a rightmost column is a first column, and a leftmost column is a fourth column. Data stored in the left matrix buffer 101 is on the right side. In data m/n, m indicates non-zero data, and n indicates a column number. Optionally, a leftmost column may be a first column, and a rightmost column may be a fourth column.

For example, FIG. 1E is a schematic diagram of compressed sparse row (CSR) according to this embodiment of the present invention. After the right matrix of the uncompressed format is converted by the right read/write control unit 106, a format of the right matrix in the right matrix buffer 102 is shown as follows: Raw data of the right matrix B is on the upper part, a lowermost row is a first row, and an uppermost row is a fourth row. Data stored in the right matrix buffer 102 is one the lower part. In data m/n, m indicates a row number of non-zero data, and n represents a row number. Optionally, an uppermost row may be a first row, and a lowermost row may be a fourth row.

It should be noted that the foregoing specific compression manner needs to meet a basic principle of matrix multiplication. For example, when the leftmost column in the left matrix is used as the first column, the uppermost row in the right matrix is correspondingly used as the first row. Likewise, when the rightmost column in the left matrix is used as the first column, the lowermost row in the right matrix is correspondingly used as the first row. That is, the basic principle of matrix multiplication needs to be met. Therefore, in this application, column indexes in the column index set may be column numbers from left to right, or may be column numbers from right to left; and row indexes in the row index set may be row numbers from top to bottom, or may be row numbers from bottom to top, provided that the basic principle of matrix multiplication computing can be met.

It should be further noted that in this application, the matrix A may be a sparse matrix or a dense matrix, and the matrix B may be a sparse matrix or a dense matrix. Embodiments of the present invention are applicable to a scenario in which the matrix A or B includes a zero element, and in particular, applicable to a computing scenario of a sparse matrix and a sparse matrix including a large quantity of zero elements.

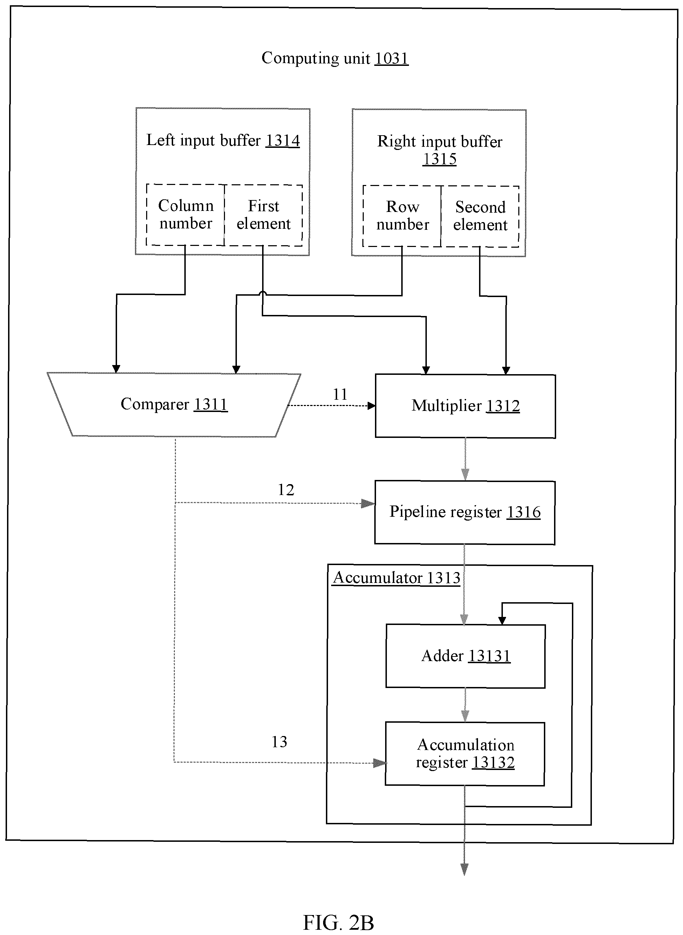

Further, optionally, each computing unit 1031 of the computing units 1031, of M rows*N columns, included in the computing array 103 is used as a basic unit for completing computing of one matrix element. FIG. 2A is a schematic diagram of a structure of a computing unit according to this embodiment of the present invention. Each computing unit 1031 includes at least a multiplier 1312 and an accumulator 1313. Optionally, FIG. 2B is a schematic diagram of a structure of another computing unit according to this embodiment of the present invention. The computing unit is further refined based on the computing unit 1031 in FIG. 2A. Each computing unit 1031 may further include a left input buffer 1314, a right input buffer 1315, and a pipeline register 1316. The accumulator 1313 may specifically include an adder 13131 and an accumulation register 13132.

The left input buffer 1314 is configured to receive the non-zero data and the index value that are broadcast by the left matrix buffer 101. Optionally, the left input buffer 1314 is a first in first out (FIFO) queue. Because each computing unit 1031 receives data from the left matrix buffer 101, but the data may be stored in different time in the computing unit 1031, the input data may be buffered in the left input buffer 1314 to avoid mutual impact between computing progresses of the computing units. This fully utilizes hardware resources and improves computing efficiency.

The right input buffer 1315 is configured to receive the non-zero data and the index value that are broadcast by the right matrix buffer 102. Optionally, the right input buffer 1315 is a first in first out (FIFO) queue. Because each computing unit 1031 receives data from the right matrix buffer 102, but the data may be stored in different time in the computing unit 1031, the input data may be buffered in the right input buffer 1315 to avoid mutual impact between computing progresses of the computing units. This fully utilizes hardware resources and improves computing efficiency.

The comparer 1311 is configured to: receive an index value of a non-zero element that is read from the left input buffer 1314 and the right input buffer 1315; or when the computing unit 1031 does not include the left input buffer 1314 and the right input buffer 1315, receive an index value of a non-zero element that is sent by the left matrix buffer 101 and the right matrix buffer 102, for example, a first index and a second index in this application; and further, compare a column index value (which may also be referred to as a column number) of non-zero data of the left matrix A with a row index value (which may also be referred to as a row number) of non-zero data of the right matrix A. A comparison result of the row index value and the column index value is used to determine whether to perform a multiplication operation in the multiplier 1312 and an accumulation operation in the accumulator 1313. For example, when the row index value is different from the column index value, no operation is performed on the two elements (namely, a first element and a second element) in the multiplier 1312, or the operation is performed on the two elements in the multiplier 1312, but an operation result of the two elements is not accumulated in the accumulator 1313, that is, the computing result in the multiplier 1312 is invalid; or when the row index value is the same as the column index value, the operation is performed on the two elements (namely, a first element and a second element) in the multiplier 1312, and an result is accumulated in the accumulator 1313, that is, the computing result in the multiplier 1312 is invalid.

The multiplier 1312 is configured to: receive the non-zero elements read from the left input buffer 1314 and the right input buffer 1315; or when the computing unit 1031 does not include the left input buffer 1314 and the right input buffer 1315, receive the non-zero elements, such as the first element and the second element, sent by the left matrix buffer 101 and the right matrix buffer 102; and perform multiplication computing. In a possible implementation, the row index value, the column index value, and the non-zero elements of the left matrix A and the right matrix B may be synchronously transmitted to the comparer 1311 and the multiplier 1312. That is, the row index value and the column index value received by the comparer 1311, and the non-zero elements, of the left matrix A and the right matrix B, received by the multiplier 1312 are synchronously transmitted. In another possible implementation, the row index value, the column index value, and the non-zero elements of the left matrix A and the right matrix B may be serially transmitted to the comparer 1311 and the multiplier 1312. That is, the comparer 1311 first receives the row index value and the column index value, and then first compares whether the row index value and the column index value are equal. If the row index value and the column index value are equal, the multiplier 1312 is controlled to receive the non-zero elements of the left matrix A and the right matrix B and perform corresponding multiplication computing.

The pipeline register 1316 is configured to: receive a computing result in the multiplier 1312, and deposit the multiplication result. Optionally, if a time sequence permits, the pipeline register may also be omitted. The pipeline register may be a register, or may be a combined logic circuit, or the like. The "time sequence" is a concept in physical implementation, and indicates that a combined logic circuit between two registers can complete a combined logic operation in a clock cycle under a current process and a physical constraint, so that output data of a previous register can reach, through the combined logic operation, a data input end of a later register before a next clock arrives.

The accumulator 1313 is configured to add the multiplication result in the multiplier 1312 and a previous accumulation result (the value in the pipeline register 1316), to complete the accumulation operation. Optionally, the accumulator 1313 may specifically include the adder 13131 and the accumulation register 13132. The adder 13131 is configured to complete accumulation of intermediate results of the elements, and the accumulation register 13132 is configured to complete accumulation of a current computing result and all previous computing results, so as to obtain a final accumulation result. That is, the accumulation register 13132 is specifically configured to receive an output of the adder 13131, and deposit the accumulation result. When all the matrix elements are computed, a final computing result is deposited. It should be noted that the accumulation register 13132 may be a register, or may be a combined logic circuit.

It should be further noted that the comparer 1311 may be coupled or connected to the multiplier 1312, the pipeline register 1316, or the accumulation register 13132 respectively by using a connection relationship 11, 12, or 13 in the figure. That is, by coupling or connecting to one of the foregoing three components, whether a current computing result of the corresponding multiplier 1312, pipeline register 1316, or accumulation register 13132 is valid may be controlled based on a condition of whether the column number is equal to the row number. For example, when the column number is unequal to the row number, the comparer 1311 may control that the multiplication operation is not performed on the two elements in the multiplier 1312 (that is, an enable signal is invalid in this case), or even if the multiplication operation is performed in the multiplier 1312, the computing result is not sent to the pipeline register 1316 for next accumulation (that is, an accumulated enable signal is invalid in this case). Alternatively, even if multiplication computing is performed in the multiplier 1312, a next step of accumulation is also performed in the pipeline register 1316, but a result corresponding to the accumulation computing result sent to the accumulation register 13132 for final accumulation is not output (that is, an accumulated enable signal is invalid in this case).

Based on the foregoing software and hardware architectures of the matrix multiplier 10, in this embodiment of the present invention, functions specifically implemented by the matrix multiplier 10 may include the following:

The computing array 103 is configured to: receive the first non-zero element set and the column index set of the left matrix A, and the second non-zero element set and the row index set of the right matrix B, where the first non-zero element set includes one or more first non-zero elements in the matrix A, the column index set includes column numbers of the one or more first non-zero elements in the matrix A, the second non-zero element set includes one or more second non-zero elements in the matrix B, and the row index set includes row numbers of the one or more second non-zero elements in the matrix B; and generate a result matrix C based on the first non-zero element set, the column index set, the second non-zero element set, and the row index set in a matrix outer product operation manner, where one result element in the result matrix C is obtained through computing by one of the plurality of computing units

This embodiment of the present invention provides the matrix multiplier. The matrix multiplier includes the computing array including the plurality of computing units. The computing array receives the non-zero elements that are obtained after zero removal and compression and correspond to the left matrix A and corresponding column numbers, and receives the non-zero elements that are obtained after zero removal and compression and correspond to the right matrix B and corresponding row numbers, and generates the result matrix C of matrix A*matrix B in the matrix outer product manner (that is, a computing manner of multiplying a column vector of the left matrix by a row vector of the right matrix), where one result element in the result matrix C is obtained through computing by one computing unit in the computing array. That is, a plurality of intermediate results of each result element are obtained by a same computing unit through computing in different clock cycles, and a value of the result element is finally obtained through accumulation. For example, specifically, a column vector obtained after zero removal and compression in the multiplied matrix A each time is multiplied by a row vector obtained after compression in the multiplier matrix B, to obtain an intermediate product (namely, an intermediate result) of a different result element in the result matrix each time through computing by a different computing unit in the computing array, obtain one result element in the result matrix through accumulation in one computing unit by using a plurality of serial operations, and finally, obtain the final result matrix by the plurality of computing units. In the conventional technology, a row vector of a multiplied matrix is multiplied by a column vector of a multiplier matrix in a matrix inner product operation manner, so that a plurality of different computing units in the computing array respectively perform operations to obtain different intermediate products (namely, intermediate results) of one result element. As a result, one result element in a result matrix needs to be computed by the plurality of computing units and then accumulated uniformly. It is assumed that an M*K matrix and a K*N matrix are multiplexed. Only K multiplications and one addition can be performed once by using one row vector of the matrix A and one column vector of the matrix B each time if the inner product operation manner in the conventional technology is used. However, different from that in the conventional technology, in this application, M*N multiplications and a corresponding plurality of accumulations can be performed once by using one column vector of the matrix A and one row vector of the matrix B. That is, in this embodiment of the present invention, utilization of reading a row vector once and a column vector once is greatly higher than that in the conventional technology. In addition, in the inner product manner in the conventional technology, when whether two received elements can be multiplied is determined, both row numbers and column numbers need to be compared, that is, comparison needs to be performed twice. In this application, two received elements only need to be compared once to determine whether the column number and the row number are equal. That is, computing efficiency in this embodiment of the present invention is higher than that in the conventional technology. Further, especially for a sparse matrix operation, in this embodiment of the present invention, zero elements in two matrices are removed. Therefore, a waste of storage or computing resources caused by the zero elements can be greatly reduced, and computing time and power consumption are greatly reduced.

In a possible implementation, each of the plurality of computing units 1031 is configured to: sequentially receive a first non-zero element, a column number, a second non-zero element, and a row number that are associated with a to-be-computed target result element; and sequentially compute, based on the received associated first non-zero element, column number, second non-zero element, and row number, at least one intermediate result corresponding to the target result element, and accumulate the at least one intermediate result to obtain a value of the target result element. For details, refer to related descriptions of a process in which the matrix multiplier 10 in this application performs the multiplication operation on the matrix A and the matrix B with reference to a specific example after specific values are subsequently assigned to the matrix A and the matrix B. In this embodiment of the present invention, specifically, each of the plurality of computing units sequentially computes, based on the first non-zero element and the second non-zero element that are associated with the target result element to be computed by the computing unit and that are received sequentially, and the corresponding column number and row number, the at least one intermediate result corresponding to the target result element, and obtains the final result of the result element through one or more times of accumulation.

In a possible implementation, each computing unit 1031 of the plurality of computing units is specifically configured to: compare the column number of the received first non-zero element with the row number of the received second non-zero element; and when the column number is equal to the row number, multiply the received first non-zero element by the received second non-zero element, and use a multiplication result as an intermediate result corresponding to the target result element to perform accumulation, until the value of the target result element is obtained. In this embodiment of the present invention, because to-be-computed elements in both the matrix A and the matrix B are compressed after an element 0 is removed, the column number and the row number of the first non-zero element and the second non-zero element that are received by the computing unit may be unequal. In this embodiment of the present invention, the computing unit (for example, a comparer in the computing unit) can determine whether the two received elements meet an operation condition (that is, whether the column number is equal to the row number), and if the condition is met, multiplication is performed on the two elements, to obtain one intermediate result of a result element. Others are obtained in a same way, until the computing unit obtains, through computing, the final result of the target result element to be computed by the computing unit.

In a possible implementation, each computing unit 1031 of the plurality of computing units is specifically configured to: when the column number is greater than the row number, compare the column number with a row number of a next received second non-zero element; or when the column number is less than the row number, compare the row number with a column number of a next received first non-zero element. In this embodiment of the present invention, because the to-be-computed elements in both the matrix A and the matrix B are compressed after the element 0 is removed, the column number and the row number of the first non-zero element and the second non-zero element that are received by the computing unit may be unequal. In this embodiment of the present invention, the computing unit (for example, the comparer in the computing unit) can determine whether the two received elements meet the operation condition (that is, whether the column number is equal to the row number), and if the condition is met, multiplication is performed on the two elements, to obtain one intermediate result of a result element; or if the column number is unequal to the row number, there are two cases: The column number is greater than the row number; or the row number is greater than the column number. When the column number is greater than the row number, the first non-zero element whose column number is greater is reserved, and the second non-zero element whose row number is smaller is cleared, and the operation is performed on the next second element whose row number is equal to the column number. Likewise, when the row number is greater than the column number, the second non-zero element whose row number is greater is reserved, and the first non-zero element whose column number is smaller is cleared, and the operation is performed on the next first non-zero element whose column number is equal to the row number. A reason is as follows: After zero removal is performed on the matrices, some column numbers are unequal to row numbers, and some elements may be empty (that is, an element multiplied by the part of elements is originally zero, but a result is not affected by multiplying the part of elements by 0, and therefore, empty may be actually generated without computing). Therefore, when the column number is unequal to the row number, an element with a smaller row number or column number is discarded, an element with a larger row number or column number continues to be stored, until an element with a row number or a column number same as the row number or the column number appears, and then multiplication computing is performed.

In a possible implementation, the matrix multiplier 10 further includes a left matrix buffer 101 and a right matrix buffer 102; and the plurality of computing units are computing units 1031 of M rows*N columns, where M is a positive integer, and N is a positive integer; the left matrix buffer is configured to: store the first non-zero element set and the column index set of the matrix A; and broadcast, in different clock cycles, different first non-zero elements in a same row in the matrix A and corresponding column numbers to a same row of computing units in the computing units of M rows*N columns; and the right matrix buffer is configured to: store the second non-zero element set and the row index set of the matrix B; and broadcast, in the different clock cycles, different second non-zero elements in a same column in the matrix B and corresponding row numbers to a same column of computing units in the computing units of M rows*N columns. In this embodiment of the present invention, different first non-zero elements in a same row in the matrix A are broadcast, in different clock cycles, to a same row of computing units 1031 in the computing units 1031 of M rows*N columns, and different second non-zero elements in a same column in the matrix B are broadcast, in different clock cycles, to a same column of computing units in the computing units of M rows*N columns. Therefore, a computing unit can obtain, in a plurality of clock cycles, a plurality of intermediate results of a result element in the result matrix through serial computing, and finally obtain the final result (namely, a result obtained by multiplying non-zero elements in a row of the matrix A by non-zero elements in a column of the matrix B and accumulation) of the result element by accumulating the plurality of intermediate results.

In a possible implementation, the left matrix buffer 101 is further configured to broadcast first non-zero elements in different rows in the matrix A and corresponding column numbers to different rows of computing units in the computing units of M rows*N columns; and the right matrix buffer 102 is further configured to broadcast second non-zero elements in different columns in the matrix B and corresponding row numbers to different columns of computing units in the computing units of M rows*N columns. In this embodiment of the present invention, the matrix outer product computing manner is used. Therefore, for non-zero elements in the matrix A that are obtained after zero removal, different first non-zero elements in different rows are broadcast to different rows of computing units, and for non-zero elements in the matrix B that are obtained after zero removal, different second non-zero elements in different columns are broadcast to different columns of computing units, so as to perform a parallel operation on intermediate results of a plurality of to-be-computed result elements in the result matrix C. This implements a function of obtaining the result matrix through computing in the matrix outer product computing manner. Further, a column of non-zero elements in the matrix A that are compressed by row may be broadcast to different rows of computing units based on different first non-zero elements in different rows, and a row of non-zero elements in the matrix B that are compressed by column may be broadcast to different columns of computing units based on different second non-zero elements in different columns. This implements the function of efficiently obtaining the result matrix through computing in the outer product computing manner.

In a possible implementation, the left matrix buffer 101 is specifically configured to: when first non-zero elements in all computing units in an x^{th} row in the computing units of M rows*N columns are computed, broadcast, in an order of column numbers, a first non-zero element in a next column in a same row in the matrix A and a corresponding column number to all computing units in the x^{th} row, where x=(1, ..., M); the right matrix buffer 102 is specifically configured to: when second non-zero elements in all computing units in a y^{th} column in the computing units of M rows*N columns are computed, broadcast, in an order of row numbers, a second non-zero element in a next row in a same column in the matrix B and a corresponding row number to all computing units in the y^{th} column, where y=(1, ..., N). In this embodiment of the present invention, for the left matrix buffer, the left matrix buffer is triggered, based on a condition that all computing units in each row of computing units in the computing units of M rows*N columns complete computing, to broadcast next first non-zero elements and corresponding column numbers to the entire row of computing units. Likewise, for the right matrix, the right matrix buffer is triggered, based on a condition that all computing units in each column of the computing units of M rows*N columns complete computing, to broadcast next second non-zero elements and corresponding row numbers to the entire column of computing units.

In a possible implementation, the left matrix buffer 101 is specifically configured to: when a first non-zero element in any computing unit in an x^{th} row in the computing units of M rows*N columns is computed, broadcast, in an order of column numbers, a first non-zero element in a next column in a same row in the matrix A and a corresponding column number to all computing units in the x^{th} row, where x=(1, ..., M); the right matrix buffer 102 is specifically configured to: when a second non-zero element in any computing unit in a y^{th} column in the computing units of M rows*N columns is computed, broadcast, in an order of row numbers, a second non-zero element in a next row in a same column in the matrix B and a corresponding row number to all computing units in the y^{th} column, where y=(1, ..., N). In this embodiment of the present invention, for the left matrix buffer, the left matrix buffer is triggered, based on a condition that any computing unit of each row of computing units in the computing units of M rows*N columns completes computing, to broadcast next first non-zero elements and corresponding column numbers to the entire row of computing units. Likewise, for the right matrix buffer, the right matrix buffer is triggered, based on a condition that any computing unit of each column of computing units in the computing units of M rows*N columns completes computing, to broadcast next second non-zero elements and corresponding row numbers to the entire column of computing units.

In a possible implementation, each computing unit 1031 of the plurality of computing units is specifically configured to: receive and buffer the first non-zero element and the corresponding column number that are broadcast by the left matrix buffer; receive and buffer the second non-zero element and the corresponding row number that are broadcast by the right matrix buffer; and compute the received first non-zero element and the received second non-zero element in a first in first out manner. In this embodiment of the present invention, each computing unit is specifically configured to: receive and buffer the first non-zero element and the corresponding column number that are broadcast by the left matrix buffer; receive the second non-zero element and the corresponding row number that are broadcast by the right matrix buffer; and compute the received first non-zero element and the received second non-zero element in the first in first out manner. Optionally, for example, each computing unit may further include a left input buffer and a right input buffer, respectively configured to receive and buffer the first non-zero element and the column number that are broadcast by the left matrix buffer, and receive the second non-zero element and the row number that are broadcast by the right matrix buffer. The left input buffer sends the first non-zero element to the multiplier and sends the corresponding column number to a comparer in a first in first out manner, and the right input buffer sends the second non-zero element to the multiplier and sends the corresponding row number to the comparer in the first in first out manner. It may be understood that the left input buffer or the right input buffer may receive a plurality of elements and indexes that are sent by the left matrix buffer or the right matrix buffer, that is, may buffer a plurality of pairs of elements and indexes, but sequentially send the elements to the multiplier and indexes to the comparer based on an actual computing situation during specific computing. The left input buffer and the right input buffer, as buffers inside the computing unit, can increase a quantity of matrix elements stored inside the computing unit, help reduce a quantity of times that the computing unit obtains an element and an index from an external left matrix buffer or right matrix buffer, improve computing efficiency, and reduce power consumption.

In a possible implementation, each computing unit 1031 of the plurality of computing units is further configured to: send, in a next clock cycle, the currently buffered first non-zero element and corresponding column number to a next column computing unit in a same row; and send, in the next clock cycle, the currently buffered second non-zero element and corresponding row number to a next row computing unit in a same column. In this embodiment of the present invention, for a first non-zero element buffered by each of the computing units of M rows*N columns, a first non-zero element buffered in a previous column of computing units in each row of computing units may be transferred, in the next clock cycle, to the next column of computing units in a pulse manner. Likewise, for a second non-zero element buffered in each of the computing units of M rows*N columns, a second non-zero element buffered in a computing unit in a previous row of computing units in each column of computing units is transferred to the next row of computing units in the next clock cycle in the pulse manner. Therefore, in the pulse "relay" manner, the first non-zero element is transferred to each column computing unit in one row of computing units one by one, or the second non-zero element is transferred to each row computing unit in one column of computing units in the computing array one by one.

Optionally, for example, for the first non-zero element buffered in the left input buffer of each of the computing units of M rows*N columns, first non-zero elements buffered in left input buffers of a previous column of computing units in each row of computing units are transferred, in the next clock cycle, to left input buffers of a next column of computing units in the pulse manner. Likewise, for the second non-zero element buffered in the right input buffer of each of the computing units of M rows*N columns, second non-zero elements buffered in right input buffers of a previous row of computing units in each column of computing units are transferred, in the next clock cycle, to right matrix buffers of a next row of computing units in the pulse manner. Therefore, in the pulse "relay" manner, the first non-zero element is transferred to each column computing unit in one row of computing units one by one, or the second non-zero element is transferred to each row computing unit in one column of computing units one by one.

In a possible implementation, the computing array further includes row registers of M rows*(N-1)/a columns and column registers of (M-1)/b rows*N columns, where a is an integer greater than or equal to 1, and b is an integer greater than or equal to 1;
the left matrix buffer is specifically configured to broadcast the first non-zero element and the corresponding column number to a first column computing unit of one row of computing units in the computing units of M rows*N columns, and a first column row register of one row of row registers;
the right matrix buffer is specifically configured to broadcast the second non-zero element and the corresponding row number to a first row computing unit of one column of computing units in the computing units of M rows*N columns, and a first row column register of one column of column registers;
each row register is coupled to a 1-row*a-column computing unit, and is configured to: buffer the first non-zero element and the corresponding column number that are sent by the left matrix buffer or a previous row register, and send, in the next clock cycle, the first non-zero element and the corresponding column number to the 1-row*a-column computing unit and a next row register; and
each column register is coupled to a b-row*1-column computing unit, and is configured to: buffer the second non-zero element and the corresponding row number that are sent by the right matrix buffer or a previous column register, and send, in the next clock cycle, the second non-zero element and the corresponding row number to the b-row*1-column computing unit and a next column register.

In this embodiment of the present invention, a plurality of registers are disposed in the computing array, so that the first non-zero element or the second non-zero element is buffered in a broadcast process. Specifically, one row register is set to be coupled to a computing units, and is configured to: buffer a first non-zero element and a corresponding column number that are received by the row register, and broadcast the first non-zero element and the corresponding column number to a next row register and the a computing units that are coupled to the row register. Likewise, one column register is set to be coupled to b computing units, and is configured to: buffer a second non-zero element and a corresponding row number that are received by the column register, and broadcast the second non-zero element and the corresponding row number to a next column register and the b computing units that are coupled to the column register. A reason is as follows: The first non-zero element or the second non-zero element cannot reach each computing unit of one row of computing units or one column of computing units in the computing units of M rows*N columns in one clock cycle (mainly because distances from different computing units to matrix buffers are different, and when a size of the computing array is large, a same data broadcast task cannot be completed in the same clock cycle). Therefore, the register is added between the computing units, to send, one clock cycle by one clock cycle, the first non-zero elements or the second non-zero elements buffered in the register to a columns of computing units or b rows of computing units coupled to the register, so as to gradually transfer, in a register "relay" manner, the first non-zero elements to all computing units in a row in the computing units of M rows*N columns, or the second non-zero elements to all computing units in a column in the computing units of the M rows*N columns.

In a possible implementation, each of the plurality of computing units is further configured to: clear, when the received first non-zero element has participated in computing of the intermediate result corresponding to the target result element, the first non-zero element that has participated in the computing and the corresponding column number; and clear, when the received second non-zero element has participated in computing of the intermediate result corresponding to the target result element, the second non-zero element that has participated in the computing and the corresponding row number. In this embodiment of the present invention, if a column number corresponding to a first non-zero element received by a computing unit is equal to a row number corresponding to a second non-zero element, multiplication computing is completed on the elements in the computing unit to obtain an intermediate result corresponding to the target result element (for example, a multiplication operation is performed on the elements in the multiplier and a corresponding computing result is sent to an accumulator). In this case, a function of the first non-zero element in the matrix multiplication computing has been completed (because each associated element is computed only once in each result element according to a matrix multiplication rule). For example, when a multiplication operation has been performed on one first non-zero element or one second non-zero element in a multiplier of a corresponding computing unit, and a computing result of the first non-zero element or the second non-zero element has been sent to an accumulator, it indicates that a function of the first non-zero element or the second non-zero element has been completed. Therefore, after the function of the element is completed, the element needs to be cleared in the computing unit, for example, in the left input buffer or the right input buffer. Alternatively, when the column number corresponding to the first non-zero element received by the computing unit is unequal to the row number corresponding to the second non-zero element, in this case, it indicates that after zero removal and compression are performed on the matrices, the first non-zero element in the matrix A and the second non-zero element in the corresponding matrix B are zero, or the second non-zero element in the matrix B and the first non-zero element in the corresponding matrix A are zero. Therefore, computing does not need to be performed until a matchable element is found.

Further, based on the foregoing software and hardware architectures of the matrix multiplier 10, in embodiments of the present invention, a function specifically implemented by the matrix multiplier 10 is described from a perspective of an element broadcast time sequence, that is, the first non-zero element set is split into a plurality of first element sets from the perspective of the sending or broadcast time sequence, and a second non-zero element set is split into a plurality of second element sets from the perspective of the sending or broadcast time sequence.

The left matrix buffer 101 is configured to store a first element set and a first index set that correspond to the matrix A, where A is an M*K matrix, the first element set includes S first elements, the S first elements each are an i^{th} non-zero element in each of S rows in the matrix A, the first index set includes column numbers of columns of the S first elements in the matrix A, S is a positive integer less than or equal to M, and i is a positive integer less than or equal to K; and the left matrix buffer 101 is further configured to broadcast each of the S first elements and a column number of each first element to one row of computing units 1031 in the computing array 103, where when i is different values, first elements in a same row are broadcast to a same row of computing units 1031.

The right matrix buffer 102 is configured to store a second element set and a second index set that correspond to the matrix B, where B is a K*N matrix, the second element set includes T second elements, the T second elements each are a j^{th} non-zero element in each of T columns in the matrix B, the second index set includes row numbers of rows of the T second elements in the matrix B, T is a positive integer less than or equal to N, and j is a positive integer less than or equal to K; and the right matrix buffer 102 is further configured to broadcast each of the T first elements and a row number of each second element to one column of computing units 1031 in the computing array 103, where when j is different values, second elements in a same column are broadcast to a same column of computing units 1031.

Each computing unit 1031 in the computing array 103 includes the comparer 1311, the multiplier 1312, and the accumulator 1313.

The comparer 1311 is configured to compare a column number of a received first element with a row number of a received second element.

The multiplier 1312 is configured to: When the column number of the received first element is equal to the row number of the received second element, multiply the received first element by the received second element, and send a computing result to the accumulator.

The accumulator 1313 is configured to accumulate computing results in the multiplier 1312 to obtain an operation result of the computing unit 1031.

The first element set represents a column of elements in the matrix A that are obtained after zero removal and compression are performed in a row direction. To be specific, after zero elements in each row in the matrix A are removed, the non-zero elements are compressed in descending order of row numbers, to obtain one or more columns of elements. Each column of elements in the one or more columns of elements is the first element set in this application. Each first element set includes S first elements, and S may be equal to or less than M, because after zero removal and compression are performed, a column of elements may be equal to or less than M elements. For a case in which the column of elements is less than M elements (that is, S is less than M), it indicates that the compressed column of elements includes S non-zero elements and (M-S) zero elements. Likewise, the second element set represents a row of elements in the matrix B that are obtained after zero removal and compression are performed in a column direction. To be specific, after zero elements in each column in the matrix B are removed, the non-zero elements are compressed in descending order of column numbers, to obtain one or more rows of elements. Each row of elements in the one or more rows of elements is the second element set in this application. Each second element set includes T second elements, and T may be equal to or less than N, because after zero removal and compression are performed, a row of elements may be equal to or less than N elements. For a case in which the row of elements is less than N elements (that is, T is less than N), it indicates that the compressed row of elements includes T non-zero elements and (N-T) zero elements.

Embodiments of the present invention provide a multiplier structure and a computing manner for implementing two-dimensional matrix computing, which specifically include designs for a hardware structure and a software computing method. From a perspective of hardware, the multiplier includes the left matrix buffer configured to buffer a to-be-computed element in the multiplier matrix A, the right matrix buffer configured to buffer a to-be-computed element in the multiplier matrix B, and the computing units of M rows*N columns configured to perform matrix computing. Each computing unit includes the comparer, the multiplier, and the accumulator. Specifically, the comparer compares the row number and the column number of the two received elements, the multiplier multiplies two elements that meet a condition, and finally, the accumulator accumulates computing results in the multiplier, to obtain a result element in a result matrix. From a perspective of software, the left matrix buffer broadcasts, in a manner of broadcasting each element and a column number corresponding to each element to a row of computing units in the computing array, a column of to-be-computed elements after zero removal and compression in the matrix A and column numbers corresponding to the elements. The right matrix buffer broadcasts, in a manner of broadcasting each element and a row number corresponding to each element, a row of to-be-computed elements after zero removal and compression in the matrix B and row numbers corresponding to the elements. Each computing unit in the computing array separately receives the to-be-computed elements in the matrix A and the matrix B. Because the to-be-computed elements in the matrix A and the matrix B are compressed after a zero element is removed, the column number of the selected one column element and the row number of the selected one row element may not be equal. In this embodiment of the present invention, the comparer in the computing unit determines whether the two received elements meet an operation condition (that is, whether the column number and the row number are equal), and if the condition is met, multiplication is performed. Further, elements in a same row in the matrix A are broadcast to the same row of computing units in the computing array in different clock cycles, and second elements in a same column in the matrix B are broadcast to the same column of computing units in the computing array in the different clock cycles. Therefore, a computing unit can obtain, in a plurality of clock cycles, a result (namely, a result element in the result matrix) of accumulation on results obtained after multiplying a row of non-zero elements in the matrix A by a column of non-zero elements in the matrix B through serial computing.

In conclusion, in this embodiment of the present invention, a column of compressed vectors in the multiplier matrix A are multiplied by a row of compressed vectors in the multiplier matrix B each time in a matrix outer product manner, so that different computing units in the computing array can obtain, through computing, intermediate products of different result elements in the result matrix each time, and one computing unit can obtain, through accumulation, one result element in the result matrix through a plurality of times of serial operations, and finally the plurality of computing units obtain the final result matrix through computing. In the conventional technology, a row vector of a multiplied matrix is multiplied by a column vector of a multiplier matrix in an inner product manner, so that a plurality of different computing units in a computing array respectively perform operations to obtain different intermediate products of one result element. As a result, one result element in a result matrix needs to be computed by the plurality of computing units and then accumulated uniformly. It is assumed that an M*K matrix and a K*N matrix are multiplexed. Only K multiplications and one addition can be performed once by using one row vector of the matrix A and one column vector of the matrix B each time if the inner product operation manner in the conventional technology is used. However, different from that in the conventional technology, in this application, M*N multiplications and a corresponding plurality of accumulations can be performed once by using one column vector of the matrix A and one row vector of the matrix B. That is, in this embodiment of the present invention, utilization of reading a row vector once and a column vector once is greatly higher than that in the conventional technology. In addition, in the inner product manner in the conventional technology, when whether two received elements can be multiplied is determined, both row numbers and column numbers need to be compared, that is, comparison needs to be performed twice. In this application, two received elements only need to be compared once to determine whether the column number and the row number are equal. That is, computing efficiency in this embodiment of the present invention is higher than that in the conventional technology. Further, especially for a sparse matrix operation, in this embodiment of the present invention, zero elements in two matrices are removed. Therefore, a waste of storage or computing resources caused by the zero elements can be greatly reduced, and computing time and power consumption are greatly reduced.

In the conventional technology, if an operation on any two sparse matrices is performed in a general-purpose processor, only a vector unit can be used, and sparseness of matrices cannot be used. However, if a two-dimensional array is used to compute a sparse matrix in an outer product manner that is the same as that of computing a dense matrix, a required computing instruction or a required number of periods is totally determined by a size of the matrix. For example, if multiplication of two 4*4 sparse matrices is computed by using a 4*4 computing array 103, only one multiplication accumulation computing may be completed each time in the conventional technology. However, if the multiplication is computed by using the matrix multiplier 10 in embodiments of the present invention, 16 times of multiplication accumulation computing can be completed each time. In addition, when multiplication computing with an operand of 0 is performed, a multiplication register and an accumulation register can be disabled. This reduces power consumption. Therefore, in embodiments of the present invention, the matrices have higher sparseness, and the matrix multiplier 10 has a more obvious reduction of computing time and power consumption. In addition, in embodiments of the present invention, because zero removal is performed on elements in the left matrix and the right matrix that participate in the operation, that is, sparseness of the left matrix and the right matrix is fully used, it is unnecessary to determine, by knowing or collecting statistics on sparseness of the matrices in advance, which matrix is used as the left matrix or the right matrix, thereby greatly improving computing efficiency.

In addition, in embodiments of this application, each computing unit only compares a column number in the left matrix with a row number in the right matrix according to the element broadcast rule. However, in the conventional technology, each computing unit not only compares a column number in the left matrix with a row number in the right matrix, but also compares a row number in the left matrix with a column number in the right matrix. Therefore, each computing unit needs to have two comparers in the conventional technology, but only one comparer is required in embodiments of the present invention.

In a possible implementation, the left matrix buffer 101 is specifically configured to broadcast first elements that are in an x^{th} row in the matrix A and in the S first elements and corresponding column numbers to the computing units 1031 in an x^{th} row in the computing array 103, where x=(1, ..., M); and the right matrix buffer 102 is specifically configured to broadcast second elements that are in a y^{th} column in the matrix B and in the T second elements and corresponding row numbers to the computing units 1031 in a y^{th} column of the computing array 103, where y=(1, ..., N). When the left matrix buffer 101 specifically broadcasts the first element+column number and the right matrix buffer 102 specifically broadcasts the second element+row number, it may be determined, based on a row in which the first element is located in the matrix A and a column in which the second element is located in the matrix B, to broadcast the plurality of first elements in the first element set to corresponding rows in the computing array 103 based on the rows in which the first elements are located, and likewise, to broadcast the plurality of second elements in the second element set to corresponding columns in the computing array 103 based on the columns in which the second elements are located, to perform the matrix multiplication operation in the outer product operation manner.

In embodiments of the present invention, based on location relationships of the first elements in the first element set in the matrix A and location relationships of the second elements in the second element set in the matrix B, the first elements and the second elements are mapped to corresponding locations of the computing units of M rows*N columns in the computing array. Specifically, after the elements in the matrix A are compressed in a row direction, the elements are broadcast to the computing units 1031 of a corresponding row in the computing array 103 based on a location of the row of the elements in the matrix; and after the elements in the matrix B are compressed in a column direction, the elements are broadcast to the computing units 1031 of a corresponding column in the computing array 103 based on a location of the column of the elements in the matrix. For example, a first element in a first row in the matrix A is broadcast to computing units 1031 in a first row of the computing array 103; likewise, a first element in a first column in the matrix B is broadcast to computing units 1031 in a first column of the computing array 103; and the rest elements are broadcast in a similar way. Details are not described herein again. That is, a location of a computing result (namely, a result element) in the result matrix is indicated by using a location of a computing unit 1031 in the computing array 103. This is different from the conventional technology in which a large quantity of processing resources is wasted because a location of each result element needs to be obtained by using a row number in the matrix A and a column number in the matrix B.

In a possible implementation, i is successively 1, 2, ..., and K, and j is successively 1, 2, ..., and K. The comparer 1311 is specifically configured to: compare a column number of a received first element with a row number of a received second element; and when the column number is greater than the row number, compare the column number with a row number of a next received second element; or when the column number is less than the row number, compare the column number with a row number of a next received first element. Specifically, based on data movement control of the left matrix buffer 101 and the right matrix buffer 102, the first elements in S rows of the matrix A when i is different values and the corresponding column numbers are broadcast, and the second elements in T columns of the matrix B when j is different values and the corresponding row number are broadcast. Therefore, each computing unit 1031 in the computing array 103 receives the corresponding first elements, the corresponding column numbers, the corresponding second elements, and the corresponding row numbers, performs computing on the first element and the second element that meet a condition, and obtains a computing result. S first elements included in the first element set are not a column of original elements in the matrix A, but a column of elements obtained after zero removal and compression. Therefore, column numbers of all first elements in the first element set are not necessarily equal, and likewise, row numbers of all second elements in the second element set are not necessarily equal. Therefore, after receiving the first element from the matrix A and the second element from the matrix B, a computing unit 1031 in the computing array 103 needs to first compare whether the two elements meet a multiplication condition of the matrix elements, that is, compare whether the column number of the first element and the row number of the second element (briefly referred to as a column number and a row number subsequently) are equal. If the column number and the row number are equal, an operation can be performed; or if the column number and the row number are unequal, there are two cases: The column number is greater than the row number, or the row number is greater than the row number. When the column number is greater than the row number, the first element with the larger column number is reserved, the second element with the smaller row number is cleared, and an operation is performed after the next second element with a row number equal to the column number of the first element. Likewise, when the row number is greater than the column number, the second element with the larger row number is reserved, the first element with the smaller column number is cleared, and an operation is performed after the next first element with a column number equal to the row number of the second element. A reason is as follows: After zero removal is performed on the matrices, some column numbers are unequal to row numbers, and some elements may be empty (that is, an element multiplied by the part of elements is originally zero, but a result is not affected by multiplying the part of elements by 0, and therefore, empty may be actually generated without computing). Therefore, when the column number is unequal to the row number, an element with a smaller row number or column number is discarded, an element with a larger row number or column number continues to be stored, until an element with a row number or a column number same as the row number or the column number appears, and then multiplication computing is performed.

In a possible implementation, each computing unit 1031 further includes the left input buffer 1314 and the right input buffer 1315. The left matrix buffer 101 is specifically configured to broadcast each of the S first elements and the corresponding column number to the left input buffer 1314 of each computing unit 1031 in one row of computing units 1031 in the computing array. The right matrix buffer 102 is specifically configured to broadcast each of the T second elements and the corresponding row number to the right input buffer 1315 of each computing unit 1031 in one column of computing units 1031 in the computing array. The left input buffer 1314 is configured to: receive and buffer the first element and the corresponding column number that are broadcast by the left matrix buffer 101, and send, in a first in first out manner, the buffered first element to the multiplier 1312 and the corresponding column number to the comparer. The right input buffer 1315 is configured to: receive and buffer the second element and the corresponding row number that are broadcast by the right matrix buffer 102, and send, in the first in first out manner, the buffered second element to the multiplier 1312 and the corresponding row number to the comparer.

Specifically, after each computing unit 1031 in the computing array 103 receives the first element+column number and the second element+row number, the comparer 1311 in the computing unit 1031 compares the column number of the first element with the row number of the second element. Based on the outer product computing manner in this application and according to the matrix multiplication computing rule, only when the column number of the first element is equal to the row number of the second element, the current first element and the second element can be multiplied. When each computing unit 1031 in the computing array 103 includes the left input buffer 1314 and the right input buffer 1315, when receiving the first element sent by the external left matrix buffer 101 or the second element sent by the right matrix buffer 102, the computing unit 1031 may temporarily store the first element and the second element in the computing unit 1031. In addition, optionally, the left input buffer 1314 or the right input buffer 1315 may store the plurality of first elements or second elements and corresponding column numbers or row numbers. In other words, because a plurality of elements may be buffered, a next element may be received and stored when computing of a previous element is not completed. For example, the left input buffer 1314 may store a plurality of first elements when i is different values. When computing of a previous first element is not completed, a next first element may be sent to the left input buffer 1314 for buffering. When computing of the previous first element is completed, the next first element stored in the left input buffer 1314 may be sent to the comparer 1311 for comparison. Further, when the column number of the first element and the row number of the second element are unequal in a process in which the comparer 1311 compares the column number of the first element and the row number of the second element, an element corresponding to a smaller absolute value needs to be cleared. For example, in a round of comparison, when the column number of the first element is less than the row number of the second element, it indicates that the first element does not need to participate in an operation in this round of operation, and does not participate in a subsequent operation. Therefore, the first element stored in the left input buffer 1314 needs to be cleared, so as to release buffer space for a next first element.

FIG. 3A-1 to FIG. 3A-4 are a schematic diagram of reading matrix elements in a first in first out manner according to this embodiment of the present invention. The left input buffer 1314 and the right input buffer 1315 in the computing unit 1031 may read buffered data in a first in first out (FIFO) manner, and may buffer an operand when the computing unit 1031 cannot read a next operand (the first element or the second element). In addition, the left read/write control unit 105 and the right read/write control unit 106 continue to read data from the primary memory 104 and store the data in the left matrix buffer 101 and right matrix buffer 102. After the data is broadcast, data input to the left data buffer 1314/the right data buffer 1315 in each computing unit 1031 is shown in FIG. 3A-1 to FIG. 3A-4. The left input buffer 1314 in each computing unit 1031 in FIG. 3A-1 to FIG. 3A-4 buffers a plurality of pairs (four pairs are used as an example in FIG. 3A-1 to FIG. 3A-4) of first elements and corresponding column numbers. The right input buffer 1315 in each computing unit 1031 in FIG. 3A-1 to FIG. 3A-4 buffers a plurality of pairs (four pairs are used as an example in FIG. 3A-1 to FIG. 3A-4) of second elements and corresponding row numbers. If values of idx are 0, 1, 2, and 3 respectively, the left input buffer 1314 first reads a corresponding column number and non-zero value (namely, a first element) when idx is 0; then after reading the corresponding column number and non-zero value when idx is 0, reads a corresponding column number and non-zero value when idx is 1; and reads rest data in a similar way. Likewise, the right matrix buffer 1315 first reads a corresponding row number and non-zero value (namely, a second element) when idx is 0; and after reading the corresponding row number and non-zero value when idx is 0, then reads a corresponding row number and non-zero value when idx is 1.

In this embodiment of the present invention, each computing unit may further include the left input buffer and the right input buffer. The left input buffer is configured to: receive and buffer the first element and the first index that are broadcast by the left matrix buffer, and send, in the first in first out manner, the first element to the multiplier and the corresponding column index to the comparer. The right input buffer is configured to: receive the second element and the second index that are broadcast by the right matrix buffer; and send, in the first in first out manner, the second element to the multiplier and the corresponding row index to the comparer. It may be understood that the left input buffer or the right input buffer may receive a plurality of elements and indexes that are sent by the left matrix buffer or the right matrix buffer, that is, may buffer a plurality of pairs of elements and indexes, but sequentially send the elements to the multiplier and indexes to the comparer based on an actual computing situation during specific computing. The left input buffer and the right input buffer, as buffers inside the computing unit, can increase a quantity of matrix elements stored inside the computing unit, help reduce a quantity of times that the computing unit obtains an element and an index from an external left matrix buffer or right matrix buffer, improve computing efficiency, and reduce power consumption.

Further, optionally, the left input buffer 1314 is further configured to clear a target first element and a corresponding column number when a computing result corresponding to the target first element that is sent to the multiplier 1312 is sent to the accumulator 1313. The left input buffer 1314 is further configured to clear a target second element and a corresponding row number when a computing result corresponding to the target second element that is sent to the multiplier 1312 is sent to the accumulator 1313.

In this embodiment of the present invention, if the column number corresponding to the first element received by the computing unit is equal to the row number corresponding to the second element, the multiplication operation is performed on the elements in the multiplier and the corresponding computing result is sent to the accumulator. In this case, a function of the first element in the matrix multiplication computing has been completed (because each element is computed only once in each result element according to a matrix multiplication rule). Therefore, when a multiplication operation has been performed on one first element or one second element in a corresponding computing unit, and a computing result corresponding to the first element or the second element has been sent to the accumulator, it indicates that a function of the first element or the second element has been completed. Therefore, after a function of an element is completed, the element needs to be cleared from the left input buffer or the right input buffer, and the left input buffer 1314 or the right input buffer 1315 is notified to input a next element. Alternatively, when the column number corresponding to the first element received by the computing unit is unequal to the row number corresponding to the second element, in this case, it indicates that after zero removal and compression are performed on the matrices, the first element in the matrix A and the second element in the corresponding matrix B are zero (the column number is less than the row number). In this case, the left input buffer 1314 is notified to input a next first element, until a matchable first element is found. Alternatively, the second element in the matrix B and the first element in the corresponding matrix A are zero (the column number is greater than the row number). Therefore, computing does not need to be performed, and in this case, the right input buffer 1315 needs to input a next second element, until a matchable second element is found.

In this application, before computing is performed on the matrix A and the matrix B, zero removal and compression need to be performed first. Specifically, how to perform zero removal and compression on the matrix A and the matrix B may include the following several specific implementations:
Manner 1: Zero removal and compression are performed on the matrix A and the matrix B in the primary memory 104.

Specifically, the matrix multiplier 10 further includes:
the left read/write control unit 105, configured to: obtain e first element sets corresponding to the matrix A and corresponding e first index sets from the primary memory 104, and send the e first element sets and the corresponding e first index sets to the left matrix buffer, where the e first element sets are e first element sets when i is 1, 2, ..., K, and e is an integer less than or equal to K; and
the right read/write control unit 106, configured to obtain f second element sets corresponding to the matrix B and corresponding f second index sets from the primary memory 104, and send the f second element sets and the corresponding f second index sets to the right matrix buffer, where the f second element sets are f second element sets when i is 1, 2, ..., K, and f is an integer less than or equal to K.

Each first element set is a corresponding column of first elements when i is 1, 2, ..., K, and e may be equal to K or may be less than K. For example, it is assumed that after zero removal and compression are performed, the matrix A is changed to (K-1) columns or (K-2) columns of elements, in this case, a maximum value of e may be K-1 or K-2. Areason is that the left read/write control unit 105 may obtain some column elements only from the (K-1) or (K-2) columns of elements. When some column elements are obtained, e is less than K-1 or K-2. When all column elements are obtained, e is K-1 or K-2. Likewise, f may be equal to or less than K. A reason is similar to a value range of e, and details are not described herein again. It may be understood that e and f may be equal or unequal. This is not specifically limited in embodiments of the present invention.

In this embodiment of the present invention, the left read/write control unit and the right read/write control unit respectively read a plurality of first element sets corresponding to the matrix A and corresponding first index sets, and a plurality of second element sets corresponding to the matrix B and corresponding second index sets from the primary memory (for example, an on-chip or an off-chip DDR, a flash memory, an on-chip cache, or an on-chip SRAM). The left matrix buffer can sequentially read the first element sets and the corresponding first index sets from the left read/write control unit, for example, read different first element sets in different clock cycles. The right matrix buffer can sequentially read the second element sets and the corresponding second index sets from the right read/write control unit, for example, read different second element sets in the different clock cycles. In other words, the left matrix buffer can store the plurality of first element sets and the right matrix buffer can store the plurality of second element sets. In this way, when multiplication computing in a row of computing units (or a computing unit) in the computing array has been completed, a first element that is in a next first element set and that corresponds to the location can be directly obtained from the left matrix buffer for broadcasting; and when multiplication computing in a column of computing units (or a computing unit) in the computing array has been completed, a second element that is in a next second element set and that corresponds to the location can be directly obtained from the right matrix buffer for broadcasting. This avoids a case in which because computing in different computing units is not synchronized (some computing units have completed computing, but some computing units have not completed computing, and need to wait for a next round of computing) due to zero removal and compression, some computing units are in an idle state, and computing resources are wasted. The foregoing design can greatly reduce an idle degree of computing resources, and improve computing efficiency and computing resource utilization.

Manner 2: Zero removal and compression are not performed on the matrix A and the matrix B in the primary memory 104, but are performed in the left read/write control unit 105 and the right read/write control unit 106.

Specifically, the matrix multiplier 10 further includes:
the left read/write control unit 105, configured to: obtain elements of M rows*Q columns in the matrix A from the primary memory, generate e first element sets corresponding to the matrix A and corresponding e first index sets, and send the e first element sets and the corresponding e first index sets to the left matrix buffer, where the e first element sets are e first element sets when i is 1, 2, ..., K, Q is an integer less than or equal to K, and e is an integer less than or equal to Q; and
the right read/write control unit 106, configured to: obtain elements of Q rows*N columns in the matrix B from the primary memory, generate f second element sets corresponding to the matrix A and corresponding f second index sets, and send the f second element sets and the corresponding f second index sets to the right matrix buffer, where the f second element sets are f second element sets when i is 1, 2, ..., K, and f is an integer less than or equal to Q.

The left read/write control unit 105 obtains, from the primary memory, the elements of M rows*Q columns in the matrix A, that is, original matrix elements on which zero removal and compression are not performed. Therefore, a case in which e is not necessarily equal to Q exists. When a quantity of columns of the compressed matrix A does not decrease, e is equal to Q; or when a quantity of columns of the compressed matrix A decreases, e is less than Q; and a quantity of rows of the compressed matrix B does not decrease. Likewise, when a quantity of rows of the compressed matrix B does not decrease, f is equal to Q; or when a quantity of rows of the compressed matrix B decreases, f is less than Q.

In this embodiment of the present invention, because the matrix A or the matrix B is originally formed by a sparse matrix, there are a large quantity of zero elements in the matrix A or the matrix B. When the primary memory stores an original matrix (or a part of the original matrix) on which zero removal and compression are not performed, the left read/write control unit or the right read/write control unit reads, from the primary memory, the original matrix on which zero removal and compression are not performed, and then can perform zero removal and compression on the matrix in the unit, that is, obtain a plurality of first element sets and corresponding first index sets, or a plurality of second element sets and corresponding second index sets. That is, in this embodiment of the present invention, zero removal and compression procedures of the matrices are set in the left read/write control unit and right read/write control unit.

Manner 3: Zero removal and compression are not performed in the primary memory 104, the left read/write control unit 105, or the right read/write control unit 106, but are performed in the left matrix buffer 101 and the right matrix buffer 102.

Specifically, the matrix multiplier 10 further includes:
the left read/write control unit 105, configured to: obtain elements of M rows*Q columns in the matrix A from the primary memory 104, and send the elements to the left matrix buffer 101, where Q is an integer less than or equal to K; and
the right read/write control unit 106, configured to: obtain elements of Q rows*N columns in the matrix B from the primary memory 104, and send the elements to the right matrix buffer.

The left matrix buffer 101 is further configured to: receive the elements of M rows*Q columns in the matrix A, and generate e first element sets corresponding to the matrix A and corresponding e first index sets, where the e first element sets are e first element sets when i is 1, 2, ..., K, and e is an integer less than or equal to Q.

The right matrix buffer 102 is further configured to: receive the elements of Q rows*N columns in the matrix B, and generate f second element sets corresponding to the matrix B and corresponding f second index sets, where the f second element sets are f second element sets when i is 1, 2, ..., K, and f is an integer less than or equal to Q.

In this embodiment of the present invention, the left matrix buffer performs zero removal and compression on original matrix elements in the matrix A, and the right matrix buffer performs zero removal and compression on original matrix elements in the matrix B, to implement matrix compression. In other words, the left read/write control unit reads the original elements in the matrix A from the primary memory, and sends the original elements to the left matrix buffer. Then, the left matrix buffer removes a zero element in the original elements, to finally obtain a plurality of first element sets corresponding to the matrix A. Likewise, the right read/write control unit reads the original elements in the matrix B from the primary memory, and sends the original elements to the right matrix buffer. Then, the right matrix buffer removes a zero element in the original elements, to finally obtain a plurality of second element sets corresponding to the matrix B.

Based on the two manners of performing zero removal and compression on the matrix A and the matrix B, in a possible implementation, the left matrix buffer 101 is specifically configured to: receive and buffer the e first element sets and the e first index sets; and broadcast, in one clock cycle, each of S first elements in one first element set and a column number of the first element to one row of computing units in the computing array. The right matrix buffer 102 is specifically configured to: receive and buffer the f second element sets and the f second index sets; and broadcast, in one clock cycle, each of T second elements in one second element set and a row number of the second element to one column of computing units in the computing array.

In this embodiment of the present invention, after the left matrix buffer 101 is configured to buffer the plurality of first element sets and the corresponding first index sets, and the right matrix is configured to buffer the plurality of second element sets, the left matrix buffer 101 is configured to broadcast the first elements to the corresponding row of computing units 1031 in each clock cycle, and the right matrix buffer 102 is configured to broadcast the second element to the corresponding column of computing units 1031 in each clock cycle. In other words, the left matrix buffer 101 or the right matrix buffer 102 buffers a plurality of element sets. During actual computing, one first element set is broadcast in one clock cycle. It should be noted that, when the left matrix buffer 101 and the right matrix buffer 102 each are in an initial state, broadcast the matrix elements to the computing units in the computing array may be synchronous, but a specific clock cycle in which the elements are broadcast subsequently may depend on a computing progress inside each computing unit 1031 in the computing array 103. For example, computing progresses of some computing units 1031 are fast, and computing progresses of some computing units 1031 are slow, and therefore, the computing unit 1031 with a higher progress may receive related elements of a next round first than the computing unit 1031 with a lower progress.

When the left matrix buffer 101 or the right matrix buffer 102 in the matrix multiplier 10 broadcasts the element to the computing unit 1031 in the computing array 103, a specific broadcast trigger condition may vary based on an internal structure (for example, whether an internal buffer exists) of the computing unit 1031 in the computing array 103. In this application, based on any architecture of the matrix multiplier 10 provided above, a flexible software solution may be supported, and may specifically include the following two trigger manners of the broadcast condition.

Manner 1: Trigger by computing progresses of all computing units in a row or a column of computing units.

The left matrix buffer 101 is specifically configured to: when first elements in all computing units 1031 in an x^{th} row of the computing array are computed, broadcast a next first element to all computing units in the x^{th} row, where x=(1, ..., M).

The right matrix buffer 102 is specifically configured to: when second elements in all computing units 1031 in a y^{th} column of the computing array are computed, broadcast a next second element to all computing units in the y^{th} column, where y=(1, ..., N).

In this embodiment of the present invention, for the left matrix buffer 101, the left matrix buffer 101 is triggered, based on a condition that all computing units 1031 in each row of computing units 1031 in the computing array 103 complete computing, to broadcast next first elements and corresponding column numbers to the entire row of computing units 1031. Likewise, for the right matrix, the right matrix buffer 102 is triggered, based on a condition that all computing units 1031 in each column of the computing array 103 complete computing, to broadcast next second elements and corresponding row numbers to the entire column of computing units 1031.

Manner 2: Trigger by a computing progress of any computing unit in a row or a column of computing units.

The left matrix buffer 101 is specifically configured to: when a first element in any computing unit 1031 in an x^{th} row of the computing array 103 is computed, broadcast a next first element to all computing units in the x^{th} row, where x=(1, ..., M).

The right matrix buffer 102 is specifically configured to: when a second element in any computing unit 1031 in a y^{th} column of the computing array 103 is computed, broadcast a next second element to all computing units in the y^{th} row, where y=(1, ..., N).

In this embodiment of the present invention, for the left matrix buffer 101, the left matrix buffer 101 is triggered, based on a condition that any computing unit 1031 in each row of computing units 1031 in the computing array 103 complete computing, to broadcast next first elements and corresponding column numbers to the entire row of computing units 1031. Likewise, for the right matrix buffer 102, the right matrix buffer 102 is triggered, based on a condition that any computing unit 1031 in each column of the computing array 103 complete computing, to broadcast next second elements and corresponding row numbers to the entire column of computing units 1031.

When the left matrix buffer 101 or the right matrix buffer 102 in the matrix multiplier 10 broadcasts the element to the computing unit 1031 in the computing array 103, the specific broadcast manner may vary based on an internal structure (for example, whether the internal buffer exists) of the computing unit 1031 in the computing array 103. In this application, based on any architecture of the matrix multiplier 10 provided above, a flexible software solution may be supported, and may specifically include the following two broadcast manners.

### Manner 1: Register broadcast manner

The computing array 103 further includes row registers of M rows*(N-1)/a columns and column registers of (M-1)/b rows*N columns, where a is an integer greater than or equal to 1, and b is an integer greater than or equal to 1.

The left matrix buffer 101 is specifically configured to send each of the S first elements and the column number of each first element to a first column computing unit of one row of computing units in the computing array and a first column row register of one row of row registers.

The right matrix buffer 102 is specifically configured to send each of the T second elements and the row number of each second element to a first row of computing units of a one column of computing units in the computing array and a first row of column registers of one column of column registers.

Each row register is coupled to a 1-row*a-column computing unit, and is configured to: buffer the first element and the corresponding column number that are sent by the left matrix buffer 101 or a previous row register, and send, in the next clock cycle, the first element and the corresponding column number to the 1-row*a-column computing unit and a next row register.

Each column register is coupled to a b-row*1-column computing unit, and is configured to: buffer the second element and the corresponding row number that are sent by the right matrix buffer 102 or a previous column register, and send, in the next clock cycle, the second element and the corresponding row number to the b-row*1-column computing unit and a next column register.

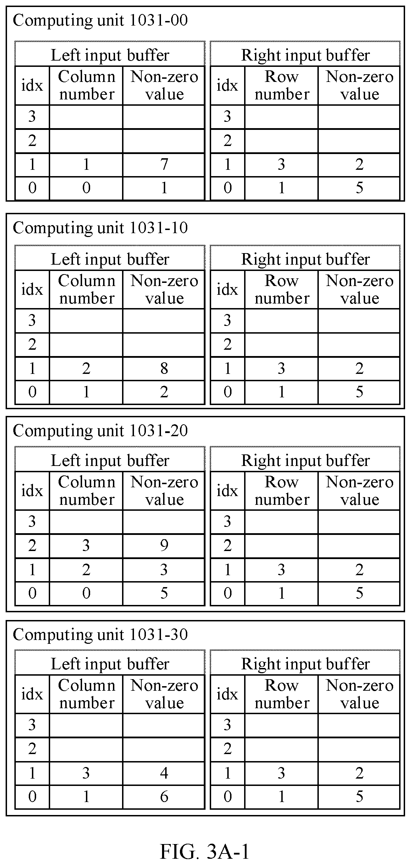

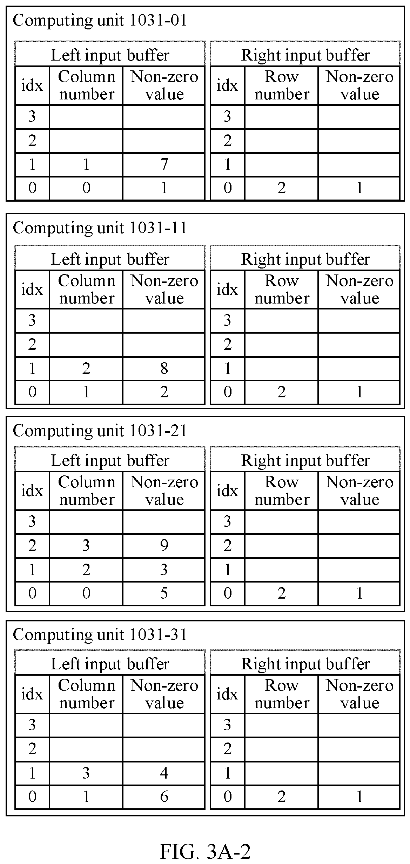

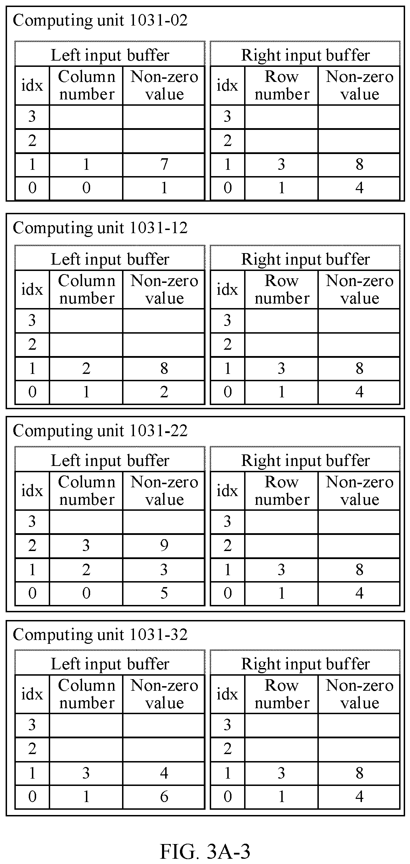

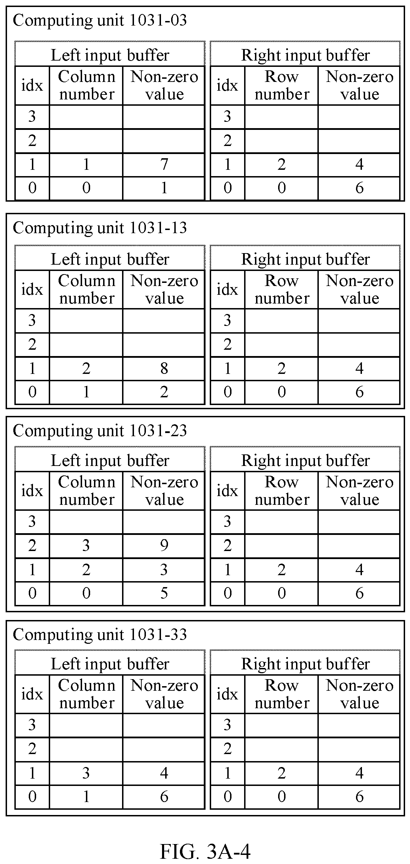

For example, FIG. 3B is a schematic diagram of broadcasting the matrix elements by using the registers according to this embodiment of the present invention. As shown in FIG. 3B, a=1 and b=1 are used as an example. A register is disposed between two adjacent computing units 1031 in each row of computing units 1031, and is configured to buffer the first element and the corresponding column index value that are broadcast by the left matrix buffer 101. Likewise, a register is disposed between two adjacent computing units 1031 in each column of computing unit 1031, and is configured to buffer the second element and the corresponding row index value that are broadcast by the right matrix buffer 102. It may be understood that a first row register in row registers of each row may directly receive the first element and the corresponding column number that are sent by the left matrix buffer 101, and each subsequent row register receives a first element and a corresponding column number that are sent by a row register of a previous column in the row registers of the same row. Likewise, a first column register in column registers of each column may directly receive the second element and the corresponding row number that are sent by the right matrix buffer 102, and each subsequent column register receives a second element and a corresponding row number that are sent by a column register of a previous row in the column registers of the same column. This can avoid a problem that the corresponding first element or second element cannot be received in one clock cycle because a hardware distance between the computing unit and the left matrix buffer 101 or the right matrix buffer 102 is long in a hardware layout. That is, in the foregoing process of broadcasting the data in the left matrix buffer 101 to each computing unit 1031 in the computing array 101 by row as a left operand, and broadcasting the data in the right matrix buffer 102 to each computing unit 1031 in the computing array 103 by column as a right operand, the pipeline register may be inserted on a broadcast path to shorten a critical path. It may be understood that, when a is an integer greater than 1, and b is an integer greater than 1, it indicates that one register may simultaneously broadcast elements and row/column numbers to a plurality of computing units. For example, when a=4, it indicates that the row registers may simultaneously broadcast the first elements and the corresponding column numbers to four columns of computing units in one row of computing units. When b=4, it indicates that the column registers may simultaneously broadcast the second elements and the corresponding row numbers to four rows of computing units in one column of computing units.

In this embodiment of the present invention, a plurality of registers are disposed in the computing array 103, to implement buffering of the first elements or the second elements in the broadcast process. Specifically, one row register is set to be coupled to a computing units 1031, and is configured to: buffer a first element and a corresponding column number that are received by the row register, and broadcast the first element and the corresponding column number to a next row register and the a computing units 1031 that are coupled to the row register. Likewise, one column register is set to be coupled to b computing units, and is configured to: buffer a second element and a corresponding row number that are received by the column register, and broadcast the second element and the corresponding row number to a next column register and the b computing units that are coupled to the column register. A reason is as follows: The first element or the second element cannot reach each computing unit of one row of computing units or one column of computing units in the computing array in one clock cycle (mainly because distances from different computing units to matrix buffers are different, and when a size of the computing array is large, a same data broadcast task cannot be completed in the same clock cycle). Therefore, the register is added between the computing units, to send, one clock cycle by one clock cycle, the first elements or the second elements buffered in the register to a columns of computing units or b rows of computing units coupled to the register, so as to gradually transfer, in the register "relay" manner, the first elements to all computing units in a row in the computing array, or the second elements to all computing units in a column in the computing array.

### Manner 2: Pulse broadcast manner

Each computing unit further includes the left input buffer 1314 and the right input buffer 1315.

The left input buffer 1314 is configured to send, in the next clock cycle, a currently buffered first element and a corresponding column number to the left input buffer 1314 in a next column computing unit 1031 in a same row.

The right input buffer 1315 is configured to send, in the next clock cycle, a currently buffered second element and a corresponding row number to the right input buffer 1315 in a next row computing unit 1031 in a same column.

FIG. 3C is a schematic diagram of broadcasting the matrix elements in the pulse manner according to this embodiment of the present invention. As shown in FIG. 3C, two adjacent computing units 1031 in each row of computing units 1031 are connected through a physical connection line, that is, after receiving the first element and the corresponding column index value, a previous column computing unit 1031 in a same row of computing units 1031 sends the received first element and the corresponding column index to a next column computing unit in a next clock cycle. Likewise, after receiving the second element and the corresponding row index value, a previous row computing unit 1031 in a same column of computing units 1031 sends the received second element and the corresponding row index value to a next row computing unit in the next clock cycle. To be specific, the data in the left matrix buffer 101/right matrix buffer 102 may also be transferred to the computing unit 1031 in the pulse manner, that is, the data in the left matrix buffer 101 is transferred to the left input buffer 1314 in a 0^{th} column computing unit, and then the 0^{th} column computing unit (such as a computing unit 1031-00) transfers the data to the left input buffer 1314 in a first column computing unit (for example, a computing unit 1031-01), and so on, until the data is transmitted to the left input buffer 1314 in a last column computing unit (such as a computing unit 1031-02). Likewise, the right matrix buffer 102 transfers the data in a sequence from a 0 row to a last row (for example, a computing unit 1031-01→a computing unit 1031-11→a computing unit 1031-21). This can avoid a problem that the corresponding first element and the column index value or the corresponding second element and the row index value cannot be received in one clock cycle because a hardware distance between the computing unit and the left matrix buffer 101 or the right matrix buffer 102 is long in a hardware layout.

In this embodiment of the present invention, for the first element buffered in the left input buffer 1314 in each computing unit 1031 in the computing array 103, the first element buffered in the left input buffer 1314 in a previous column computing unit 1031 in each row of computing units 1031 is transferred, in a next clock cycle, to the left input buffer 1314 in a next column computing unit 1031 in a pulse manner. Likewise, for the second element buffered in the right input buffer 1315 in each computing unit 1031 of the computing array 103, the second element buffered in the right input buffer 1315 in a previous row computing unit 1031 in each column of computing units 1031 is transferred, in the next clock cycle, to the right matrix buffer 102 in a next row computing unit 1031 in the pulse manner. Therefore, in the pulse "relay" manner, the left matrix buffer 101 transfers the first element to each column computing unit 1031 in one row in the computing array 103 one by one, or the right matrix buffer 102 transfers the second elements to each row computing unit 1031 in one column in the computing array 103 one by one.

It may be understood that, in the foregoing two broadcast manners, an advantage of the register broadcast manner of the Manner 1 is that one register may correspond to a plurality of computing units, that is, a quantity of registers may be relatively small, and therefore, the data can be broadcast to all the computing units in less clock cycles; and an advantage of the pulse broadcast manner in Manner 2 is that no additional register needs to be added, but the data can be broadcast to all the computing units in more clock cycles because data of one computing unit can be sent only to a next computing unit.

For ease of understanding this application, the following specifically describes, based on specific structures and functions of the matrix multiplier 10 in FIG. 1A-1 to FIG. 2B, a process of performing a multiplication operation on the matrix A and the matrix B by the matrix multiplier 10 in this application with reference to a specific example after specific values are assigned to the matrix A and the matrix B.

For example, the matrix A is an M*K matrix, and the matrix B is a K*N matrix. It is assumed that M=4, K=4, N=4, and X=4. Optionally, the matrix A or the matrix B may also be a block matrix in an original to-be-computed matrix. $A = \left[\begin{matrix}{a}_{11} & {a}_{12} & {a}_{13} & {a}_{14} \\ {a}_{21} & {a}_{22} & {a}_{23} & {a}_{24} \\ {a}_{31} & {a}_{32} & {a}_{33} & {a}_{34} \\ {a}_{41} & {a}_{42} & {a}_{43} & {a}_{44}\end{matrix}\right] , and B = \left[\begin{matrix}{b}_{11} & {b}_{12} & {b}_{13} & {b}_{14} \\ {b}_{21} & {b}_{22} & {b}_{23} & {b}_{24} \\ {b}_{31} & {b}_{32} & {b}_{33} & {b}_{34} \\ {b}_{41} & {b}_{42} & {b}_{43} & {b}_{44}\end{matrix}\right] .$

It is assumed that specific values in the matrix A and the matrix B are respectively as follows: $A = \left[\begin{matrix}1 & 3 & 0 & 5 \\ 2 & 4 & 3 & 7 \\ 0 & 5 & 0 & 9 \\ 3 & 0 & 3 & 2\end{matrix}\right] , and B = \left[\begin{matrix}2 & 5 & 0 & 0 \\ 3 & 0 & 2 & 4 \\ 0 & 4 & 0 & 5 \\ 1 & 0 & 2 & 6\end{matrix}\right] .$

If it is assumed that an operation result of multiplying the matrix A by the matrix B is a matrix C, the matrix C is an M*N matrix, and the result matrix C is specifically represented as follows: $\begin{matrix}C = A ∗ B = \left[\begin{matrix}{C}_{11} & {C}_{12} & {C}_{13} & {C}_{14} \\ {C}_{21} & {C}_{22} & {C}_{23} & {C}_{24} \\ {C}_{31} & {C}_{32} & {C}_{33} & {C}_{34} \\ {C}_{41} & {C}_{42} & {C}_{43} & {C}_{44}\end{matrix}\right] \\ = \left[\begin{matrix}{a}_{11} {b}_{11} + {a}_{12} {b}_{21} + {a}_{13} {b}_{31} + {a}_{14} {b}_{41} & {a}_{11} {b}_{12} + {a}_{12} {b}_{22} + {a}_{13} {b}_{32} + {a}_{14} {b}_{42} & {a}_{11} {b}_{13} + {a}_{12} {b}_{23} + {a}_{13} {b}_{33} + {a}_{14} {b}_{43} & {a}_{11} {b}_{14} + {a}_{12} {b}_{24} + {a}_{13} {b}_{34} + {a}_{14} {b}_{44} \\ {a}_{21} {b}_{11} + {a}_{22} {b}_{21} + {a}_{23} {b}_{31} + {a}_{24} {b}_{41} & {a}_{21} {b}_{12} + {a}_{22} {b}_{22} + {a}_{23} {b}_{32} + {a}_{24} {b}_{42} & {a}_{21} {b}_{13} + {a}_{22} {b}_{23} + {a}_{23} {b}_{33} + {a}_{24} {b}_{43} & {a}_{21} {b}_{14} + {a}_{22} {b}_{24} + {a}_{23} {b}_{34} + {a}_{24} {b}_{44} \\ {a}_{31} {b}_{11} + {a}_{32} {b}_{21} + {a}_{33} {b}_{31} + {a}_{34} {b}_{41} & {a}_{31} {b}_{12} + {a}_{32} {b}_{22} + {a}_{33} {b}_{32} + {a}_{34} {b}_{42} & {a}_{31} {b}_{13} + {a}_{32} {b}_{23} + {a}_{33} {b}_{33} + {a}_{34} {b}_{43} & {a}_{31} {b}_{14} + {a}_{32} {b}_{24} + {a}_{33} {b}_{34} + {a}_{34} {b}_{44} \\ {a}_{41} {b}_{11} + {a}_{42} {b}_{21} + {a}_{43} {b}_{31} + {a}_{44} {b}_{41} & {a}_{41} {b}_{12} + {a}_{42} {b}_{22} + {a}_{43} {b}_{32} + {a}_{44} {b}_{42} & {a}_{41} {b}_{13} + {a}_{42} {b}_{23} + {a}_{43} {b}_{33} + {a}_{44} {b}_{43} & {a}_{41} {b}_{14} + {a}_{42} {b}_{24} + {a}_{43} {b}_{34} + {a}_{44} {b}_{44}\end{matrix}\right] \\ = \\ \left[\begin{matrix}1 \times 2 + 3 \times 3 + 0 \times 0 + 5 \times 1 & 1 \times 5 + 3 \times 0 + 0 \times 4 + 5 \times 0 & 1 \times 0 + 3 \times 2 + 0 \times 0 + 5 \times 2 & 1 \times 0 + 3 \times 4 + 0 \times 5 + 5 \times 6 \\ 2 \times 2 + 4 \times 3 + 3 \times 0 + 7 \times 1 & 2 \times 5 + 4 \times 0 + 3 \times 4 + 7 \times 0 & 2 \times 0 + 4 \times 2 + 3 \times 0 + 7 \times 2 & 2 \times 0 + 4 \times 4 + 3 \times 5 + 7 \times 6 \\ 0 \times 2 + 5 \times 3 + 0 \times 0 + 9 \times 1 & 0 \times 5 + 5 \times 0 + 0 \times 4 + 9 \times 0 & 0 \times 0 + 5 \times 2 + 0 \times 0 + 9 \times 2 & 0 \times 0 + 5 \times 4 + 0 \times 5 + 9 \times 6 \\ 3 \times 2 + 0 \times 3 + 3 \times 0 + 2 \times 1 & 3 \times 5 + 0 \times 0 + 3 \times 4 + 2 \times 0 & 3 \times 0 + 0 \times 4 + 3 \times 5 + 2 \times 6 & 3 \times 0 + 0 \times 4 + 3 \times 5 + 2 \times 6\end{matrix}\right]\end{matrix}$

Based on the values specifically assigned to the matrix A and the values specifically assigned to the matrix B, a first non-zero element set corresponding to the matrix A is {1, 3, 5, 2, 4, 3, 7, 5, 9, 3, 3, 2}, and a corresponding column index set is {1, 2, 4, 1, 2, 3, 4, 2, 4, 1, 3, 4}; and a second non-zero element set corresponding to the matrix B is {2, 5, 3, 2, 4, 4, 5, 1, 2, 6}, and a corresponding row index set is {1, 1, 2, 2, 2, 3, 3, 4, 4, 4}. The result matrix C includes a total of 4*4 (16) result elements (namely, C₁₁, C₁₂, C₁₃, C₁₄, C₂₁, C₂₂, C₂₃, C₂₄, C₃₁, C₃₂, C₃₃, C₃₄, C₄₁, C₄₂, C₄₃, C₄₄). Each result element may correspond to one computing unit 1031, that is, each result element is computed by one computing unit 1031. Elements associated with each result element are elements that participate in computing of a final value of the result element by using these associated elements. For example, elements associated with the result element C₁₁ include a₁₁, a₁₂, a₁₃, a₁₄, b₁₁, b₁₂, b₁₃, and b₁₄, and first non-zero elements and second non-zero elements associated with the result element C₁₁ are a₁₁, a₁₂, a₁₄, b₁₁, b₁₂, and b₁₄. Elements associated with other result elements are obtained in a same way, and the other result elements are not described herein one by one again.

The following specifically describes the specific computing process about the matrix A and the matrix B in this application from a perspective of splitting the first non-zero element into a plurality of first element sets, splitting a column index set into a plurality of first index sets, splitting the second non-zero element into a plurality of second element sets, and splitting a row index set into a plurality of second index sets.

FIG. 4A is a schematic diagram of performing zero removal and compression on the matrix A and the matrix B according to this embodiment of the present invention. In FIG. 4A, after zero removal and compression are performed on the left matrix A and the right matrix B, a plurality of corresponding first element sets and first index sets, and a plurality of corresponding second element sets and second index sets are obtained. As shown in FIG. 4A, when i is 1, 2, 3, and 4, the first element sets are respectively {1, 2, 5, 3}, {3, 4, 9, 3}, {5, 3, 2} and {7}. It may be understood that when i is 1, S=4; when i is 2, S=4; when i is 3, S=3; and when i is 4, S=1.

Correspondingly, when i is 1, 2, 3, and 4, the first index sets are respectively {1, 1, 2, 1}, {2, 2, 4, 3}, {4, 3, 4} and {4}.

When j is 1, 2, 3, and 4, the first index sets are respectively {2, 5, 2, 4}, {3, 4, 2, 5}, {1, 6} and {null}. It may be understood that, when i is 1, S=4; when i is 2, S=4; when i is 3, S=2; and when i is 4, S=0.

Correspondingly, when j is 1, 2, 3, and 4, the first index sets are respectively f 1, 1, 2, 2}, {2, 3, 4, 3}, {4, 4} and {null}.

i indicates a specific non-zero value, in a row, that corresponds to the first element in the matrix A. For example, in the matrix A shown in FIG. 4A, a first non-zero element in each row of elements forms a corresponding first element set and a corresponding first index set when i=1. The first element set includes a first non-zero element in a first row in the matrix A: a₁₁, namely, "1", which is an element in a first row and a first column in the matrix A, and therefore, a column index of the first element is 1; a first non-zero element in a second row is a₂₁, namely, "2", which is an element in a first column and a second row in the matrix A, and therefore, a column index of the first element is 1; a first non-zero element in a third row is a₃₂, namely, "5", which is an element in a second column and a third row in the matrix A, and therefore, a column index of the first element is 2; a first non-zero element in a fourth row is a₄₁, namely, "3", which is an element in a fourth row and a first column in the matrix A, and therefore, a column index of the first element is 1; and so on. When i=2, 3, and 4, corresponding first element sets and first index sets are shown above, and details are not described herein again.

j indicates a specific non-zero value, in a column, that corresponds to the second element in the matrix B. For example, in the matrix B shown in FIG. 4A, a first non-zero element in each column of elements forms a corresponding second element set and a corresponding second index set when j=1. The second element set includes a first non-zero element in a first row in the matrix A: b₁₁, namely, "2", which is an element in a first column and a first row in the matrix B, and therefore, a row index of the first element is 1; a first non-zero element in a second column is b₁₂, namely, "5", which is an element in a first row and a second column in the matrix B, and therefore, a row index of the first element is 1; a first non-zero element in a third column is b₂₃, namely, "2", which is an element in a second row and a third column in the matrix B, and therefore, a column index of the first element is 2; a first non-zero element in a fourth column is a₂₄, namely, "4", which is an element in a second row and a fourth column in the matrix B, and therefore, a column index of the first element is 2; and so on. When j=2, 3, and 4, corresponding second element sets and second index sets are shown above, and details are not described herein again.

FIG. 4B is a schematic diagram of broadcasting the matrix A and the matrix B to the computing array according to this embodiment of the present invention. To be specific, the left read/write control unit 105 sends the first element sets and the first index sets when i is 1, 2, 3, and 4 to the left matrix buffer 101, and the right read/write control unit 106 sends the second element sets and the second index sets when j is 1, 2, 3, and 4 to the right matrix buffer 102, so that the left matrix buffer 101 further broadcasts the first element sets and the first index sets to the computing units 1031 in the computing array 103.

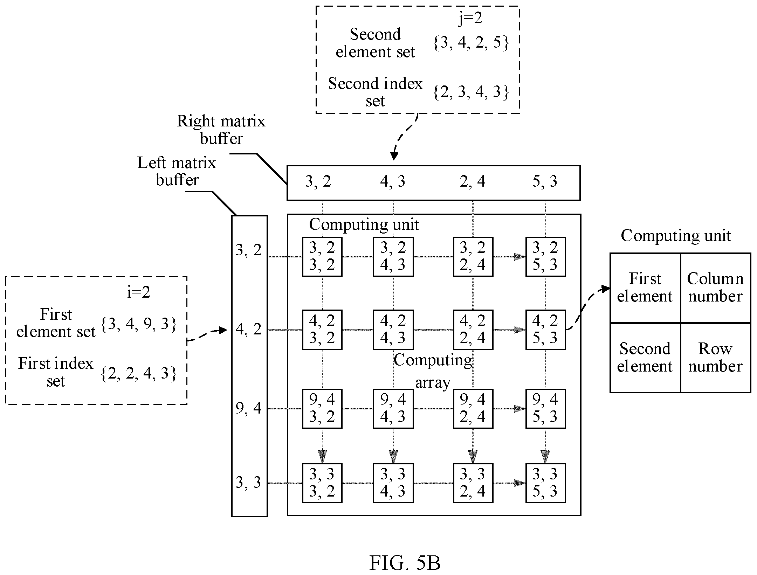

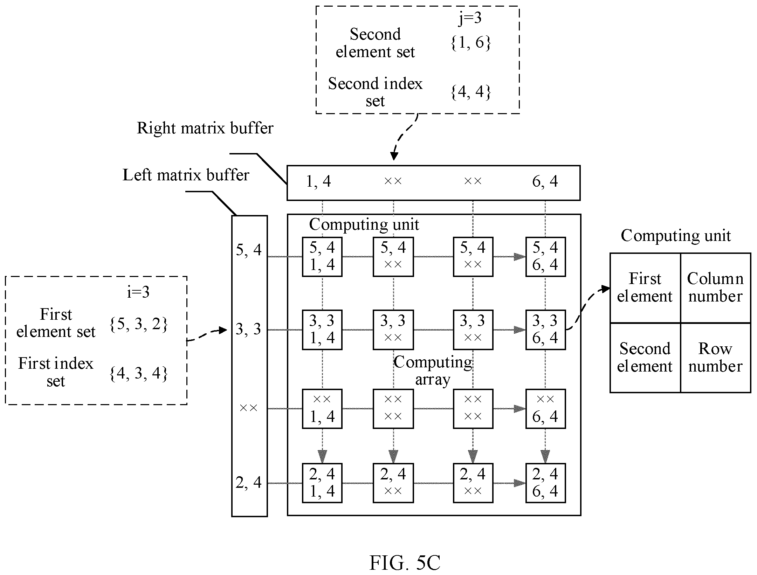

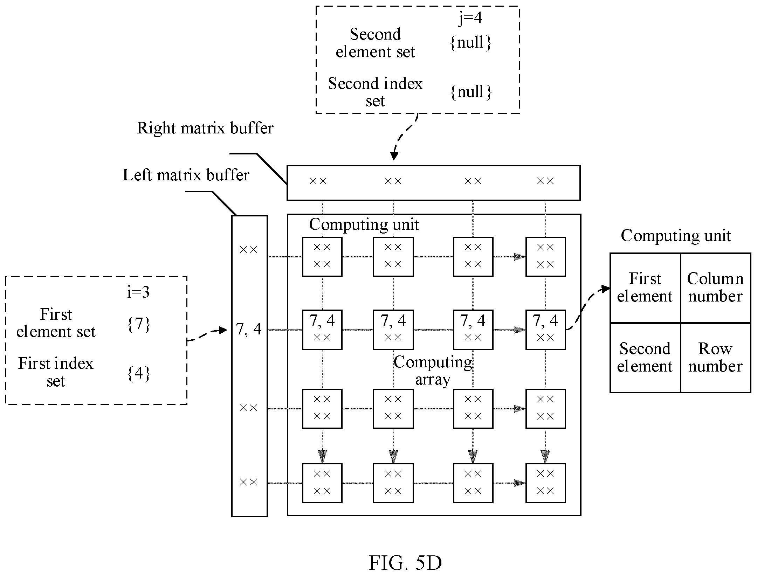

FIG. 5A to FIG. 5D are schematic diagrams of broadcasting the matrix A and the matrix B in each clock cycle according to this embodiment of the present invention. As shown in FIG. 5A to FIG. 5D, in FIG. 5A, when i=1, a first element 1 in a first row and a corresponding column index 1 are broadcast to all computing units 1031 in a first row in the computing array 103, a first element 2 in a second row and a corresponding column index 1 are broadcast to all computing units 1031 in a second row in the computing array 103, a first element 5 in a third row and a corresponding column index 2 are broadcast to all computing units in a third row in the computing array 103, and a first element 3 in a fourth row and a corresponding column index 1 are broadcast to all computing units 1031 in a fourth row in the computing array 103. In FIG. 5A, when j=1, a second element 2 in a first column and a corresponding row index 1 are broadcast to all computing units 1031 in a first column in the computing array 103, a second element 5 in a second column and a corresponding row index 1 are broadcast to all computing units 1031 in a second column in the computing array 103, a second element 2 in a third column and a corresponding row index 2 are broadcast to all computing units 1031 in a third column in the computing array 103, and a second element 4 in a fourth column and a corresponding row index 2 are broadcast to all computing units 1031 in a fourth column in the computing array 103. Likewise, as shown in FIG. 5B, correspondingly, the first elements and the corresponding column indexes corresponding to i=2 and the second elements and the corresponding row indexes corresponding to j=2 are broadcast to the computing units 1031 in a corresponding row or column. As shown in FIG. 5C, correspondingly, the first elements and the corresponding column indexes corresponding to i=3, and the second elements and the corresponding row indexes corresponding to j=3 are broadcast to the computing units 1031 in a corresponding row or column. As shown in FIG. 5D, correspondingly, the first elements and the corresponding column indexes corresponding to i=4, and the second elements and the corresponding row indexes corresponding to j=4 are broadcast to the computing units 1031 in a corresponding row or column. Examples are not described herein one by one.

FIG. 6A to FIG. 6D are some schematic diagrams of broadcasting the matrix A and the matrix B in two different manners according to this embodiment of the present invention. The following is described with reference to FIG. 6A to FIG. 6D. FIG. 6A shows a first broadcast. In the first broadcast, the left matrix buffer 101 may broadcast a corresponding first element set and a corresponding first index set when i=1, and the right matrix buffer 102 may broadcast a corresponding second element set and a corresponding second element set when j=1 to a corresponding row or column of computing units 1031 in the computing array 103. Because the broadcast is performed in an initial state, in this case, each computing unit in the computing array may be currently in an idle state. Therefore, the corresponding first element set when i=1 and j=1 may be synchronously broadcast to the corresponding computing units. However, after computing starts, a computing progress of each computing unit 1031 may be different. For example, because hardware distribution positions of the computing units 1031 in the computing array 103 are different, that is, distances to the left matrix buffer 101 or to the right matrix buffer 102 are different, some computing units 1031 receive the first element earlier, and some computing units 1031 receive the first element later. For example, in a same row of computing units 1031, a computing unit 1031 in a first column may receive the first element earlier than a computing unit 1031 in a fourth column. Likewise, time at which some computing units 1031 receive the second element is earlier than time at which some other computing units 1031 receive the second element. For another example, because the first element and the second element that are respectively received by the computing units 1031 in the computing array 103 are different, in some computing units 1031, a point multiplication condition of the matrix elements (the column number of the first element is equal to the row number of the second element) is currently met, and therefore, a current round of computing is completed earlier. However, in some other computing units 1031, the point multiplication condition of the matrix elements is not met currently, and therefore, the first element or the second element in the other computing units 1031 needs to be reserved, and the second element or the first element in a next round needs to be waited for. As a result, computing progresses of different computing units may be different.

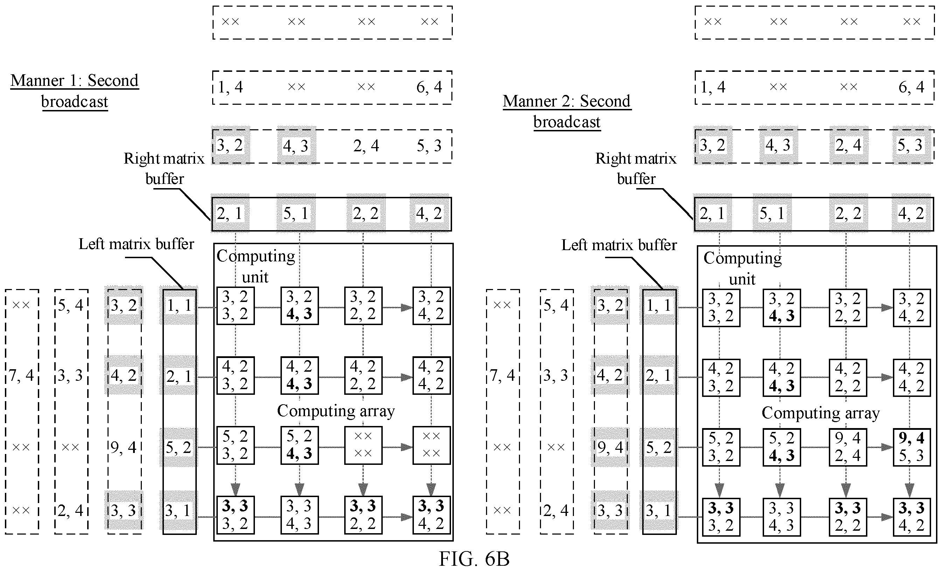

Therefore, as shown in FIG. 6B to FIG. 6D, starting from a second broadcast, broadcast elements corresponding to Manner 1 and Manner 2 may have some differences. Manner 1 corresponds to triggering by computing progresses of all computing units in a row or a column of computing units, and Manner 2 corresponds to triggering by a computing progress of any computing unit in a row or a column of computing units. When the broadcast is triggered in Manner 1, the first element of a next round can be broadcast only after each computing unit 1031 in each row of computing units 1031 in the computing array 103 completes computing, or the second element of a next round can be broadcast only after each computing unit 1031 in each column of computing units 1031 in the computing array 103 completes computing. When the broadcast is triggered in Manner 2, the first element of a next round can be broadcast only after any computing unit 1031 in each row of computing units 1031 in the computing array 103 completes computing, or the second element of a next round can be broadcast only after any computing unit 1031 in each column of computing units 1031 in the computing array 103 completes computing.

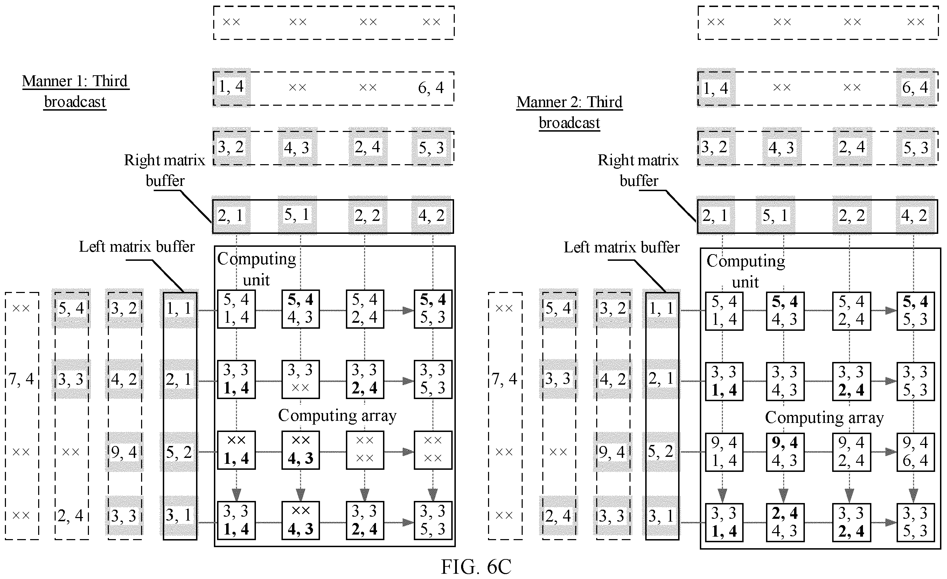

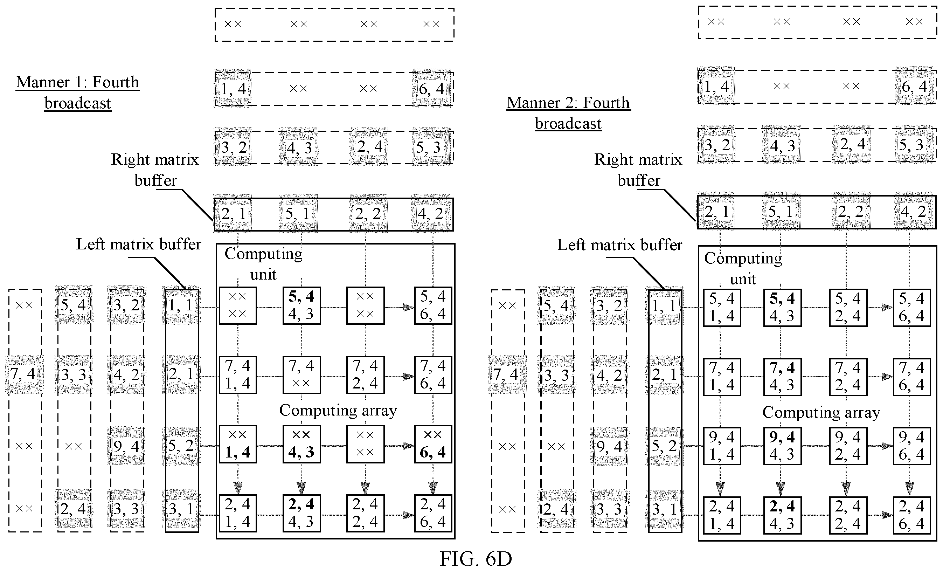

For example, in FIG. 6B, a difference between the second broadcast corresponding to Manner 1 and the second broadcast corresponding to Manner 2 lies in that, in the second broadcast corresponding to Manner 1, the first element "9" and the corresponding column index 4 do not exist, but in the second broadcast corresponding to Manner 2, the first element "9" and the corresponding column index 4 exist. A reason is as follows: As shown in FIG. 6A, after the first broadcast in Manner 1, because the row indexes of the second elements in a first column computing unit 1031 and a second column computing unit 1031 in a third row in the computing array 103 are greater than the column indexes of the first elements, the second elements need to be reserved, and a next round of first elements needs to be waited for. That is, in this case, not all computing units in the third row of computing units in the computing array 103 complete computing. Therefore, the next round of first elements, namely, "9" and the corresponding index 4 are allowed to be broadcast to all the computing units in the third row only after the first elements 5 and the corresponding column indexes that are broadcast for the first time are computed in each computing unit in the third row of computing units 1031. As shown in FIG. 6A, after the first broadcast in Manner 2, although computing of a first column computing unit 1031 and a second column computing unit 1031 in a third row of the computing array 103 is not completed, in this case, computing of a third column computing unit and a fourth column computing unit in the third row in the computing array 103 has been completed. That is, any computing unit in the third row has completed computing of the first element, "9" and the corresponding index 4 in a next round may be allowed to be broadcast to all computing units in the third row. It should be noted that, although the first column computing unit and the second column computing unit in the third row have received a new round of the broadcast first element, the first element 5 and the corresponding column index that are broadcast for the first time still need to be computed in the first column computing unit and the second column computing unit 1031 before a next round of the first element can be computed. Therefore, likewise, FIG. 6C and FIG. 6D are also similar, and details are not described herein again.

Based on the structure and functions of the matrix multiplier 10 provided in this application, the following further provides a plurality of manners coupling the matrix multiplier 10 and a processor (CPU). FIG. 7 to FIG. 10 each are a schematic diagram of a specific structure coupling a matrix multiplier and a processor according to an embodiment of the present invention. The matrix multiplier 10 may be located inside the processor, or may be located outside the processor. When being located inside the processor, the matrix multiplier 10 may be located inside a processor core of the processor, or may be located outside the processor core, and is used as a matrix accelerator inside the processor to accelerate a matrix operation. When being located outside the processor, the matrix multiplier 10 may be coupled to the processor and process a task with the processor in parallel. The matrix multiplier 10, or the processor including the matrix multiplier 10, or the matrix multiplier 10 coupled to the processor may be located in any electronic device, and various types of devices such as a computer, a mobile phone, and a tablet. Manners coupling the matrix multiplier 10 and the processor specifically include the following several manners:

Coupling manner 1: The matrix multiplier is used as a sparse matrix computing unit outside the CPU core and is coupled to the CPU via a level-2 buffer.

FIG. 7 is a schematic diagram of a structure coupling a matrix multiplier and a CPU core subsystem according to an embodiment of the present invention. As shown in FIG. 7, a processor (Central Processing Unit, CPU) core 20 is used as a main control unit. An instruction fetch unit 201 included in the processor core reads instructions from a multi-level buffer (a level - 1 instruction buffer 206, a level-2 buffer 210, and a level-3 buffer 211 shown in FIG. 7) and a primary memory 104, and sends the read instructions to a decoding unit 202 for decoding. Then the decoding unit sends decoded instructions to a transmitting unit 203. The transmitting unit 203 distributes, based on instruction types, the instructions to each operation function unit (for example, a scalar and vector computing unit 204) or a memory access unit 205. If the instructions are sparse matrix operation instructions, the instructions are sent to a task queue 209 corresponding to the matrix multiplier 10, and information stored in the task queue 209 may include storage addresses, storage formats, matrix sizes, data types, and the like of two sparse matrices. The matrix multiplier 10 reads data from or stores data in the level-2 buffer 210 by using a left read/write control unit 105 and a right read/write control unit 106 based on the information in the task queue 209, and the CPU 20 may also read data from or store data in the level-2 buffer 207, so that the data can be shared between the CPU core 20 and the matrix multiplier 10. The level-2 buffer 207 is characterized by a high speed, and is conducive to more efficient data interaction between the matrix multiplier and the CPU core subsystem.

Coupling manner 2: The matrix multiplier is used as a sparse matrix computing unit or an accelerator in the CPU core.

FIG. 8 is a schematic diagram of a structure coupling a matrix multiplier and a CPU according to an embodiment of the present invention. As a computing unit in a CPU core 20, the computing array 103 in the matrix multiplier 10 may reuse a register 207, a memory access unit 205, and control logic in the CPU core 20, and share data in a level-1 instruction buffer 206 with the CPU core. Memory access and each computing step of sparse matrices are sent to the memory access unit 205 and the computing array 103 one by one based on instructions in the CPU. That is, a left read/write control unit 105 and a right read/write control unit 106 in the matrix multiplier 10 may be equivalent to reusing the memory access 205 inside the CPU, and a left matrix buffer 101 and a right matrix buffer 102 may be equivalent to reusing the register 207. In other words, in the matrix memory 10, other modules except the computing array 103 are implemented by reusing related functional units in the CPU core.

Coupling manner 3: The matrix multiplier is used as a sparse matrix computing unit outside the CPU core and is coupled to the CPU via a level-3 buffer.

FIG. 9 is a schematic diagram of another structure coupling a CPU and a matrix multiplier according to an embodiment of the present invention. The matrix multiplier 10 may also share data in a level-3 buffer 211 with a CPU core 20. The reason is that a level-2 buffer 210 has a high speed but a small capacity, and the level-3 buffer 211 has a low speed but a large capacity. Therefore, the matrix multiplier 10 and a CPU core subsystem exchange data in a larger capacity.

Coupling manner 4: The matrix multiplier is used as an accelerator outside the CPU core.

FIG. 10 is a schematic diagram of still another structure coupling a CPU and a matrix multiplier according to an embodiment of the present invention. The matrix multiplier 10 may also be used as an accelerator outside a CPU core, that is, the matrix multiplier 10 is implemented by invoking a configuration register 214 through a configuration bus 212 instead of invoking through transmitting instructions in the CPU. The matrix multiplier 10 notifies, by using a terminal signal or a state register 213, the CPU core 20 of a computing status, for example, an end or an exception. Computing resources inside the CPU core are reused through a data bus 215.

Based on the foregoing four coupling manners, the matrix multiplier and the processor may cooperate with each other by division of labor, and may simultaneously execute data processing tasks with different requirements based on heterogeneity between the matrix multiplier and the processor core, to meet different requirements. It may be understood that the coupling manners shown in FIG. 7 to FIG. 10 are merely several example implementations in embodiments of the present invention. A manner coupling the matrix multiplier and the CPU in embodiments of the present invention includes but is not limited to the foregoing coupling manners.

The matrix multiplier in embodiments of the present invention is widely applied to matrix computing or multiplying a matrix (a sparse matrix or a dense matrix) by a vector.

FIG. 11A is a schematic flowchart of a matrix computing method according to an embodiment of the present invention. The matrix computing method is applied to a matrix multiplier 10. The matrix multiplier 10 includes a computing array, and the computing array 103 includes a plurality of computing units 1031. The matrix computing method is applicable to any matrix multiplier 10 in FIG. 1A-1 to FIG. 10 and an apparatus (such as a processor) or a device (such as a mobile phone, a computer, or a server) including the matrix multiplier 10. The method may include the following step S201 and step S202.

Step S201: The computing array receives a first non-zero element set and a column index set of a left matrix A, and a second non-zero element set and a row index set of a right matrix B, where the first non-zero element set includes one or more first non-zero elements in the matrix A, the column index set includes column numbers of the one or more first non-zero elements in the matrix A, the second non-zero element set includes one or more second non-zero elements in the matrix B, and the row index set includes row numbers of the one or more second non-zero elements in the matrix B.

Step S202: The computing array generates a result matrix C based on the first non-zero element set, the column index set, the second non-zero element set, and the row index set in a matrix outer product operation manner, where one non-zero result element in the result matrix C is obtained through computing by one of the plurality of computing units.

In a possible implementation, that the computing array generates a result matrix C based on the first non-zero element set, the column index set, the second non-zero element set, and the row index set in a matrix outer product operation manner includes: Each of the plurality of computing units sequentially receives a first non-zero element, a column number, a second non-zero element, and a row number that are associated with a to-be-computed target result element; and each of the plurality of computing units sequentially computes, based on the received associated first non-zero element, column number, second non-zero element, and row number, at least one intermediate result corresponding to the target result element, and accumulates the at least one intermediate result to obtain a value of the target result element.

In a possible implementation, that each of the plurality of computing units sequentially computes, based on the received associated first non-zero element, column number, second non-zero element, and row number, at least one intermediate result corresponding to the target result element, and accumulates the at least one intermediate result to obtain a value of the target result element includes: Each of the plurality of computing units compares the column number of the received first non-zero element with the row number of the received second non-zero element; and when the column number is equal to the row number, each of the plurality of computing units multiplies the received first non-zero element by the received second non-zero element, and uses a multiplication result as an intermediate result corresponding to the target result element to perform accumulation, until the value of the target result element is obtained.

In a possible implementation, that each of the plurality of computing units sequentially computes, based on the received associated first non-zero element, column number, second non-zero element, and row number, at least one intermediate result corresponding to the target result element, and accumulates the at least one intermediate result to obtain a value of the target result element includes: When the column number is greater than the row number, each of the plurality of computing units compares the column number with a row number of a next received second non-zero element; or when the column number is less than the row number, each of the plurality of computing units compares the row number with a column number of a next received first non-zero element.

In a possible implementation, the matrix multiplier further includes a left matrix buffer and a right matrix buffer; the plurality of computing units are computing units of M rows*N columns, where M is a positive integer, and N is a positive integer; and the method further includes:

The left matrix buffer buffers the first non-zero element set and the column index set of the matrix A; and broadcasts, in different clock cycles, different first non-zero elements in a same row in the matrix A and corresponding column numbers to a same row of computing units in the computing units of M rows*N columns.

The right matrix buffer buffers the second non-zero element set and the row index set of the matrix B; and broadcasts, in the different clock cycles, different second non-zero elements in a same column in the matrix B and corresponding row numbers to a same column of computing units in the computing units of M rows*N columns.

In a possible implementation, the method further includes: The left matrix buffer broadcasts first non-zero elements in different rows in the matrix A and corresponding column numbers to different rows of computing units in the computing units of M rows*N columns. The right matrix buffer broadcasts second non-zero elements in different columns in the matrix B and corresponding row numbers to different columns of computing units in the computing units of M rows*N columns.

In a possible implementation, the broadcasting, in different clock cycles, different first non-zero elements in a same row in the matrix A and corresponding column numbers to a same row of computing units in the computing units of M rows*N columns includes:
The left matrix buffer broadcasts, in an order of column numbers when first non-zero elements corresponding to all computing units in an x^{th} row in the computing units of M rows*N columns are computed, a first non-zero element in a next column in a same row in the matrix A and a corresponding column number to all the computing units in the x^{th} row, where x=(1, ..., M); and the broadcasting, in the different clock cycles, different second non-zero elements in a same column in the matrix B and corresponding row numbers to a same column of computing units in the computing units of M rows*N columns includes:
The right matrix buffer broadcasts, in an order of row numbers when second non-zero elements corresponding to all computing units in a y^{th} column in the computing units of M rows*N columns are computed, a second non-zero element in a next row in a same column in the matrix B and a corresponding row number to all the computing units in the y^{th} column, where y=(1, ..., N).

In a possible implementation, the broadcasting, in different clock cycles, different first non-zero elements in a same row in the matrix A and corresponding column numbers to a same row of computing units in the computing units of M rows*N columns includes:

The left matrix buffer broadcasts, in an order of column numbers when a first non-zero element corresponding to any computing unit in an x^{th} row in the computing units of M rows*N columns is computed, a first non-zero element in a next column in a same row in the matrix A and a corresponding column number to all computing units in the x^{th} row, where x=(1, ..., M); and
the broadcasting, in the different clock cycles, different second non-zero elements in a same column in the matrix B and corresponding row numbers to a same column of computing units in the computing units of M rows*N columns includes:

The right matrix buffer broadcasts, in an order of row numbers when a second non-zero element corresponding to any computing unit in a y^{th} column in the computing units of M rows*N columns is computed, a second non-zero element in a next row in a same column in the matrix B and a corresponding row number to all the computing units in the y^{th} column, where y=(1, ..., N).

In a possible implementation, that each of the plurality of computing units sequentially computes, based on the received associated first non-zero element, column number, second non-zero element, and row number, at least one intermediate result corresponding to the target result element includes:
Each of the plurality of computing units receives and buffers the first non-zero element and the corresponding column number that are broadcast by the left matrix buffer; receives and buffers the second non-zero element and the corresponding row number that are broadcast by the right matrix buffer; and computes the received first non-zero element and the received second non-zero element in a first in first out manner, to obtain the at least one intermediate result corresponding to the target result element.

In a possible implementation, the method further includes: Each of the plurality of computing units sends, in a next clock cycle, the currently buffered first non-zero element and corresponding column number to a next column computing unit in a same row; and sends, in the next clock cycle, the currently buffered second non-zero element and corresponding row number to a next row computing unit in a same column.

In a possible implementation, the computing array further includes row registers of M rows*(N-1)/a columns and column registers of (M-1)/b rows*N columns, where each row register is coupled to a 1-row*a-column computing unit, each column register is coupled to a b-row*1-column computing unit, a is an integer greater than or equal to 1, and b is an integer greater than or equal to 1; the broadcasting, in different clock cycles, different first non-zero elements in a same row in the matrix A and corresponding column numbers to a same row of computing units in the computing units of M rows*N columns includes:

The left matrix buffer broadcasts the first non-zero element and the corresponding column number to a first column computing unit of one row of computing units in the computing units of M rows*N columns and a first column row register of one row of row registers; and
each row register buffers a first non-zero element and a corresponding column number that are sent by the left matrix buffer or a previous row register, and sends, in a next clock cycle, the first non-zero element and the corresponding column number to the 1-row*a-column computing unit and a next row register; and
the broadcasting, in the different clock cycles, different second non-zero elements in a same column in the matrix B and corresponding row numbers to a same column of computing units in the computing units of M rows*N columns includes:

The right matrix buffer broadcasts the second non-zero element and a corresponding row number to a first row computing unit of a one column of computing units in the computing units of M rows*N columns, and a first row column register of one column of column registers; and
each column register buffers a second non-zero element and a corresponding row number that are sent by the right matrix buffer or a previous column register, and sends, in the next clock cycle, the second non-zero element and the corresponding row number to the b-row*1-column computing unit and a next column register.

In a possible implementation, the method further includes:
Each of the plurality of computing units clears, when the received first non-zero element has participated in computing of the intermediate result corresponding to the target result element, the first non-zero element that has participated in the computing and the corresponding column number.

Each of the plurality of computing units clears, when the received second non-zero element has participated in computing of the intermediate result corresponding to the target result element, the second non-zero element that has participated in the computing and the corresponding row number.

It should be noted that, for a specific procedure of a processing method of each functional unit in the matrix multiplier 10 described in this embodiment of the present invention, refer to related descriptions in embodiments of the present invention described in FIG. 1A-1 to FIG. 10. Details are not described herein again.

FIG. 11B is a schematic flowchart of another matrix computing method according to an embodiment of the present invention. The matrix computing method is applied to a matrix multiplier 10. The matrix multiplier 10 includes a left matrix buffer, a right matrix buffer, and a computing array, the computing array includes computing units of M rows*N columns, M and N each are an integer greater than 0, and each computing unit in the computing array includes a comparer, a multiplier, and an accumulator. In addition, the matrix computing method is applicable to any matrix multiplier 10 in FIG. 1A-1 to FIG. 10 and an apparatus (such as a processor) or a device (such as a mobile phone, a computer, or a server) including the matrix multiplier 10. The method may include the following step S301 to step S307.

Step S301: The left matrix buffer buffers a first element set and a first index set that correspond to a matrix A, where A is an M*K matrix, the first element set includes S first elements, the S first elements each are an i^{th} non-zero element in each of S rows of the matrix A, the first index set includes column numbers of columns of the S first elements in the matrix A, S is a positive integer less than or equal to M, and i is a positive integer less than or equal to K.

Step S302: The left matrix buffer broadcasts each of the S first elements and a column number of each first element to one row of computing units in the computing array, where when i is different values, first elements in a same row are broadcast to a same row of computing units.

Step S303: The right matrix buffer buffers a second element set and a second index set that correspond to a matrix B, where B is a K*N matrix, the second element set includes T second elements, the T second elements each are a j^{th} non-zero element in each of T columns in the matrix B, the second index set includes row numbers of rows of the T second elements in the matrix B, T is a positive integer less than or equal to N, and j is a positive integer less than or equal to K.

Step S304: The right matrix buffer broadcasts each of the T first elements and a row number of each second element to one column of computing units in the computing array, where when j is different values, second elements in a same column are broadcast to a same column of computing units.

Step S305: The comparer in each computing unit in the computing array compares a column number of a received first element with a row number of a received second element.

Step S306: When the column number of the received first element is equal to the row number of the received second element, the multiplier in each computing unit in the computing array multiplies the received first element by the received second element, and sends a computing result to the accumulator.

Step S307: The accumulator in each computing unit in the computing array accumulates computing results in the multiplier to obtain an operation result of the computing unit.

In a possible implementation, that the left matrix buffer broadcasts each of the S first elements and a column number of each first element to one row of computing units in the computing array includes: The left matrix buffer broadcasts first elements that are in an x^{th} row in the matrix A and in the S first elements and corresponding column numbers to computing units in an x^{th} row in the computing array, where x=(1, ..., M). That the right matrix buffer broadcasts each of the T first elements and a row number of each second element to one column of computing units in the computing array includes: The right matrix buffer broadcasts second elements that are in a y^{th} column in the matrix B and in the T second elements and corresponding row numbers to computing units in a y^{th} column of the computing array, where y=(1, ..., N).

In a possible implementation, i is successively 1, 2, ..., and K, and j is successively 1, 2, ..., and K. That the comparer in each computing unit in the computing array compares a column number of a received first element with a row number of a received second element includes: The comparer in each computing unit in the computing array compares the column number of the received first element with the row number of the received second element; and when the column number is greater than the row number, compares the column number with a row number of a next received second element; or when the column number is less than the row number, compares the column number with a row number of a next received first element.

In a possible implementation, each computing unit further includes a left input buffer and a right input buffer. That the left matrix buffer broadcasts each of the S first elements and a column number of each first element to one row of computing units in the computing array includes: The left matrix buffer broadcasts each of the S first elements and the corresponding column number to the left input buffer of each computing unit in one row of computing units in the computing array. That the right matrix buffer broadcasts each of the T first elements and a row number of each second element to one column of computing units in the computing array includes: The right matrix buffer broadcasts each of the T second elements and the corresponding row number to the right input buffer of each computing unit in one column of computing units in the computing array. The method further includes: The left input buffer receives and buffers the first element and the corresponding column number that are broadcast by the left matrix buffer, and sends, in a first in first out manner, the buffered first element to the multiplier and the corresponding column number to the comparer. The right input buffer receives and buffers the second element and the corresponding row number that are broadcast by the right matrix buffer, and sends, in the first in first out manner, the buffered second element to the multiplier and the corresponding row number to the comparer.

In a possible implementation, the method further includes: When a computing result that corresponds to a target first element sent to the multiplier is sent to the accumulator, the left input buffer clears the target first element and a corresponding column number. When a computing result that corresponds to a target second element sent to the multiplier is sent to the accumulator, the left input buffer clears the target second element and a corresponding row number

In a possible implementation, the matrix multiplier further includes a left read/write control unit and a right read/write control unit, and the method further includes: The left read/write control unit obtains e first element sets corresponding to the matrix A and corresponding e first index sets from a primary memory, and sends the e first element sets and the corresponding e first index sets to the left matrix buffer, where the e first element sets are e first element sets when i is 1, 2, ..., K, and e is an integer less than or equal to K. The right read/write control unit obtains f second element sets corresponding to the matrix B and corresponding f second index sets from the primary memory, and sends the f second element sets and the corresponding f second index sets to the right matrix buffer, where the f second element sets are f second element sets when i is 1, 2, ..., K, and f is an integer less than or equal to K.

In a possible implementation, the matrix multiplier further includes a left read/write control unit and a right read/write control unit, and the method further includes: The left read/write control unit obtains elements of M rows*Q columns in the matrix A from a primary memory, generates e first element sets corresponding to the matrix A and corresponding e first index sets, and sends the e first element sets and the corresponding e first index sets to the left matrix buffer, where the e first element sets are e first element sets when i is 1, 2, ..., K, Q is an integer less than or equal to K, and e is an integer less than or equal to Q. The right read/write control unit obtains elements of Q rows*N columns in the matrix B from the primary memory, generates f second element sets corresponding to the matrix A and corresponding f second index sets, and sends the f second element sets and the corresponding f second index sets to the right matrix buffer, where the f second element sets are f second element sets when i is 1, 2, ..., K, and f is an integer less than or equal to Q.

In a possible implementation, the matrix multiplier further includes a left read/write control unit and a right read/write control unit: the method further includes: The left read/write control unit obtains elements of M rows*Q columns in the matrix A from a primary memory, and sends the elements to the left matrix buffer, where Q is an integer less than or equal to K. The right read/write control unit obtains elements of Q rows*N columns in the matrix B from the primary memory, and sends the elements to the right matrix buffer. The left matrix buffer receives the elements of M rows*Q columns in the matrix A, and generates e first element sets corresponding to the matrix A and corresponding e first index sets, where the e first element sets are e first element sets when i is 1, 2, ..., K, and e is an integer less than or equal to Q. The right matrix buffer receives the elements of Q rows*N columns in the matrix B, and generates f second element sets corresponding to the matrix B and corresponding f second index sets, where the f second element sets are f second element sets when i is 1, 2, ..., K, and f is an integer less than or equal to Q.

In a possible implementation, the matrix multiplier further includes the primary memory; or the matrix multiplier is coupled to the primary memory.

In a possible implementation, that the left matrix buffer broadcasts each of the S first elements and a column number of each first element to one row of computing units in the computing array includes: The left matrix buffer receives and buffers the e first element sets and the e first index sets; and broadcasts, in one clock cycle, each of the S first elements in one first element set and a column number of each first element to one row of computing units in the computing array. That the right matrix buffer broadcasts each of the T first elements and a row number of each second element to one column of computing units in the computing array includes: The right matrix buffer receives and buffers the f second element sets and the f second index sets; and broadcasts, in one clock cycle, each of T second elements in one second element set and a row number of each second element to one column of computing units in the computing array.

In a possible implementation, that the left matrix buffer broadcasts each of the S first elements and a column number of each first element to one row of computing units in the computing array includes: When first elements in all computing units in an x^{th} row of the computing array are computed, the left matrix buffer broadcasts a next first element to all computing units in the x^{th} row, where x=(1, ..., M). That the right matrix buffer broadcasts each of the T first elements and a row number of each second element to one column of computing units in the computing array includes: When second elements in all computing units in a y^{th} column of the computing array are computed, the right matrix buffer broadcasts a next second element to all computing units in the y^{th} column, where y=(1, ..., N).

In a possible implementation, that the left matrix buffer broadcasts each of the S first elements and a column number of each first element to one row of computing units in the computing array includes: When a first element in any computing unit in an x^{th} row of the computing array is computed, the left matrix buffer broadcasts a next first element to all computing units in the x^{th} row, where x=(1, ..., M). That the right matrix buffer broadcasts each of the T first elements and a row number of each second element to one column of computing units in the computing array includes: When a second element in any computing unit in a y^{th} column of the computing array is computed, the right matrix buffer broadcasts a next second element to all computing units in the y^{th} column, where y=(1, ..., N).

In a possible implementation, the computing array further includes row registers of M rows*(N-1)/a columns and column registers of (M-1)/b rows*N columns, where each row register is coupled to a 1-row*a-column computing unit, each column register is coupled to a b-row*1-column computing unit, a is an integer greater than or equal to 1, and b is an integer greater than or equal to 1. That the left matrix buffer broadcasts each of the S first elements and a column number of each first element to one row of computing units in the computing array includes: The left matrix buffer sends each of the S first elements and the column number of each first element to a first column computing unit of one row of computing units in the computing array and a first column row register of one row of row registers. That the right matrix buffer broadcasts each of the T first elements and a row number of each second element to one column of computing units in the computing array includes: The right matrix buffer sends each of the T second elements and the row number of each second element to a first row computing unit of a one column of computing units in the computing array and a first row column register of one column of column registers. The method further includes: Each row register buffers a first element and a corresponding column number that are sent by the left matrix buffer or a previous row register, and sends, in the next clock cycle, the first element and the corresponding column number to the 1-row*a-column computing unit and a next row register. Each column register buffers a second element and a corresponding row number that are sent by the right matrix buffer or a previous column register, and sends, in the next clock cycle, the second element and the corresponding row number to the b-row*1-column computing unit and a next column register.

In a possible implementation, each computing unit further includes a left input buffer and a right input buffer, and the method further includes: The left input buffer sends, in the next clock cycle, a currently buffered first element and a corresponding column number to the left input buffer in a next column computing unit in a same row. The right input buffer sends, in the next clock cycle, a currently buffered second element and a corresponding row number to the right input buffer in a next row computing unit in a same column.

It should be noted that, for a specific procedure of a processing method of each functional unit in the matrix multiplier 10 described in this embodiment of the present invention, refer to related descriptions in embodiments of the present invention described in FIG. 1A-1 to FIG. 10. Details are not described herein again.

FIG. 11C-1 and FIG. 11C-2 are a schematic flowchart of still another matrix computing method according to an embodiment of the present invention. The matrix computing method is applied to a matrix multiplier 10. The matrix multiplier 10 includes a left matrix buffer, a right matrix buffer, and a computing array, the computing array includes computing units of M rows*N columns, M and N each are an integer greater than 0, and each computing unit in the computing array includes a comparer, a multiplier, and an accumulator. In addition, the matrix computing method is applicable to any matrix multiplier 10 in FIG. 1A-1 to FIG. 10 and an apparatus (such as a processor) or a device (such as a mobile phone, a computer, or a server) including the matrix multiplier 10. The method may include the following step 1 to step 13.
1. Perform initialization, clear an accumulation register 13132, and compute a next output block in order of column priority.
2. Read next row block data of a left matrix from a primary memory 104 and store non-zero data and a column number of the left matrix in the left matrix buffer 101.
3. Read next column block data of a right matrix from the primary memory 204 and store non-zero data and a row number of the right matrix in the right matrix buffer 102.
4. Broadcast data in the buffers (including the left matrix buffer 101 and the right matrix buffer 102) to the computing unit 1031 in the computing array 103, broadcast the left matrix by row, and broadcast the right matrix by column.
5. Each computing unit 1031 sequentially reads next row/column indexes and non zero data as left and right operands.
6. Each computing unit 1031 determines whether a column number of the left matrix is equal to a row number of the right matrix.
7. If the column number of the left matrix is equal to the row number of the right matrix, multiply the two pieces of non-zero data for accumulation with values in the accumulation register 13132, to obtain a new accumulation value, and then read next non-zero data and a row/column number of the left/right matrix.
8. If the column number of the left matrix is unequal to the row number of the right matrix, skip performing multiplication and accumulation operations, and remain a value in the accumulation register 13132 unchanged; and if the column number of the left matrix operand is less than the row number of the right matrix operand, read a next operand of the left matrix; otherwise, read a next operand of the right matrix.
9. Determine whether the left matrix buffer 101 is empty or whether the right matrix buffer 102 is empty.
10. Determine whether a left submatrix is a last row block, or whether a right submatrix is a last column block.
11. Perform other operations (such as saturation, truncation, a nonlinear function) on an accumulation result, and store current output block result data back to the primary memory.
12. Determine whether the current output block is a last output block.
13. Computing ends.

It should be noted that, for a specific procedure of a processing method of each functional unit in the matrix multiplier 10 described in this embodiment of the present invention, refer to related descriptions in embodiments of the present invention described in FIG. 1A-1 to FIG. 10. Details are not described herein again.

An embodiment of the present invention further provides a computer-readable storage medium. The computer-readable storage medium may store a program, and when the program is executed by the matrix multiplier 10, some or all of the steps recorded in any one of the foregoing method embodiments are implemented.

An embodiment of the present invention further provides a computer program. The computer program includes instructions, and when the computer program is executed by the matrix multiplier 10, the matrix multiplier 10 is enabled to perform some or all steps of any matrix computing method.

In the foregoing embodiments, the description of each embodiment has its emphasis. For parts that are not described in detail in a specific embodiment, refer to the relevant description of other embodiments.

It should be noted that, for brief description, the foregoing method embodiments are represented as a series of actions. However, persons skilled in the art should appreciate that this application is not limited to the described order of the actions, because according to this application, some steps may be performed in other orders or simultaneously. In addition, persons skilled in the art should also aware that the described embodiments all belong to preferable embodiments, and the related actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device, and may be specifically a processor in a computer device) to perform all or some of the steps of the foregoing methods described in embodiments of this application. The foregoing storage medium may include any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application rather than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A matrix multiplier, comprising a computing array comprising a plurality of computing units, wherein
the computing array is configured to:
receive a first non-zero element set and a column index set of a left matrix A, and a second non-zero element set and a row index set of a right matrix B, wherein the first non-zero element set comprises one or more first non-zero elements in the matrix A, the column index set comprises column numbers of the one or more first non-zero elements in the matrix A, the second non-zero element set comprises one or more second non-zero elements in the matrix B, and the row index set comprises row numbers of the one or more second non-zero elements in the matrix B; and
generate a result matrix C based on the first non-zero element set, the column index set, the second non-zero element set, and the row index set in a matrix outer product operation manner, wherein one result element in the result matrix C is obtained through computing by one of the plurality of computing units.

2. The matrix multiplier according to claim 1, wherein each of the plurality of computing units is configured to:
sequentially receive a first non-zero element, a column number, a second non-zero element, and a row number that are associated with a to-be-computed target result element; and
sequentially compute, based on the received associated first non-zero element, column number, second non-zero element, and row number, at least one intermediate result corresponding to the target result element, and accumulate the at least one intermediate result to obtain a value of the target result element.

3. The matrix multiplier according to claim 2, wherein each of the plurality of computing units is specifically configured to:
compare the column number of the received first non-zero element with the row number of the received second non-zero element; and
when the column number is equal to the row number, multiply the received first non-zero element by the received second non-zero element, and use a multiplication result as an intermediate result corresponding to the target result element to perform accumulation, until the value of the target result element is obtained.

4. The matrix multiplier according to claim 3, wherein each of the plurality of computing units is specifically configured to:
when the column number is greater than the row number, compare the column number with a row number of a next received second non-zero element; or
when the column number is less than the row number, compare the row number with a column number of a next received first non-zero element.

5. The matrix multiplier according to any one of claims 1 to 4, wherein the matrix multiplier further comprises a left matrix buffer and a right matrix buffer; and the plurality of computing units are computing units of M rows*N columns, wherein M is a positive integer, and N is a positive integer;
the left matrix buffer is configured to: store the first non-zero element set and the column index set of the matrix A; and broadcast, in different clock cycles, different first non-zero elements in a same row in the matrix A and corresponding column numbers to a same row of computing units in the computing units of M rows*N columns; and
the right matrix buffer is configured to: store the second non-zero element set and the row index set of the matrix B; and broadcast, in the different clock cycles, different second non-zero elements in a same column in the matrix B and corresponding row numbers to a same column of computing units in the computing units of M rows*N columns.

6. The matrix multiplier according to claim 5, wherein
the left matrix buffer is further configured to broadcast first non-zero elements in different rows in the matrix A and corresponding column numbers to different rows of computing units in the computing units of M rows*N columns; and
the right matrix buffer is further configured to broadcast second non-zero elements in different columns in the matrix B and corresponding row numbers to different columns of computing units in the computing units of M rows*N columns.

7. The matrix multiplier according to claim 5 or 6, wherein
the left matrix buffer is specifically configured to broadcast, when first non-zero elements corresponding to all computing units in an x^{th} row in the computing units of M rows*N columns are computed, in an order of column numbers, a first non-zero element in a next column in a same row in the matrix A and a corresponding column number to all the computing units in the x^{th} row, wherein x=(1, ..., M); and
the right matrix buffer is specifically configured to broadcast, when second non-zero elements corresponding to all computing units in a y^{th} column in the computing units of M rows*N columns are computed, in an order of row numbers, a second non-zero element in a next row in a same column in the matrix B and a corresponding row number to all the computing units in the y^{th} column, wherein y=(1, ..., N).

8. The matrix multiplier according to claim 5 or 6, wherein
the left matrix buffer is specifically configured to broadcast, when a first non-zero element corresponding to any computing unit in an x^{th} row in the computing units of M rows*N columns is computed, in an order of column numbers, a first non-zero element in a next column in a same row in the matrix A and a corresponding column number to all computing units in the x^{th} row, wherein x=(1, ..., M); and
the right matrix buffer is specifically configured to broadcast, when a second non-zero element corresponding to any computing unit in a y^{th} column in the computing units of M rows*N columns is computed, in an order of row numbers, a second non-zero element in a next row in a same column in the matrix B and a corresponding row number to all the computing units in the y^{th} column, wherein y=(1, ..., N).

9. The matrix multiplier according to any one of claims 5 to 8, wherein each of the plurality of computing units is specifically configured to:
receive and buffer the first non-zero element and the corresponding column number that are broadcast by the left matrix buffer; receive and buffer the second non-zero element and the corresponding row number that are broadcast by the right matrix buffer; and compute the received first non-zero element and the received second non-zero element in a first in first out manner.

10. The matrix multiplier according to claim 9, wherein each of the plurality of computing units is further configured to:
send, in a next clock cycle, the currently buffered first non-zero element and corresponding column number to a next column computing unit in a same row; and send, in the next clock cycle, the currently buffered second non-zero element and corresponding row number to a next row computing unit in a same column.

11. The matrix multiplier according to any one of claims 5 to 10, wherein the computing array further comprises row registers of M rows*(N-1)/a columns and column registers of (M-1)/b rows*N columns, wherein a is an integer greater than or equal to 1, and b is an integer greater than or equal to 1;
the left matrix buffer is specifically configured to broadcast the first non-zero element and the corresponding column number to a first column computing unit of one row of computing units in the computing units of M rows*N columns, and a first column row register of one row of row registers;
the right matrix buffer is specifically configured to broadcast the second non-zero element and the corresponding row number to a first row computing unit of one column of computing units in the computing units of M rows*N columns, and a first row column register of one column of column registers;
each row register is coupled to a 1-row*a-column computing unit, and is configured to: buffer the first non-zero element and the corresponding column number that are sent by the left matrix buffer or a previous row register, and send, in the next clock cycle, the first non-zero element and the corresponding column number to the 1-row*a-column computing unit and a next row register; and
each column register is coupled to a b-row*1-column computing unit, and is configured to: buffer the second non-zero element and the corresponding row number that are sent by the right matrix buffer or a previous column register, and send, in the next clock cycle, the second non-zero element and the corresponding row number to the b-row*1-column computing unit and a next column register.

12. The matrix multiplier according to any one of claims 1 to 11, wherein each of the plurality of computing units is further configured to:
clear, when the received first non-zero element has participated in computing of the intermediate result corresponding to the target result element, the first non-zero element that has participated in the computing and the corresponding column number; and
clear, when the received second non-zero element has participated in computing of the intermediate result corresponding to the target result element, the second non-zero element that has participated in the computing and the corresponding row number.

13. A matrix computing method, applied to a matrix multiplier, wherein the matrix multiplier comprises a computing array comprising a plurality of computing units, and the method comprises:
receiving, by the computing array, a first non-zero element set and a column index set of a left matrix A, and a second non-zero element set and a row index set of a right matrix B, wherein the first non-zero element set comprises one or more first non-zero elements in the matrix A, the column index set comprises column numbers of the one or more first non-zero elements in the matrix A, the second non-zero element set comprises one or more second non-zero elements in the matrix B, and the row index set comprises row numbers of the one or more second non-zero elements in the matrix B; and
generating, by the computing array, a result matrix C based on the first non-zero element set, the column index set, the second non-zero element set, and the row index set in a matrix outer product operation manner, wherein one non-zero result element in the result matrix C is obtained through computing by one of the plurality of computing units.

14. The method according to claim 13, wherein the generating, by the computing array, a result matrix C based on the first non-zero element set, the column index set, the second non-zero element set, and the row index set in a matrix outer product operation manner comprises:
sequentially receiving, by each of the plurality of computing units, a first non-zero element, a column number, a second non-zero element, and a row number that are associated with a to-be-computed target result element; and sequentially computing, by each of the plurality of computing units based on the received associated first non-zero element, column number, second non-zero element, and row number, at least one intermediate result corresponding to the target result element, and accumulating the at least one intermediate result to obtain a value of the target result element.

15. The method according to claim 14, wherein the sequentially computing, by each of the plurality of computing units based on the received associated first non-zero element, column number, second non-zero element, and row number, at least one intermediate result corresponding to the target result element, and accumulating the at least one intermediate result to obtain a value of the target result element comprises:
comparing, by each of the plurality of computing units, the column number of the received first non-zero element with the row number of the received second non-zero element; and
when the column number is equal to the row number, multiplying, by each of the plurality of computing units, the received first non-zero element by the received second non-zero element, and using a multiplication result as an intermediate result corresponding to the target result element to perform accumulation, until the value of the target result element is obtained.

16. The method according to claim 15, wherein the sequentially computing, by each of the plurality of computing units based on the received associated first non-zero element, column number, second non-zero element, and row number, at least one intermediate result corresponding to the target result element, and accumulating the at least one intermediate result to obtain a value of the target result element comprises:
when the column number is greater than the row number, comparing, by each of the plurality of computing units, the column number with a row number of a next received second non-zero element; or
when the column number is less than the row number, comparing, by each of the plurality of computing units, the row number with a column number of a next received first non-zero element.

17. The method according to any one of claims 13 to 16, wherein the matrix multiplier further comprises a left matrix buffer and a right matrix buffer; the plurality of computing units are computing units of M rows*N columns, wherein M is a positive integer, and N is a positive integer; and the method further comprises:
buffering, by the left matrix buffer, the first non-zero element set and the column index set of the matrix A; and broadcasting, in different clock cycles, different first non-zero elements in a same row in the matrix A and corresponding column numbers to a same row of computing units in the computing units of M rows*N columns; and
buffering, by the right matrix buffer, the second non-zero element set and the row index set of the matrix B; and broadcasting, in the different clock cycles, different second non-zero elements in a same column in the matrix B and corresponding row numbers to a same column of computing units in the computing units of M rows*N columns.

18. The method according to claim 17, wherein the method further comprises:
broadcasting, by the left matrix buffer, first non-zero elements in different rows in the matrix A and corresponding column numbers to different rows of computing units in the computing units of M rows*N columns; and
broadcasting, by the right matrix buffer, second non-zero elements in different columns in the matrix B and corresponding row numbers to different columns of computing units in the computing units of M rows*N columns.

19. The method according to claim 17 or 18, wherein
the broadcasting, in different clock cycles, different first non-zero elements in a same row in the matrix A and corresponding column numbers to a same row of computing units in the computing units of M rows*N columns comprises:
broadcasting, by the left matrix buffer in an order of column numbers when first non-zero elements corresponding to all computing units in an x^{th} row in the computing units of M rows*N columns are computed, a first non-zero element in a next column in a same row in the matrix A and a corresponding column number to all the computing units in the x^{th} row, wherein x=(1, ..., M); and
the broadcasting, in the different clock cycles, different second non-zero elements in a same column in the matrix B and corresponding row numbers to a same column of computing units in the computing units of M rows*N columns comprises:
broadcasting, by the right matrix buffer in an order of row numbers when second non-zero elements corresponding to all computing units in a y^{th} column in the computing units of M rows*N columns are computed, a second non-zero element in a next row in a same column in the matrix B and a corresponding row number to all the computing units in the y^{th} column, wherein y=(1, ..., N)

20. The method according to claim 17 or 18, wherein
the broadcasting, in different clock cycles, different first non-zero elements in a same row in the matrix A and corresponding column numbers to a same row of computing units in the computing units of M rows*N columns comprises:
broadcasting, by the left matrix buffer in an order of column numbers when a first non-zero element corresponding to any computing unit in an x^{th} row in the computing units of M rows*N columns is computed, a first non-zero element in a next column in a same row in the matrix A and a corresponding column number to all computing units in the x^{th} row, wherein x=(1, ..., M); and
the broadcasting, in the different clock cycles, different second non-zero elements in a same column in the matrix B and corresponding row numbers to a same column of computing units in the computing units of M rows*N columns comprises:
broadcasting, by the right matrix buffer in an order of row numbers when a second non-zero element corresponding to any computing unit in a y^{th} column in the computing units of M rows*N columns is computed, second non-zero elements in a next row in a same column in the matrix B and a corresponding row number to all the computing units in the y^{th} column, wherein y=(1, ..., N).

21. The method according to any one of claims 17 to 20, wherein the sequentially computing, by each of the plurality of computing units based on the received associated first non-zero element, column number, second non-zero element, and row number, at least one intermediate result corresponding to the target result element comprises:
receiving and buffering, by each of the plurality of computing units, the first non-zero element and the corresponding column number that are broadcast by the left matrix buffer; receiving and buffering the second non-zero element and the corresponding row number that are broadcast by the right matrix buffer; and computing the received first non-zero element and the received second non-zero element in a first in first out manner, to obtain the at least one intermediate result corresponding to the target result element.

22. The method according to claim 21, wherein the method further comprises:
sending, by each of the plurality of computing units in a next clock cycle, the currently buffered first non-zero element and corresponding column number to a next column computing unit in a same row; and sending, in the next clock cycle, the currently buffered second non-zero element and corresponding row number to a next row computing unit in a same column.

23. The method according to any one of claims 17 to 22, wherein the computing array further comprises row registers of M rows*(N-1)/a columns and column registers of (M-1)/b rows*N columns, wherein each row register is coupled to a 1-row*a-column computing unit, each column register is coupled to a b-row* 1-column computing unit, a is an integer greater than or equal to 1, and b is an integer greater than or equal to 1;
the broadcasting, in different clock cycles, different first non-zero elements in a same row in the matrix A and corresponding column numbers to a same row of computing units in the computing units of M rows*N columns comprises:
broadcasting, by the left matrix buffer, the first non-zero element and the corresponding column number to a first column computing unit of one row of computing units in the computing units of M rows*N columns and a first column row register of one row of row registers; and
buffering, by each row register, a first non-zero element and a corresponding column number that are sent by the left matrix buffer or a previous row register, and sending, in a next clock cycle, the first non-zero element and the corresponding column number to the 1-row*a-column computing unit and a next row register; and
the broadcasting, in the different clock cycles, different second non-zero elements in a same column in the matrix B and corresponding row numbers to a same column of computing units in the computing units of M rows*N columns comprises:
broadcasting, by the right matrix buffer, the second non-zero element and a corresponding row number to a first row computing unit of one column of computing units in the computing units of M rows*N columns, and a first row column register of one column of column registers;
buffering, by each column register, a second non-zero element and a corresponding row number that are sent by the right matrix buffer or a previous column register, and sending, in the next clock cycle, the second non-zero element and the corresponding row number to the b-row* 1-column computing unit and a next column register.

24. The method according to any one of claims 13 to 23, wherein the method further comprises:
clearing, by each of the plurality of computing units when the received first non-zero element has participated in computing of the intermediate result corresponding to the target result element, the first non-zero element that has participated in the computing and the corresponding column number; and
clearing, by each of the plurality of computing units when the received second non-zero element has participated in computing of the intermediate result corresponding to the target result element, the second non-zero element that has participated in the computing and the corresponding row number.

25. A computer-readable storage medium, wherein the computer-readable storage medium stores a computer program, and when the computer program is executed by a matrix multiplier, the method according to any one of claims 13 to 24 is implemented.

26. A computer program, wherein the computer-readable program stores instructions, and when the computer program is executed by a matrix multiplier, the matrix multiplier is enabled to perform the method according to any one of claims 13 to 24.
